# EUROPEAN PATENT APPLICATION

(11) **EP 4 039 716 A1**
(43) Date of publication of application: **10.08.2022**
(21) Application number: 20871354.5
(22) Date of filing: 05.10.2020
(51) Int. Cl.: C08F 114/26, C08F 259/08, C08F 265/06, C08F 214/26

(54) **POLYTETRAFLUOROETHYLENE AND METHOD FOR PRODUCING SAME**

(30) Priority: 03.10.2019 JP 2019183143
(71) Applicant: Daikin Industries, Ltd., Osaka-shi, Osaka 530-8323 (JP)
(72) Inventor: KATO, Taketo, Osaka-shi, Osaka 530-8323 (JP); SATO, Hiroyuki, Osaka-shi, Osaka 530-8323 (JP)
(74) Representative: Hoffmann Eitle
(86) International application number: PCT/JP2020/037762
(87) International publication number: WO 2021/066189

(57) **Abstract**

Provided is a polytetrafluoroethylene having a color tone L* of 20 to 85 wherein a cylindrical extrusion pressure at a reduction ratio of 1,600 is 120 MPa or less.

## Description

### TECHNICAL FIELD

The present disclosure relates to a polytetrafluoroethylene and a method for producing the same.

### BACKGROUND ART

Fluorine-containing anion surfactants have been used in production of polytetrafluoroethylene by emulsion polymerization. Recently, it has been proposed to use hydrocarbon surfactants instead of the fluorine-containing anion surfactants.

For example, Patent Document 1 discloses a method for producing a fluoropolymer including a step of polymerizing a fluoromonomer in an aqueous medium in the presence of a surfactant represented by a specific chemical formula to obtain a fluoropolymer.

### RELATED ART

### PATENT DOCUMENTS

Patent Document 1: International Publication No. WO 2018/181898

### SUMMARY OF THE INVENTION

### PROBLEM TO BE SOLVED BY THE INVENTION

An object of the present disclosure is to provide a polytetrafluoroethylene that can be easily extruded at a high reduction ratio.

Another object of the present disclosure is to provide a production method capable of producing a polytetrafluoroethylene that can be easily extruded at a high reduction ratio.

### MEANS FOR SOLVING THE PROBLEM

According to the present disclosure, there is provided a polytetrafluoroethylene having a color tone L* of 20 to 80, wherein a cylindrical extrusion pressure at a reduction ratio of 1,600 is 120 MPa or less.

According to the present disclosure, there is also provided a polytetrafluoroethylene comprising a hydrocarbon surfactant, wherein a cylindrical extrusion pressure at a reduction ratio of 1,600 is 120 MPa or less.

The polytetrafluoroethylene of the present disclosure is preferably substantially free from a fluorine-containing surfactant.

The polytetrafluoroethylene of the present disclosure is preferably a powder.

The polytetrafluoroethylene of the present disclosure preferably has a thermal instability index (TII) of 10 or more.

The polytetrafluoroethylene of the present disclosure preferably comprises a tetrafluoroethylene unit and a modifying monomer unit, wherein a content of the modifying monomer unit is 0.00001 to 1.0% by mass based on total polymerization units constituting the polytetrafluoroethylene.

In the polytetrafluoroethylene of the present disclosure, the modifying monomer unit is preferably at least one polymerization unit selected from the group consisting of hexafluoropropylene, perfluoro(alkyl vinyl ether), and (perfluoroalkyl)ethylene.

The polytetrafluoroethylene of the present disclosure preferably comprises primary particles each having a core portion and a shell portion.

In the polytetrafluoroethylene of the present disclosure, the core portion is preferably formed from a polymer containing a tetrafluoroethylene unit and a modifying monomer unit.

In the polytetrafluoroethylene of the present disclosure, a content of the modifying monomer unit in the polymer forming the core portion is preferably 0.00001 to 1.0% by mass based on total polymerization units constituting the polymer forming the primary particles.

In the polytetrafluoroethylene of the present disclosure, the shell portion is preferably formed from a polymer containing a tetrafluoroethylene unit and a modifying monomer unit.

In the polytetrafluoroethylene of the present disclosure, the shell portion is preferably formed from a polymer containing only a tetrafluoroethylene unit.

In the polytetrafluoroethylene of the present disclosure, the shell portion is preferably formed from a polymer obtained by polymerizing tetrafluoroethylene in the presence of a chain transfer agent.

In the polytetrafluoroethylene of the present disclosure, a mass ratio of the core portion to the shell portion (core portion : shell portion) is 60:40 to 95:5.

In the polytetrafluoroethylene of the present disclosure, the core portion preferably comprises a core central portion and a core outer portion.

In the polytetrafluoroethylene of the present disclosure, the core central portion is preferably formed from a polymer containing a tetrafluoroethylene unit and a modifying monomer unit.

In the polytetrafluoroethylene of the present disclosure, the core outer portion is preferably formed from a polymer containing only a tetrafluoroethylene unit.

According to the present disclosure, there is also provided a method for producing a polytetrafluoroethylene, comprising polymerizing tetrafluoroethylene in an aqueous medium in the presence of a hydrocarbon surfactant to obtain a polytetrafluoroethylene, wherein in the polymerization, the tetrafluoroethylene is continuously or intermittently supplied to a reactor, and at least one selected from the group consisting of a modifying monomer and a chain transfer agent is added to the reactor at a time point when more than 60% by mass of the tetrafluoroethylene based on a total amount of the tetrafluoroethylene used for polymerization is supplied.

In the production method of the present disclosure, the polymerization is preferably performed substantially in the absence of a fluorine-containing surfactant, excluding compounds having a functional group capable of reacting by radical polymerization and a hydrophilic group.

In the production method of the present disclosure, in the polymerization, a modifying monomer is preferably added to the reactor before the start of supply of the tetrafluoroethylene or at a time point when 5% by mass or less of the tetrafluoroethylene based on the total amount of the tetrafluoroethylene used for polymerization is supplied.

In the production method of the present disclosure, in the polymerization, it is preferable that the modifying monomer is added to the reactor before the start of supply of the tetrafluoroethylene or at a time point when 5% by mass or less of the tetrafluoroethylene based on the total amount of the tetrafluoroethylene used for polymerization is supplied, and the modifying monomer is removed from the reactor at a time point when more than 5% by mass and 70% by mass or less of the tetrafluoroethylene based on the total amount of the tetrafluoroethylene used for polymerization is supplied.

In the production method of the present disclosure, an amount of the modifying monomer added is preferably 0.00001 to 1.0% by mass based on a total amount of the polytetrafluoroethylene finally obtained.

In the production method of the present disclosure, in the polymerization, it is preferable that 0.6 × 10¹³ particles/mL or more primary particles of polytetrafluoroethylene are generated.

In the production method of the present disclosure, in the polymerization, it is preferable that the hydrocarbon surfactant is continuously added to the reactor.

In the production method of the present disclosure, the modifying monomer preferably comprises at least one selected from the group consisting of hexafluoropropylene, perfluoro(alkyl vinyl ether), and (perfluoroalkyl)ethylene.

### EFFECTS OF INVENTION

According to the present disclosure, it is possible to provide a polytetrafluoroethylene that can be easily extruded at a high reduction ratio.

According to the present disclosure, it is also possible to provide a production method capable of producing a polytetrafluoroethylene that can be easily extruded at a high reduction ratio.

### DESCRIPTION OF EMBODIMENTS

Hereinafter, specific embodiments of the present disclosure will be described in detail, but the present disclosure is not limited to the following embodiments.

Before specifically describing the present disclosure, some terms used herein are defined or explained.

The term "organic group" as used herein, unless otherwise specified, means a group containing one or more carbon atoms or a group obtainable by removing one hydrogen atom from an organic compound.

Examples of the "organic group" include:
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
RaO-,
RaCO-,
RaSO₂-,
RaCOO-,
RaNRaCO-,
RaCONRa-,
RaOCO-, and
RaOSO₂-,
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents, an aryl group optionally having one or more substituents,
an aralkyl group optionally having one or more substituents,
a non-aromatic heterocyclic group optionally having one or more substituents, or
a heteroaryl group optionally having one or more substituents.

The organic group is preferably an alkyl group optionally having one or more substituents.

In the present disclosure, unless otherwise specified, the term "substituent" means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8, preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms, preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12, preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8, preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12, preferably 2 to 8 carbon atoms in total, and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8, preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total, preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total, preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, aromatic sulfonamide group, and heterocyclic sulfonamide group may be, for example, a methanesulfonamide group, a benzenesulfonamide group, a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8, preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group each may have an aliphatic group, an aliphatic oxy group, a halogen atom, a carbamoyl group, a heterocyclic group ring-fused with the aryl group, and an aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples thereof include alkylthio groups having 1 to 8 carbon atoms in total, more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

Next, a polytetrafluoroethylene of the present disclosure and a method for producing the same will be specifically described.

The polytetrafluoroethylene (PTFE) according to one embodiment of the present disclosure has a color tone L* of 20 to 85, and a cylindrical extrusion pressure, at a reduction ratio (RR) of 1,600, of 120 MPa or less. Since the PTFE of the present disclosure has these configurations, it can be easily produced by polymerization of a tetrafluoroethylene (TFE) using a hydrocarbon surfactant, and can be easily extruded at a high reduction ratio. Therefore, by using the PTFE of the present disclosure, it is also easy to obtain a thin and long molded body.

Further, the polytetrafluoroethylene (PTFE) according to one embodiment of the present disclosure comprises a hydrocarbon surfactant, and a cylindrical extrusion pressure, at a reduction ratio of 1,600, of 120 MPa or less. Since the PTFE of the present disclosure has these configurations, it can be easily produced by polymerization of a tetrafluoroethylene (TFE) using a hydrocarbon surfactant, and can be easily extruded at a high reduction ratio. Therefore, by using the PTFE of the present disclosure, it is also easy to obtain a thin and long molded body.

The color tone L* of the PTFE is 20 to 85, preferably 30 or more, more preferably 40 or more, and preferably 80 or less, more preferably 75 or less. When the color tone L* is within the above range, it is possible to achieve both excellent productivity of PTFE and excellent appearance of the molded body obtained using PTFE. The color tone L* of PTFE can be adjusted within the above range, for example, by producing PTFE using the hydrocarbon surfactant. The color tone L* can be achieved by producing PTFE by polymerization of tetrafluoroethylene (TFE) using a hydrocarbon surfactant and requiring no special post-treatment of the obtained PTFE. Therefore, such PTFE is excellent in productivity.

The color tone L* of PTFE in the present disclosure is the color tone L* of PTFE after heat-treatment at 385°C for 10 minutes. That is, the PTFE according to one embodiment of the present disclosure can provide a heat-treated product exhibiting a color tone L* within the range described above when subjected to a heat-treatment at 385°C for 10 minutes. The color tone L* of PTFE can be specified by subjecting PTFE to a heat-treatment at 385°C for 10 minutes and measuring the color tone L* of the heat-treated PTFE using a color difference meter ZE 6000 (manufactured by Nippon Denshoku Industries Co., Ltd.) in conformity with JIS Z 8781-4. In the case where the PTFE is dispersed in an aqueous dispersion, the PTFE is made into dry powder before the heat-treatment. When the sample for measuring the color tone L* is a powder, a compression-molded body is prepared by compression-molding, and the color tone L* of the compression-molded body is measured. The compression-molding can be performed, for example, under conditions of 5307N (8.27MPa) and a retention time of 60 seconds.

The cylindrical extrusion pressure at RR 1600 of PTFE is 120 MPa or lower, preferably 100 MPa or lower, more preferably 80 MPa or lower, and still more preferably 60 MPa or lower. The lower limit is not limited, but may be 20MPa or more. When the cylindrical extrusion pressure at RR 1600 is within the above range, the PTFE of the present disclosure is excellent in moldability, and can be extruded at RR 3000, for example. Accordingly, by using the PTFE of the present disclosure, a wide variety of molded bodies, including thin and long molded bodies, can be produced with high productivity. The cylindrical extrusion pressure at RR 1600 of the PTFE can be adjusted by appropriately configuring the primary particles contained in the PTFE.

The cylindrical extrusion pressure at RR 1600 is the extrusion pressure when a mixture obtained by adding 20.5 parts by mass of a lubricant (trade name: Isopar G (R), manufactured by ExxonMobil Corporation) to 100 parts by mass of PTFE is extruded at a reduction ratio of 1600:1. The cylindrical extrusion pressure at RR 1600 can be measured by, for example, the following method used in Examples described later.

In one embodiment, the PTFE of the present disclosure contains a fluorine-containing surfactant. The PTFE containing a fluorine-containing surfactant has an advantage that the PTFE can be stably produced with high productivity using a fluorine-containing surfactant.

In one embodiment, the PTFE of the present disclosure is substantially free from a fluorine-containing surfactant. The PTFE which is substantially free from a fluorine-containing surfactant, needs to be produced by polymerizing TFE without using a fluorine-containing surfactant, but can be produced by the production method of the present disclosure described later.

In the present disclosure, "substantially free from a fluorine-containing surfactant" means that the content of the fluorine-containing surfactant in the PTFE is 10 mass ppm or less, preferably 1 mass ppm or less, more preferably 100 mass ppb or less, still more preferably 10 mass ppb or less, further preferably 1 mass ppb or less, and particularly preferably less than the detection limit as measured by liquid chromatography-mass spectrometry (LC/MS/MS).

The content of the fluorine-containing surfactant can be determined by a known method. For example, it can be determined by LC/MS/MS analysis. First, extraction is performed by adding methanol to the PTFE, and the obtained extracted liquid is subjected to LC/MS/MS analysis.

In order to further improve the extraction efficiency, treatment by Soxhlet extraction, ultrasonic treatment or the like may be performed.

From the obtained LC/MS/MS spectrum, the molecular weight information is extracted to confirm agreement with the structural formula of the candidate fluorine-containing surfactant.

Thereafter, aqueous solutions having five or more different content levels of the confirmed fluorine-containing surfactant are prepared, and LC/MS/MS analysis of the aqueous solution of each content is performed, and the relationship between the content and the area for the content is plotted, and a calibration curve is drawn.

Then, using the calibration curve, the area of the LC/MS/MS spectrum of PTFE can be converted into the content of the fluorine-containing surfactant.

The form of PTFE of the present disclosure is not limited, and may be PTFE dispersed in an aqueous dispersion or a slurry, or may be powder, crumb, pellet, or the like. The form of PTFE disclosed in the present disclosure is preferably a powder.

The thermal instability index (TII) of PTFE of the present disclosure is preferably 10 or more, more preferably 20 or more, still more preferably 30 or more, particularly preferably 35 or more, and most preferably 40 or more. When the thermal instability index (TII) is within the above range, it is possible to achieve both high productivity of PTFE and excellent moldability. The thermal instability index (TII) of PTFE can be adjusted within the above range, for example, by producing PTFE using a hydrocarbon surfactant. The thermal instability index (TII) can be measured in conformity with ASTM D 4895-89.

In the PTFE of the present disclosure, the average primary particle size of the primary particles is preferably 500 nm or less, more preferably 400 nm or less, and still more preferably 350 nm or less. Since the average primary particle size of the primary particles is relatively small, the polymerization of TFE in an aqueous medium proceeds smoothly, and PTFE can be easily produced. The relatively small average primary particle size of the primary particles can be obtained, for example, by adding a modifying monomer to the polymerization system at the initial stage of polymerization of TFE. The lower limit of the average primary particle size may be, for example, but not limited to, 50 nm or 100 nm. In some cases, the preferred average primary particle size is different depending on the molecular weight of PTFE, for example, when the molecular weight of PTFE is high, the average primary particle size is preferably 100 nm or more, and more preferably 150 nm or more.

The average primary particle size of the primary particles of PTFE can be determined by a dynamic light scattering. The average primary particle size may be determined by preparing an aqueous dispersion of PTFE with a polymer solid concentration being adjusted to 1.0% by mass and using dynamic light scattering at a measurement temperature of 25°C with 70 measurement processes, wherein the solvent (water) has a refractive index of 1.3328 and the solvent (water) has a viscosity of 0.8878 mPa·s. The dynamic light scattering method may be performed by, for example, ELSZ-1000S (manufactured by Otsuka Electronics Co., Ltd.).

The PTFE of the present disclosure preferably has a standard specific gravity (SSG) of 2.280 or less, more preferably 2.200 or less, still more preferably 2.190 or less, and preferably 2.130 or more. When the SSG is within the above range, it is possible to achieve both excellent moldability and excellent physical properties of the molded body obtained by molding. The SSG is determined by the water replacement method compliant with ASTM D 792 using a sample molded compliant with ASTM D 4895-89.

In the PTFE of the present disclosure, the aspect ratio of the primary particles is preferably 1.45 or less. The aspect ratio of PTFE is more preferably 1.40 or less, still more preferably 1.35 or less, further preferably 1.30 or less, still further preferably 1.25 or less, particularly preferably 1.20 or less, and very particularly preferably 1.15 or less. Since the aspect ratio is relatively small, the polymerization of TFE in an aqueous medium proceeds smoothly, and PTFE can be easily produced. The relatively small aspect ratio of the primary particles can be obtained, for example, by adding a modifying monomer to the polymerization system at the initial stage of polymerization of TFE.

When the aspect ratio of the PTFE is measured using an aqueous dispersion of the PTFE, the aspect ratio can be determined by preparing and observing the aqueous dispersion of the PTFE adjusted to have a polymer solid concentration of about 1.0% by mass with a scanning electron microscope (SEM), performing image processing on 400 or more particles selected at random, and averaging the ratios of the major axis to the minor axis. When the aspect ratio of the PTFE is measured by using a powder of PTFE, an aqueous dispersion of the PTFE is prepared by irradiating the powder of the PTFE with an electron beam, adding the PTFE to an aqueous solution of a fluorine-containing surfactant, and redispersing the powder of the PTFE into the aqueous solution by applying ultrasonic waves. Using the aqueous dispersion prepared in this manner, the aspect ratio can be determined by the above method.

The 0.1% weight loss temperature of PTFE of the present disclosure may be 400°C or lower. When the 0.1% weight loss temperature is within the above range, it is possible to achieve both high productivity of PTFE and excellent moldability. The 0.1% weight loss temperature of PTFE can be adjusted within the above range, for example, by producing PTFE using a hydrocarbon surfactant.

The 0.1% weight loss temperature can be measured using TG/DTA (thermogravimetric - differential thermal analyzer) by precisely weighing about 10 mg of PTFE powder, which has no history of being heated to a temperature of 300°C or higher, and storing it in a dedicated aluminum pan. The 0.1% weight loss temperature can be specified as a temperature corresponding to the point at which the weight of the aluminum pan is reduced by 0.1% by weight by heating the aluminum pan under the condition of 10°C/min in the temperature range from 25°C to 600°C in the air atmosphere.

The 1.0% weight loss temperature of PTFE of the present disclosure may be 492°C or lower. When the 1.0% weight loss temperature is within the above range, it is possible to achieve both high productivity of PTFE and excellent moldability. The 1.0% weight loss temperature of PTFE can be adjusted within the above range, for example, by producing PTFE using a hydrocarbon surfactant.

The 1.0% weight loss temperature can be measured using TG/DTA (thermogravimetric - differential thermal analyzer) by precisely weighing about 10 mg of PTFE powder, which has no history of being heated to a temperature of 300°C or higher, and storing it in a dedicated aluminum pan. The 1.0% weight loss temperature can be specified as a temperature corresponding to the point at which the weight of the aluminum pan is reduced by 1.0% by weight by heating the aluminum pan under the condition of 10°C/min in the temperature range from 25°C to 600°C in the air atmosphere.

The PTFE of the present disclosure preferably has a peak temperature of 342°C or lower, more preferably 341°C or lower, and still more preferably 340°C or lower.

The peak temperature of PTFE can be measured using TG/DTA (thermogravimetric - differential thermal analyzer) by precisely weighing about 10 mg of PTFE powder, which has no history of being heated to a temperature of 300°C or higher and storing it in a dedicated aluminum pan. The peak temperature can be obtained by obtaining a differential thermal (DTA) curve by heating the aluminum pan under the condition of 10°C/min in a temperature range from 25°C to 600°C in the air atmosphere, and specifying the temperature corresponding to the maximum value of the differential thermal (DTA) curve.

The PTFE of the present disclosure may be a TFE homopolymer containing only TFE unit, or may be a modified PTFE containing a TFE unit and a modifying monomer unit.

The PTFE of the present disclosure preferably contains a TFE unit and a modifying monomer unit because primary particles having a small average primary particle size and aspect ratio can be easily obtained, polymerization of TFE in an aqueous medium proceeds smoothly, and PTFE can thus be easily produced. In the present disclosure, the term "modifying monomer unit" means a portion of the molecular structure of the PTFE as a part derived from the modifying monomer.

When PTFE contains a TFE unit and a modifying monomer unit, the content of the modifying monomer unit of PTFE is preferably in the range of 0.00001 to 1.0% by mass based on the total polymerization units constituting PTFE. The lower limit of the content of the modifying monomer unit is 0.0001% by mass, 0.0005% by mass, 0.001% by mass, and 0.005% by mass in the order of preference. The upper limit of the content of the modifying monomer unit is 0.90% by mass, 0.50% by mass, 0.40% by mass, 0.30% by mass, 0.10% by mass, and 0.08% by mass in the order of preference.

In the present disclosure, the contents of the respective monomer units constituting PTFE can be calculated herein by any appropriate combination of NMR, FT-IR, elemental analysis, and X-ray fluorescence analysis in accordance with the types of the monomers. Further, the contents of the respective monomer units constituting PTFE can also be obtained by calculation from the amount of the added modifying monomer used in the polymerization.

The PTFE of the present disclosure preferably contains primary particles each having a core portion and a shell portion. Since the primary particles in PTFE have a core-shell structure, the cylindrical extrusion pressure at a high reduction ratio can be further reduced. In the present disclosure, the core portion is a portion constituting the center of the primary particles, and the shell portion is a portion that covers the periphery of the core portion. Further, in the present disclosure, the primary particles are particles contained in an aqueous dispersion obtained by polymerizing TFE in an aqueous medium, and are particles constituting a powder of PTFE. The PTFE powder is usually secondary particles formed by aggregating primary particles. In the primary particles, there does not have to be a clear boundary between the core portion and the shell portion, and the polymer forming the core portion and the polymer forming the shell portion may have a mutually inserted structure.

In the PTFE of the present disclosure, the core portion is preferably formed from a polymer containing a TFE unit and a modifying monomer unit because primary particles having a small average primary particle size can be easily obtained, polymerization of TFE in an aqueous medium proceeds smoothly, and PTFE can thus be easily produced.

The modifying monomer constituting the modifying monomer unit contained in the polymer of the core portion is not limited, and examples thereof include a modifying monomer described later. Among them, the modifying monomer is preferably at least one selected from the group consisting of hexafluoropropylene, perfluoro(alkyl vinyl ether), and (perfluoroalkyl)ethylene, and more preferably hexafluoropropylene because primary particles having a small average primary particle size and aspect ratio can be easily obtained, whereby the polymerization of TFE in an aqueous medium smoothly proceeds and PTFE can be easily produced.

When the core portion is formed from a polymer containing a TFE unit and a modifying monomer unit, the content of the modifying monomer unit in the polymer is preferably 0.00001 to 1.0% by mass based on the total polymerization unit constituting the polymer forming the primary particles. The lower limit of the content of the modifying monomer unit is 0.0001% by mass, 0.0005% by mass, 0.001% by mass, and 0.005% by mass in the order of preference. The upper limit of the content of the modifying monomer unit is 0.90% by mass, 0.50% by mass, 0.40% by mass, 0.30% by mass, 0.10% by mass, 0.08% by mass, and 0.05% by mass in the order of preference. By setting the content of the modifying monomer unit in the polymer within the above range, primary particles having a small average primary particle size and aspect ratio can be easily obtained, whereby the polymerization of TFE in an aqueous medium smoothly proceeds and PTFE can be easily produced.

In the PTFE of the present disclosure, the core portion is preferably formed from a polymer obtained by polymerizing TFE in the absence of a chain transfer agent. By forming the core portion from the polymer obtained by polymerizing TFE in the absence of a chain transfer agent, it is possible to achieve both excellent moldability such as low cylindrical extrusion pressure and excellent physical properties of the molded body obtained by molding (for example, mechanical strength).

In the PTFE of the present disclosure, the shell portion is preferably formed from a polymer containing a TFE unit and a modifying monomer unit, because the cylindrical extrusion pressure at a high reduction ratio can be further reduced.

The modifying monomer constituting the modifying monomer unit contained in the polymer of the shell portion is not limited, and examples thereof include a modifying monomer described later. Among them, the modifying monomer is preferably at least one selected from the group consisting of hexafluoropropylene, perfluoro(alkyl vinyl ether), and (perfluoroalkyl)ethylene, and more preferably hexafluoropropylene because the cylindrical extrusion pressure at a high reduction ratio can be further reduced.

When the shell portion is formed from a polymer containing a TFE unit and a modifying monomer unit, the content of the modifying monomer unit in the polymer is preferably 0.00001 to 1.0% by mass based on the total polymerization unit constituting the polymer forming the primary particles. The lower limit of the content of the modifying monomer unit is 0.0001% by mass, 0.0005% by mass, 0.001% by mass, and 0.005% by mass in the order of preference. The upper limit of the content of the modifying monomer unit is 0.90% by mass, 0.50% by mass, 0.40% by mass, 0.30% by mass, 0.10% by mass, 0.08% by mass, and 0.05% by mass in the order of preference.

In the PTFE of the present disclosure, the shell portion may be formed from a polymer containing only TFE unit. Even when the shell portion is formed from a polymer containing only TFE unit, the cylindrical extrusion pressure at a high reduction ratio can be sufficiently reduced by using a polymer obtained by polymerizing TFE in the presence of a chain transfer agent as the polymer forming the shell portion.

In the PTFE of the present disclosure, the shell portion is preferably formed from a polymer obtained by polymerizing TFE in the presence of a chain transfer agent, because the cylindrical extrusion pressure at a high reduction ratio can be further reduced. By forming the shell portion by polymerization using a chain transfer agent, the molecular weight of the polymer constituting the shell portion is appropriately adjusted, and a sufficiently low cylindrical extrusion pressure can be obtained.

The amount of chain transfer agent present in the polymerization for obtaining the polymer forming the shell portion is preferably 0.001 to 10,000 mass ppm, more preferably 0.01 mass ppm or more, still more preferably 0.05 mass ppm or more, particularly preferably 0.1 mass ppm or more, and more preferably 1,000 mass ppm or less, still more preferably 500 mass ppm or less, particularly preferably 100 mass ppm or less, based on the aqueous medium. By setting the amount of the chain transfer agent within the above range, the molecular weight of the polymer constituting the shell portion is appropriately adjusted, and a sufficiently low cylindrical extrusion pressure can be obtained.

In the PTFE of the present disclosure, the mass ratio of the core portion to the shell portion (core portion:shell portion) is preferably 60:40 to 97:3, more preferably 70:30 to 95:5, and still more preferably 80:20 to 90:10. By appropriately adjusting the mass ratio of the core portion to the shell portion, it is possible to easily form primary particles having a small average primary particle size and aspect ratio, especially when the primary particles are formed from a polymer containing a TFE unit and a modifying monomer unit, and to obtain a low cylindrical extrusion pressure at a high reduction ratio. The mass ratio of the core portion to the shell portion can be adjusted by appropriately adjusting the timing for adding the modifying monomer and/or the chain transfer agent in the continuous polymerization of TFE.

It is also preferable that the PTFE of the present disclosure contains primary particles each including a core portion and a shell portion, and the core portion in the primary particles includes a core central portion and a core outer portion. The core central portion is a portion forming a further central portion of the core portion forming a central portion of the primary particles. The core outer portion is a portion that covers the periphery of the core central portion, and is an intermediate portion between the core central portion and the shell portion that forms the outer side of the core outer portion.

In the PTFE of the present disclosure, the core central portion is preferably formed from a polymer containing a TFE unit and a modifying monomer unit because primary particles having a small average primary particle size and aspect ratio can be easily obtained, whereby polymerization of TFE in an aqueous medium proceeds smoothly and PTFE can be easily produced.

When the core central portion is formed from a polymer containing a TFE unit and a modifying monomer unit, the content of the modifying monomer unit in the polymer is preferably 0.00001 to 1.0% by mass based on the total polymerization unit constituting the polymer forming the primary particles. The lower limit of the content of the modifying monomer unit is 0.0001% by mass, 0.0005% by mass, 0.001% by mass, and 0.005% by mass in the order of preference. The upper limit of the content of the modifying monomer unit is 0.90% by mass, 0.50% by mass, 0.40% by mass, 0.30% by mass, 0.10% by mass, 0.08% by mass, and 0.05% by mass in the order of preference. By setting the content of the modifying monomer unit in the polymer within the above range, primary particles having a small average primary particle size and aspect ratio can be easily obtained, whereby the polymerization of TFE in an aqueous medium smoothly proceeds and PTFE can be easily produced.

In the PTFE of the present disclosure, the core outer portion may be formed from a polymer containing only TFE unit or may be formed from a polymer containing a tetrafluoroethylene unit and a modifying monomer unit. In the PTFE of the present disclosure, the core outer portion is preferably formed from a polymer containing only TFE unit. Since the core outer portion is formed from TFE homopolymer, it is possible to achieve both excellent moldability such as low cylindrical extrusion pressure and excellent physical properties of the molded body obtained by molding (for example, mechanical strength).

The PTFE of the present disclosure having excellent physical properties as described above can be produced, for example, by the production method of the present disclosure described later.

Next, the production method of the present disclosure will be described.

The method for producing PTFE includes a polymerization step of polymerizing TFE in an aqueous medium in the presence of a hydrocarbon surfactant to obtain PTFE. PTFE obtained by polymerizing TFE in an aqueous medium is usually obtained in the form of primary particles dispersed in an aqueous dispersion.

In the production method of the present disclosure, since the polymerization of TFE is performed in the presence of a hydrocarbon surfactant, PTFE can be produced without using a fluorine-containing surfactant as in the conventional technique. The resulting PTFE exhibits a relatively low color tone L* and a relatively high thermal instability index (TII).

The amount of the hydrocarbon surfactant in the polymerization step is preferably 0.01 to 10% by mass, more preferably 0.1% by mass or more, and more preferably 1.0% by mass or less based on the aqueous medium.

The polymerization temperature and the polymerization pressure in the polymerization step are determined as appropriate in accordance with the types of the monomers used, the molecular weight of the target PTFE, and the reaction rate.

The polymerization temperature is preferably 10 to 150°C, more preferably 30°C or higher, still more preferably 50°C or higher, and more preferably 120°C or lower, still more preferably 100°C or lower.

The polymerization pressure is preferably 0.05 to 10 MPaG, more preferably 0.3 MPaG or more, still more preferably 0.5 MPaG or more, still more preferably 5.0 MPaG or less, still more preferably 3.0 MPaG or less. In particular, from the viewpoint of improving the yield of PTFE, the polymerization pressure is preferably 1.0 MPaG or higher, more preferably 1.2 MPaG or higher, still more preferably 1.5 MPaG or higher, particularly preferably 1.8 MPaG or higher, and most preferably 2.0 MPaG or higher.

It can be said that the polymerization started when the gas fluoromonomer in the reactor became PTFE and the pressure drop in the reactor occurred. U.S. Patent No. 3,391,099 (Punderson) discloses a dispersion polymerization of TFE in an aqueous medium comprising two separate steps of a polymerization process comprising: first the formation of a polymer nucleus as a nucleation site, and then the growth step comprising polymerization of the established particles. The polymerization is usually started when both the monomer to be polymerized and the polymerization initiator are charged in the reactor. Further, in the present disclosure, an additive related to the formation of a nucleation site is referred to as a nucleating agent.

Furthermore, in the production method of the present disclosure, in the polymerization step, TFE is continuously or intermittently supplied to a reactor, and at a time point when more than 60% by mass of TFE based on the total amount of TFE used for polymerization is supplied, at least one selected from the group consisting of a modifying monomer and a chain transfer agent is added to the reactor. Therefore, according to the production method of the present disclosure, PTFE containing primary particles each having a core portion and a shell portion can be obtained, and the obtained PTFE can be easily extruded at a high reduction ratio.

In the polymerization step until at least one selected from the group consisting of the modifying monomer and the chain transfer agent is added, a core portion in the primary particles is formed.

In the polymerization step for forming the core portion, the modifying monomer is preferably added to the reactor before the start of supply of TFE or at a time point when 5% by mass or less of TFE based on the total amount of TFE used for polymerization is supplied. That is, it is preferable to add the modifying monomer before the initiation of the polymerization, at the same time as the initiation of the polymerization, or during the period when the nuclei of the primary particles are formed after the initiation of the polymerization. By adding the modifying monomer to the reactor at the initial stage of the polymerization step, primary particles having a small average primary particle size and aspect ratio can be easily obtained, and the polymerization of TFE in an aqueous medium smoothly proceeds and PTFE can thus be easily produced. Further, PTFE powder can be recovered by coagulating the aqueous dispersion obtained by polymerization, and PTFE (uncoagulated polymer) is unlikely to remain in the discharge water remaining after the powder is recovered.

The modifying monomer added in the polymerization step for forming the core portion is not limited, and examples thereof include a modifying monomer described later. Among them, the modifying monomer is preferably at least one selected from the group consisting of hexafluoropropylene, perfluoro(alkyl vinyl ether), and (perfluoroalkyl)ethylene, and more preferably hexafluoropropylene because primary particles having a small average primary particle size and aspect ratio can be easily obtained, whereby the polymerization of TFE in an aqueous medium smoothly proceeds and PTFE can be easily produced.

The amount of the modifying monomer added at the time point when 5% by mass or less of TFE based on the total amount of TFE is supplied is preferably 0.00001 to 1.0% by mass based on the total amount of PTFE finally obtained. The lower limit of the amount of the modifying monomer unit added is 0.0001% by mass, 0.0005% by mass, 0.001% by mass, and 0.005% by mass in the order of preference. The upper limit of the amount of the modifying monomer added is 0.90% by mass, 0.50% by mass, 0.40% by mass, 0.30% by mass, 0.10% by mass, 0.08% by mass, and 0.05% by mass in the order of preference. By supplying TFE within the above range at the initial stage of the polymerization step, primary particles having a small average primary particle size and aspect ratio can be easily obtained, whereby the polymerization of TFE in an aqueous medium smoothly proceeds and PTFE can be easily produced. Further, PTFE powder can be recovered by coagulating the aqueous dispersion obtained by polymerization, and PTFE (uncoagulated polymer) is unlikely to remain in the discharge water remaining after the powder is recovered.

In the polymerization step until at least one selected from the group consisting of the modifying monomer and the chain transfer agent is added, it is preferable to polymerize the TFE in the absence of the chain transfer agent. By polymerizing TFE in the absence of a chain transfer agent to form a core portion, a PTFE having excellent moldability such as low cylindrical extrusion pressure and excellent physical properties of the molded body obtained by molding (for example, mechanical strength) can be produced.

In the polymerization step, by adding at least one selected from the group consisting of a modifying monomer and a chain transfer agent to the reactor at the time point when more than 60% by mass of TFE based on the total amount of TFE used for polymerization is supplied, a shell portion that covers the core portion is formed. By adding at least one selected from the group consisting of a modifying monomer and a chain transfer agent to the reactor at a later stage of the polymerization step, PTFE that can be easily extruded at a high reduction ratio can be produced.

The modifying monomer added in the polymerization step for forming the shell portion is not limited, and examples thereof include a modifying monomer described later. Among them, the modifying monomer is preferably at least one selected from the group consisting of hexafluoropropylene, perfluoro(alkyl vinyl ether), and (perfluoroalkyl)ethylene, and more preferably hexafluoropropylene because the cylindrical extrusion pressure at a high reduction ratio can be further reduced.

The amount of the modifying monomer added in the polymerization step for forming the shell portion is preferably 0.00001 to 1.0% by mass based on the total amount of PTFE finally obtained. The lower limit of the amount of the modifying monomer unit added is 0.0001% by mass, 0.0005% by mass, 0.001% by mass, and 0.005% by mass in the order of preference. The upper limit of the amount of the modifying monomer added is 0.90% by mass, 0.50% by mass, 0.40% by mass, 0.30% by mass, 0.10% by mass, 0.08% by mass, and 0.05% by mass in the order of preference.

In the polymerization step for forming the shell portion, it is also preferable to polymerize TFE in the absence of the modifying monomer. By such a polymerization method, PTFE containing primary particles in which the shell portion is formed from a polymer containing only TFE unit is obtained. Even when the shell portion is formed from a polymer containing only TFE unit, the cylindrical extrusion pressure at a high reduction ratio can be sufficiently reduced by using a polymer obtained by polymerizing TFE in the presence of a chain transfer agent as the polymer forming the shell portion.

In the polymerization step for forming the shell portion, it is particularly preferable to add a chain transfer agent. By forming the shell portion by polymerization using a chain transfer agent, the molecular weight of the polymer constituting the shell portion is appropriately adjusted, and a sufficiently low cylindrical extrusion pressure can be obtained.

The amount of chain transfer agent added in the polymerization step for forming the shell portion is preferably 0.001 to 10000 mass ppm, more preferably 0.01 mass ppm or more, still more preferably 0.05 mass ppm or more, particularly preferably 0.1 mass ppm or more, and more preferably 1000 mass ppm or less, still more preferably 500 mass ppm or less, particularly preferably 100 mass ppm or less, based on the aqueous medium. By setting the amount of the chain transfer agent added within the above range, the molecular weight of the polymer constituting the shell portion is appropriately adjusted, and a sufficiently low cylindrical extrusion pressure can be obtained.

The timing for adding at least one selected from the group consisting of a modifying monomer and a chain transfer agent is at a time point when more than 60% by mass of TFE based on the total amount of TFE used for polymerization is supplied, preferably at a time point when more than 70% by mass of TFE is supplied, more preferably at a time point when more than 80% by mass of TFE is supplied, and preferably at a time point when 97% by mass or less of TFE is supplied, more preferably at a time point when 95% by mass or less of TFE is supplied, and still more preferably at a time point when 90% by mass or less of TFE is supplied. By appropriately selecting the timing for adding at least one selected from the group consisting of the modifying monomer and the chain transfer agent, the mass ratio of the core portion and the shell portion of the obtained primary particles can be appropriately adjusted, primary particles having a small average primary particle size can be obtained, and at the same time, PTFE that can be easily extruded at a high reduction ratio can be obtained.

In the present disclosure, the "time point when more than 60% by mass of TFE based on the total amount of TFE used for polymerization is supplied" refers to any time point after 60% by mass of TFE used for polymerization has been supplied to the reactor where the total amount of TFE used for polymerization is 100% by mass. Further, the "time point when 97% by mass or less of TFE based on the total amount of TFE used for polymerization is supplied" refers to a time point when 97% by mass or less of TFE used for polymerization has been supplied to the reactor and any time point before 97% by mass of TFE used for polymerization is supplied where the total amount of TFE used for polymerization is 100% by mass. The "total amount of TFE used for polymerization" is the total amount of TFE supplied to the reactor during the polymerization step. Since it can be assumed that almost the entire amount of the supplied TFE is consumed by polymerization, for example, when at least one selected from the group consisting of a modifying monomer and a chain transfer agent is added at a time point when 60% by mass of TFE based on the total amount of TFE used for polymerization is supplied, PTFE containing primary particles having a mass ratio (core portion:shell portion) of the core portion to the shell portion of about 60:40 is obtained.

In the polymerization step for forming the core portion, the modifying monomer may be added to the reactor before the start of supply of tetrafluoroethylene or at a time point when 5% by mass or less of TFE based on the total amount of TFE used for polymerization is supplied, and may be removed from the reactor at a time point when more than 5% by mass and 70% by mass or less of TFE based on the total amount of TFE used for the polymerization is supplied. The modifying monomer added to the reactor in the early stages of polymerization is removed from the reactor at a suitable timing, primary particles each having a core portion and a shell portion in which the core portion has a core central portion and a core outer portion can be formed. The core central portion of the primary particle thus obtained is formed from a polymer containing a TFE unit and a modifying monomer unit, and the core outer portion is formed from a polymer containing only TFE unit. Therefore, it is possible to produce PTFE having excellent moldability such as low cylindrical extrusion pressure and excellent physical properties (for example, mechanical strength) of the molded body obtained by molding.

The method for removing the modifying monomer from the reactor is not limited, and examples thereof include a method of depressurizing the reactor internal pressure to atmospheric pressure. When the reactor internal pressure is depressurized to atmospheric pressure, the supply of TFE to the reactor is temporarily stopped. After removing the modifying monomer from the reactor, the continuous or intermittent supply of TFE to the reactor is resumed to provide a core outer portion formed from a polymer containing only TFE unit.

The polymerization step is not limited, but it is also preferable to allow a hydrocarbon surfactant of more than 50 mass ppm to be present in the aqueous medium. The amount of the hydrocarbon surfactant at the initiation of polymerization is preferably 60 mass ppm or more, more preferably 70 mass ppm or more, still more preferably 80 mass ppm or more, further preferably 100 mass ppm or more, and still further preferably 150 mass ppm or more, particularly preferably 200 mass ppm or more, and most preferably 300 mass ppm or more. The upper limit thereof is preferably, but not limited to, 10,000 mass ppm, and more preferably 5,000 mass ppm, for example. By setting the amount of the hydrocarbon surfactant at the initiation of polymerization within the above range, primary particles having a small average primary particle size and aspect ratio can be easily obtained, the polymerization of TFE in an aqueous medium smoothly proceeds, and PTFE can thus be easily produced. Further, PTFE powder can be recovered by coagulating the aqueous dispersion obtained by polymerization, and PTFE (uncoagulated polymer) is unlikely to remain in the discharge water remaining after the powder is recovered.

In the production method of the present disclosure, the polymerization step is preferably performed substantially in the absence of a fluorine-containing surfactant (excluding compounds having a functional group capable of reacting by radical polymerization and a hydrophilic group). Conventionally, a fluorine-containing surfactant has been used for polymerization of PTFE, but in the production method of the present disclosure, PTFE can be obtained without using a fluorine-containing surfactant. The expression "substantially in the absence of a fluorine-containing surfactant" as used herein means that the amount of the fluorine-containing surfactant in the aqueous medium is 10 mass ppm or less, preferably 1 mass ppm or less, more preferably 100 mass ppb or less, still more preferably 10 mass ppb or less, and further preferably 1 mass ppb or less.

In the polymerization step, it is preferable to generate 0.6 × 10¹³ particles/ml or more of PTFE particles. By generating a large number of particles in the polymerization step, primary particles having a small average primary particle size and aspect ratio can be easily obtained, and the polymerization of TFE in an aqueous medium smoothly proceeds and PTFE can be easily produced. The number of PTFE particles to be generated is more preferably 0.7 × 10¹³ particles/mL or more, still more preferably 0.8 × 10¹³ particles/mL or more, further preferably 0.9 × 10¹³ particles/mL or more, and particularly preferably 1.0 × 10¹³ particles/mL or more. The upper limit is not limited, but is, for example, 7.0×10¹⁴ particles/mL.

Since the generation of PTFE particles are concentrated in the first half of the polymerization and is unlikely to occur in the second half of the polymerization, the number of PTFE particles in the polymerization step is almost the same as the number of particles generated in the first half of the polymerization. Therefore, the number of PTFE particles in the polymerization step can be predicted by measuring the number of primary particles in the finally obtained PTFE aqueous dispersion.

The number of the primary particles in the PTFE aqueous dispersion can be calculated from the specific gravity (for example, 2.28) of the spherical particles and the polymer solid concentration, assuming that the primary particles are spherical particles having an average primary particle size as a diameter.

In the polymerization step, it is preferable that the hydrocarbon surfactant is continuously added to the reactor. Adding the hydrocarbon surfactant continuously means, for example, adding the hydrocarbon surfactant not all at once, but adding over time and without interruption or adding in portions. By continuously adding the hydrocarbon surfactant to the reactor, primary particles having a small average primary particle size and aspect ratio can be easily obtained, and the polymerization of TFE in an aqueous medium smoothly proceeds and PTFE can thus be easily produced. Further, PTFE powder can be recovered by coagulating the aqueous dispersion obtained by polymerization, and PTFE (uncoagulated polymer) is unlikely to remain in the discharge water remaining after the powder is recovered.

The timing at which the addition of the hydrocarbon surfactant is started is not limited, but the hydrogen surfactant is preferably started to be added to the reactor before the start of supply of TFE or at a time point when 0.60% by mass or less of TFE based on the total amount of TFE used for polymerization is supplied. The timing at which the addition of the hydrocarbon surfactant is started is at a time point when 0.60% by mass or less of TFE based on the total amount of TFE used for polymerization is supplied, preferably at a time point when 0.50% by mass or less of TFE is supplied, more preferably at a time point when 0.36% by mass or less of TFE is supplied, still more preferably at a time point when 0.30% by mass or less of TFE is supplied, particularly preferably at a time point when 0.20% by mass or less of TFE is supplied, and most preferably at a time point when 0.10% by mass or less of TFE is supplied.

The timing at which the addition of the hydrocarbon surfactant is completed is not limited, but the addition of the hydrocarbon surfactant to the reactor is preferably continued until the time point when 95% by mass or more of TFE based on the total amount of TFE used for polymerization is supplied. Further, the addition of the hydrocarbon surfactant to the reactor may be continued until the time point when the supply of TFE to the reactor is stopped, that is, the time point when the reaction is completed.

The amount of the hydrocarbon surfactant added continuously is preferably 0.01 to 10% by mass, more preferably 0.05% by mass or more, and still more preferably 0.1% by mass or more, and more preferably 5% by mass or less, still more preferably 1% by mass or less, based on the aqueous medium.

Next, components constituting the PTFE of the present disclosure, materials used in the production method of the present disclosure, and the like will be described in more detail.

### <Polytetrafluoroethylene (PTFE)>

PTFE is usually stretchable, fibrillatable, and non-molten secondary processible. The non-molten secondary processible means a property that the melt flow rate cannot be measured at a temperature higher than the crystal melting point, that is, a property that does not easily flow even in the melting temperature region, in conformity with ASTM D 1238 and D 2116.

The PTFE of the present disclosure and the PTFE obtained by the production method of the present disclosure may be a TFE homopolymer containing only TFE unit, or may be a modified PTFE containing a TFE unit and a modifying monomer unit.

### <Aqueous medium>

The aqueous medium is a reaction medium in which the polymerization is performed, and means a liquid containing water. The aqueous medium may be any medium containing water, and it may be one containing water and, for example, any of fluorine-free organic solvents such as alcohols, ethers, and ketones, and/or fluorine-containing organic solvents having a boiling point of 40°C or lower.

### <Modifying monomer>

The modifying monomer is not limited as long as it can be copolymerized with TFE, and examples thereof include fluoromonomers and non-fluoromonomers. Further, one or a plurality of kinds of the modifying monomers may be used.

Examples of the non-fluoromonomer include, but not limited to, a monomer represented by the general formula:

CH₂=CR^{Q1}-LR^{Q2}

wherein R^{Q1} represents a hydrogen atom or an alkyl group; L represents a single bond, -CO-O-*, -O-CO-*, or -O-; * represents the binding position with R^{Q2}; and R^{Q2} represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Among these, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and fluoroalkylallyl ethers.

Examples of the perfluorovinyl ether include, but are not limited to, a perfluoro unsaturated compound represented by the general formula (A) :

CF₂=CF-ORf (A)

wherein Rf represents a perfluoroorganic group. The "perfluoroorganic group" as used herein means an organic group in which all hydrogen atoms bonded to the carbon atoms are replaced by fluorine atoms. The perfluoroorganic group optionally has ether oxygen.

Examples of the perfluorovinyl ether include perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by the general formula (A) in which Rf is a perfluoro(alkoxyalkyl) group having 4 to 9 carbon atoms; those in which Rf is a group represented by the following formula: 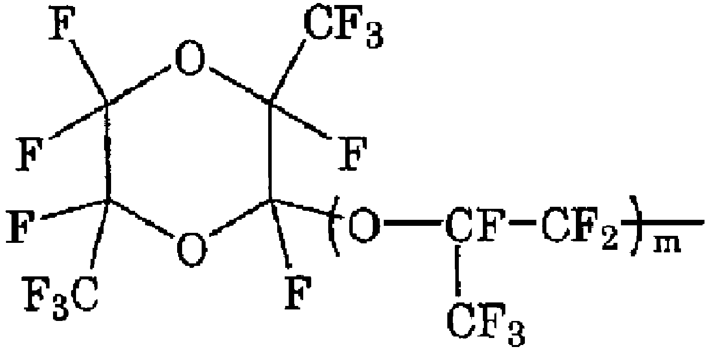 wherein m represents 0 or an integer of 1 to 4; and those in which Rf is a group represented by the following formula: 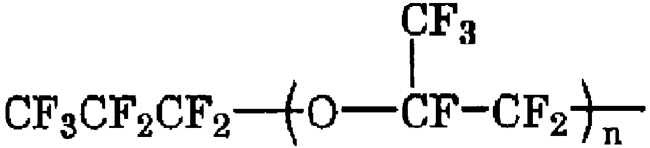 wherein n is an integer of 1 to 4.

Examples of hydrogen-containing fluoroolefins include CH₂=CF₂, CFH=CH₂, CFH=CF₂, CF₂=CFCF₃, CH₂=CFCF₃, CH₂=CHCF₃, CHF=CHCF₃ (E-form), and CHF=CHCF₃ (Z-form).

Examples of the (perfluoroalkyl)ethylene (PFAE) include, but are not limited to, (perfluorobutyl) ethylene (PFBE), and (perfluorohexyl) ethylene.

Examples of the fluoroalkylallyl ether include fluoromonomers represented by the general formula:

CF₂=CF-CF₂-ORf

wherein Rf represents a perfluoroorganic group. Rf in the general formula is the same as Rf in the general formula (A). Rf is preferably a perfluoroalkyl group having 1 to 10 carbon atoms or a perfluoroalkoxyalkyl group having 1 to 10 carbon atoms. The fluoroalkylallyl ether is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and still more preferably CF₂=CF-CF₂-O-CF₂CF₂CF₃.

The modifying monomer is also preferably exemplified by a modifying monomer (3) having a monomer reactivity ratio of 0.1 to 8. The presence of the modifying monomer (3) makes it possible to obtain PTFE particles having a small particle size, and to thereby obtain an aqueous dispersion having high dispersion stability.

The monomer reactivity ratio in the copolymerization with TFE is a value obtained by dividing a rate constant when the propagating radical reacts with TFE when the propagating radical is less than a repeating unit based on TFE by a rate constant when the propagating radical reacts with a modifying monomer. The lower this value is, the more reactive the modifying monomer is with TFE. The monomer reactivity ratio can be calculated by copolymerizing the TFE and the modifying monomer, determining the compositional features in the polymer formed immediately after initiation, and calculating the reactivity ratio by Fineman-Ross equation.

The copolymerization is performed using 3,600 g of deionized degassed water, 1,000 mass ppm of ammonium perfluorooctanoate based on the water, and 100 g of paraffin wax contained in an autoclave made of stainless steel with an internal volume of 6.0 L at a pressure of 0.78 MPaG and a temperature of 70°C. A modifying monomer in an amount of 0.05 g, 0.1 g, 0.2 g, 0.5 g, or 1.0 g is added to the reactor, and then 0.072 g of ammonium persulfate (20 mass ppm based on the water) is added thereto. To maintain the polymerization pressure at 0.78 MPaG, TFE is continuously supplied thereinto. When the charged amount of TFE reaches 1,000 g, stirring is stopped and the pressure is released until the pressure in the reactor decreases to the atmospheric pressure. After cooling, the paraffin wax is separated to obtain an aqueous dispersion containing the resulting polymer. The aqueous dispersion is stirred so that the resulting polymer coagulates, and the polymer is dried at 150°C. The composition in the resulting polymer is calculated by appropriate combination of NMR, FT-IR, elemental analysis, and X-ray fluorescence analysis depending on the types of the monomers.

The modifying monomer (3) having a monomer reactivity ratio of 0.1 to 8 is preferably at least one selected from the group consisting of modifying monomers represented by the formulas (3a) to (3d):

CH₂=CH-Rf¹ (3a)

wherein Rf¹ is a perfluoroalkyl group having 1 to 10 carbon atoms;

CF₂=CF-O-Rf² (3b)

wherein Rf² is a perfluoroalkyl group having 1 to 2 carbon atoms;

CF₂=CF-O-(CF₂)ₙCF=CF₂ (3c)

wherein n is 1 or 2; 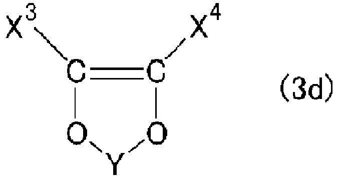 wherein X³ and X⁴ are each F, Cl, or a methoxy group; and Y is represented by the formula Y1 or Y2; and 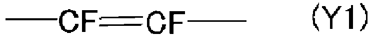 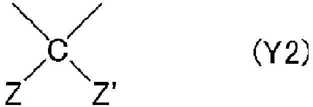 wherein Z and Z' are each F or a fluorinated alkyl group having 1 to 3 carbon atoms.

The content of the modifying monomer (3) unit is preferably in the range of 0.00001 to 1.0% by mass based on the total polymerization units of the PTFE. The lower limit thereof is more preferably 0.0001% by mass, more preferably 0.0005% by mass, still more preferably 0.001% by mass, and further preferably 0.005% by mass. The upper limit thereof is preferably 0.90% by mass, more preferably 0.50% by mass, still more preferably 0.40% by mass, further preferably 0.30% by mass, still further preferably 0.10% by mass, particularly preferably 0.08% by mass, and most preferably 0.05% by mass.

The modifying monomer is preferably at least one selected from the group consisting of hexafluoropropylene, chlorotrifluoroethylene, vinylidene fluoride, perfluoro(alkyl vinyl ether), (perfluoroalkyl)ethylene, ethylene, and modifying monomers having a functional group capable of reacting by radical polymerization and a hydrophilic group, in view of obtaining an aqueous dispersion having a small average primary particle size of primary particles, a small aspect ratio of primary particles, and excellent stability. The use of the modifying monomer allows for obtaining an aqueous dispersion of PTFE having a smaller average primary particle size, a smaller aspect ratio of the primary particles, and excellent dispersion stability. Also, an aqueous dispersion having a smaller amount of uncoagulated polymer can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

The modifying monomer more preferably contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

The total amount of the hexafluoropropylene unit, the perfluoro(alkyl vinyl ether) unit and the (perfluoroalkyl)ethylene unit is preferably in the range of 0.00001 to 1% by mass based on the total polymerization units of the PTFE. The lower limit of the content is more preferably 0.0001% by mass, more preferably 0.0005% by mass, still more preferably 0.001% by mass, and still more preferably 0.005% by mass. The upper limit thereof is more preferably 0.50% by mass, still more preferably 0.40% by mass, further preferably 0.30% by mass, still further preferably 0.10% by mass, and particularly preferably 0.08% by mass.

It is also preferable that the modifying monomer contains a modifying monomer having a functional group capable of reacting by radical polymerization and a hydrophilic group (hereinafter, referred to as "modifying monomer (A) ") .

The presence of the modifying monomer (A) makes it possible to obtain PTFE particles having a small primary particle size, and to thereby obtain an aqueous dispersion having high dispersion stability. Further, the amount of the uncoagulated polymer can be reduced. Further, the aspect ratio of the primary particles can be made small.

The amount of the modifying monomer (A) used is preferably an amount exceeding 0.1 mass ppm of the aqueous medium, more preferably an amount exceeding 0.5 mass ppm, still more preferably an amount exceeding 1.0 mass ppm, further preferably 5 mass ppm or more, and particularly preferably 10 mass ppm or more. When the amount of the modifying monomer (A) used is too small, the average primary particle size of the obtained PTFE may not be reduced.

The amount of the modifying monomer (A) used may be in the above range, but the upper limit may be, for example, 5,000 mass ppm. Further, in the production method, the modifying monomer (A) may be added to the system during the reaction in order to improve the stability of the aqueous dispersion during or after the reaction.

Since the modifying monomer (A) is highly water-soluble, even if the unreacted modifying monomer (A) remains in the aqueous dispersion, it can be easily removed in the concentration step or the coagulation/washing step.

The modifying monomer (A) is incorporated into the resulting polymer in the process of polymerization, but the concentration of the modifying monomer (A) in the polymerization system itself is low and the amount incorporated into the polymer is small, so that there is no problem that the heat resistance of PTFE is lowered or PTFE is colored after sintering.

Examples of the hydrophilic group in the modifying monomer (A) include -NH₂, -PO₃M, -P(O)(OM)₂, -OPO₃M, -OP(O)(OM)₂, -SO₃M, -OSO₃M, and - COOM, wherein M is H, a metal atom, NR^{7y}₄, imidazolium optionally having a substituent, pyridinium optionally having a substituent, or phosphonium optionally having a substituent, wherein R^{7y} is H or an organic group, and may be the same or different, and any two thereof may be bonded to each other to form a ring. Of these, the hydrophilic group is preferably -SO₃M or -COOM. The alkyl group is preferable as the organic group in R^{7y}. R^{7y} is preferably H or a C₁₋₁₀ organic group, more preferably H or a C₁₋₄ organic group, and still more preferably H or a C₁₋₄ alkyl group.

Examples of the metal atom include monovalent and divalent metal atoms, alkali metals (Group 1) and alkaline earth metals (Group 2), and preferred is Na, K, or Li.

Examples of the "functional group capable of reacting by radical polymerization" in the modifying monomer (A) include a group having an ethylenically unsaturated bond such as a vinyl group and an allyl group. The group having an ethylenically unsaturated bond may be represented by the following formula:

CX^{e}X^{g}=CX^{f}R-

wherein X^{e}, X^{f} and X^{g} are each independently F, Cl, H, CF₃, CF₂H, CFH₂ or CH₃; and R is a linking group. The linking group R include linking groups as R^{a} which will be described later. Preferred are groups having an unsaturated bond, such as -CH=CH₂, -CF=CH₂, -CH=CF₂, -CF=CF₂, -CH₂-CH=CH₂, - CF₂-CF=CH₂, -CF₂-CF=CF₂, -(C=O)-CH=CH₂, -(C=O)-CF=CH₂, -(C=O)-CH=CF₂, -(C=O)-CF=CF₂, -(C=O)-C(CH₃)=CH₂, -(C=O)-C(CF₃)=CH₂, -(C=O)-C(CH₃)=CF₂, -(C=O)-C(CF₃)=CF₂, -O-CH₂-CH=CH₂, -O-CF₂-CF=CH₂, -O-CH₂-CH=CF₂, and -O-CF₂-CF=CF₂.

Since the modifying monomer (A) has a functional group capable of reacting by radical polymerization, it is presumed that when used in the polymerization, it reacts with a fluorine-containing monomer at the initial stage of the polymerization reaction and forms particles with high stability having a hydrophilic group derived from the modifying monomer (A). Therefore, it is considered that the number of particles increases when the polymerization is performed in the presence of the modifying monomer (A) .

The polymerization may be performed in the presence of one or more of the modifying monomers (A).

In the polymerization, a compound having an unsaturated bond may be used as the modifying monomer (A).

The modifying monomer (A) is preferably a compound represented by the general formula (4):

CXⁱX^{k}=CXⁱR^{a}-(CZ¹Z²)ₖ-Y³ (4)

wherein Xⁱ, X^{j}, and X^{k} are each independently F, Cl, H, or CF₃; Y³ is a hydrophilic group; R^{a} is a linking group; Z¹ and Z² are each independently H, F, or CF₃; and k is 0 or 1.

Examples of the hydrophilic group include -NH₂, -PO₃M, -P(O)(OM)₂, - OPO₃M, -OP(O)(OM)₂, -SO₃M, -OSO₃M, and -COCM, wherein M is H, a metal atom, NR^{7y}₄, imidazolium optionally having a substituent, pyridinium optionally having a substituent, or phosphonium optionally having a substituent, wherein R^{7y} is H or an organic group, and may be the same or different, and any two thereof may be bonded to each other to form a ring. Of these, the hydrophilic group is preferably -SO₃M or -COCM. The alkyl group is preferable as the organic group in R^{7y}. R^{7y} is preferably H or a C₁₋₁₀ organic group, more preferably H or a C₁₋₄ organic group, and still more preferably H or a C₁₋₄ alkyl group. Examples of the metal atom include monovalent and divalent metal atoms, alkali metals (Group 1) and alkaline earth metals (Group 2), and preferred is Na, K, or Li.

The use of the modifying monomer (A) allows for obtaining an aqueous dispersion having a smaller average primary particle size and superior stability. Also, the aspect ratio of the primary particles can be made smaller.

R^{a} is a linking group. The "linking group" as used herein refers to a divalent linking group. The linking group may be a single bond and preferably contains at least one carbon atom, and the number of carbon atoms may be 2 or more, 4 or more, 8 or more, 10 or more, or 20 or more. The upper limit thereof is not limited, but may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be free from carbon atoms and may be a catenary heteroatom such as oxygen, sulfur, or nitrogen.

R^{a} is preferably a catenary heteroatom such as oxygen, sulfur, or nitrogen, or a divalent organic group.

When R^{a} is a divalent organic group, the hydrogen atom bonded to the carbon atom may be replaced by a halogen other than fluorine, such as chlorine, and may or may not contain a double bond. Further, R^{a} may be linear or branched, and may be cyclic or acyclic. R^{a} may also contain a functional group (e.g., ester, ether, ketone, amine, halide, etc.).

R^{a} may also be a fluorine-free divalent organic group or a partially fluorinated or perfluorinated divalent organic group.

R^{a} may be, for example, a hydrocarbon group in which a fluorine atom is not bonded to a carbon atom, a hydrocarbon group in which some of the hydrogen atoms bonded to a carbon atom are replaced by fluorine atoms, a hydrocarbon group in which all of the hydrogen atoms bonded to the carbon atoms are replaced by fluorine atoms, -(C=O)-, -(C=O)-O-, or a hydrocarbon group containing -(C=O)-, and these groups optionally contain an oxygen atom, optionally contain a double bond, and optionally contain a functional group.

R^{a} is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced by fluorine.

R^{a} is preferably at least one selected from -(CH₂)ₐ-, -(CF₂)ₐ-, -O-(CF₂)ₐ-, -(CF₂)ₐ-O-(CF₂)_{b}-, -O(CF₂)ₐ-O-(CF₂)_{b}-, -(CF₂)ₐ-[O-(CF₂)_{b}]_{c}-, -O(CF₂)ₐ-[O-(CF₂)_{b}]_{c}-, -[(CF₂)a-O]_{b}-[(CF₂)_{c}-O]_{d}-, -O[(CF₂)ₐ-O]_{b}-[(CF₂)_{c}-O]_{d}-, -O-[CF₂CF(CF₃)O]ₐ-(CF₂)_{b}-, -(C=O)-, -(C=O)-O-, -(C=O)-(CH₂)ₐ-, -(C=O)-(CF₂)ₐ-, - (C=O)-O-(CH₂)ₐ-, -(C=O)-O-(CF₂)ₐ-, -(C=O)-[(CH₂)ₐ-O]_{b}-, -(C=O)-[(CF₂)ₐ-O]_{b}-, - (C=O)-O[(CH₂)ₐ-O]_{b}-, -(C=O)-O[(CF₂)ₐ-O]_{b}-, -(C=O)-O[(CH₂)ₐ-O]_{b}-(CH₂)_{c}-, - (C=O)-O[(CF₂)ₐ-O]_{b}-(CF₂)_{c}-, -(C=O)-(CH₂)ₐ-O-(CH₂)_{b}-, -(C=O)-(CF₂)ₐ-O-(CF₂)_{b}-, - (C=O)-O-(CH₂)ₐ-O-(CH₂)_{b}-, -(C=O)-O-(CF₂)ₐ-O-(CF₂)_{b}-, -(C=O)-O-C₆H₄-, and combinations thereof.

In the formula, a, b, c, and d are independently at least 1 or more. a, b, c and d may independently be 2 or more, 3 or more, 4 or more, 10 or more, or 20 or more. The upper limits of a, b, c, and d are 100, for example.

Specific examples suitable for R^{a} include -CF₂-O-, -CF₂-O-CF₂-, - CF₂-O-CH₂-, -CF₂-O-CH₂CF₂-, -CF₂-O-CF₂CF₂-, -CF₂-O-CF₂CH₂-, -CF₂-O-CF₂CF₂CH₂-, - CF₂-O-CF(CF₃)-, -CF₂-O-CF(CF₃)CF₂-, -CF₂-O-CF(CF₃)CF₂-O-, -CF₂-O-CF(CF₃)CH₂-, -(C=O)-, -(C=O)-O-, -(C=O)-(CH₂)-, -(C=O)-(CF₂)-, -(C=O)-O-(CH₂)-, -(C=O)-O-(CF₂)-, -(C=O)-[(CH₂)₂-O]ₙ-, -(C=O)-[(CF₂)₂-O]ₙ-, -(C=O)-O[(CH₂)₂-O]ₙ-, - (C=O)-O[(CF₂)₂-O]ₙ-, -(C=O)-O[(CH₂)₂-O]ₙ-(CH₂)-, -(C=O)-O[(CF₂)₂-O]ₙ-(CF₂)-, - (C=O)- (CH₂)₂-O-(CH₂)-, - (C=O)- (CF₂)₂-O-(CF₂)-, - (C=O)-O-(CH₂)₂-O-(CH₂)-, - (C=O)-O-(CF₂)₂-O-(CF₂)-, and - (C=O)-O-C₆H₄-. In particular, preferred for R^{a} among these is -CF₂-O-, -CF₂-O-CF₂-, -CF₂-O-CF₂CF₂-, -CF₂-O-CF(CF₃)-, -CF₂-O-CF (CF₃)CF₂-, -CF₂-O-CF(CF₃)CF₂-O-, - (C=O)-, - (C=O)-O-, - (C=O)- (CH₂)-, - (C=O)-O-(CH₂)-, -(C=O)-O[(CH₂)₂-O]ₙ-, -(C=O)-O[(CH₂)₂-O]ₙ-(CH₂)-, -(C=O)-(CH₂)₂-O-(CH₂)-, or - (C=O)-O-C₆H₄-.

In the formula, n is an integer of 1 to 10.

-R^{a}-(CZ¹Z²)ₖ- in the general formula (4) is preferably -CF₂-O-CF₂-, -CF₂-O-CF(CF₃)-, -CF₂-O-C(CF₃)₂-, -CF₂-O-CF₂-CF₂-, -CF₂-O-CF₂-CF(CF₃)-, - CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C (CF₃)₂-, -CF₂-O-CF(CF₃)-CF₂-, -CF₂-O-CF(CF₃)-CF (CF₃)-, -CF₂-O-CF(CF₃)-C (CF₃)₂-, -CF₂-O-CF(CF₃)-CF₂-, -CF₂-O-CF(CF₃)-CF (CF₃)-, -CF₂-O-CF(CF₃)-C (CF₃)₂-, -CF₂-O-CF (CF₃)CF₂-CF₂-, -CF₂-O-CF(CF₃)CF₂-CF (CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, -CF₂-O-CF(CF₃)CF₂-O-C(CF₃)₂-, -(C=O)-, -(C=O)-O-, -(C=O)-(CH₂)-, -(C=O)-(CF₂)-, -(C=O)-O-(CH₂)-, -(C=O)-O-(CF₂)-, -(C=O)-[(CH₂)₂⁻O]ₙ-(CH₂)-, -(C=O)-[(CF₂)₂-O]ₙ-(CF₂)-, -(C=O)-[(CH₂)₂-O]ₙ-(CH₂)-(CH₂)-, -(C=O)-[(CF₂)₂-O]ₙ-(CF₂)-(CF₂)-, -(C=O)-O[(CH₂)₂-O]ₙ-(CF₂)-, -(C=O)-O[(CH₂)₂-O]ₙ-(CH₂)-(CH₂)-, -(C=O)-O[(CF₂)₂-O]ₙ-(CF₂)-, -(C=O)-O[(CF₂)₂-O]ₙ-(CF₂)-(CF₂)-, -(C=O)-(CH₂)₂-O-(CH₂)-(CH₂)-, -(C=O)-(CF₂)₂-O-(CF₂)-(CF₂)-, - (C=O)-O-(CH₂)₂-O-(CH₂)- (CH₂)-, - (C=O)-O-(CF₂)₂-O-(CF₂)-(CF₂)-, - (C=O)-O-(CH₂)₂-O-(CH₂)-C (CF₃)₂-, - (C=O)-O-(CF₂)₂-O-(CF₂)-C (CF₃)₂-, or - (C=O)-0-C₆H₄-C(CF₃)₂-, and is more preferably -CF₂-O-CF(CF₃)-, -CF₂-O-CF₂-CF(CF₃)-, -CF₂-O-CF₂CF₂-CF(CF₃)-, -CF₂-O-CF(CF₃)-CF (CF₃)-, -CF₂-O-CF(CF₃)CF₂-CF(CF₃)-, - CF₂-O-CF(CF₃)CF₂-O-CF(CF₃)-, - (C=O)-, - (C=O)-O-(CH₂)-, - (C=O)-O-(CH₂)- (CH₂)-, - (C=O)-O[(CH₂)₂-O]ₙ-(CH₂)- (CH₂)-, - (C=O)-O-(CH₂)₂-O-(CH₂)-C (CF₃)₂-, or - (C=O)-O-C₆H₄-C(CF₃)₂-.

In the formula, n is an integer of 1 to 10.

Specific examples of the compound represented by the general formula (4) include compounds represented by the following formulas: 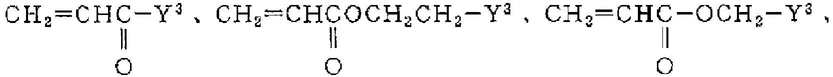 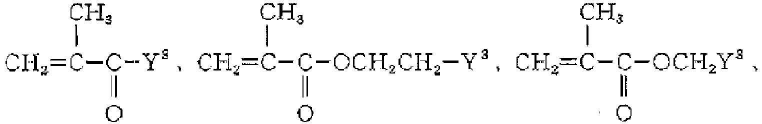 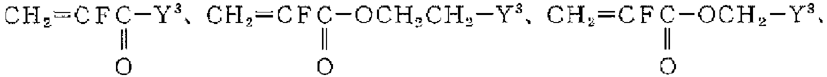 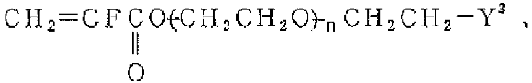 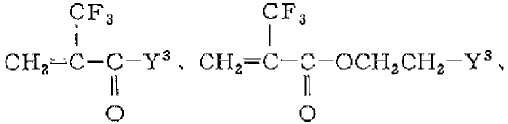 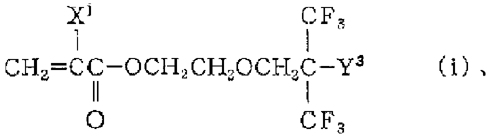 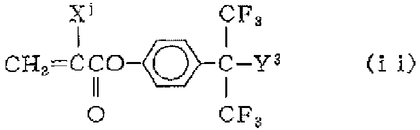 wherein X^{j} and Y³ are as described above; and n is an integer of 1 to 10.

R^{a} is preferably a divalent group represented by the general formula (r1):

-(C=O)ₕ-(O)ᵢ-CF₂-O-(CX⁶₂)ₑ-{O-CF(CF₃)}_{f}-(O)_{g}- (r1)

wherein X⁶ is each independently H, F, or CF₃; e is an integer of 0 to 3; f is an integer of 0 to 3; g is 0 or 1; h is 0 or 1; and i is 0 or 1,
and is also preferably a divalent group represented by the general formula (r2):

-(C=O)ₕ-(O)ᵢ-CF₂-O-(CX⁷₂)ₑ-(O)_{g}- (r2)

wherein X⁷ is each independently H, F, or CF₃; e is an integer of 0 to 3; g is 0 or 1; h is 0 or 1; and i is 0 or 1.

-R^{a}-(CZ¹Z²)ₖ- in the general formula (4) is also preferably a divalent group represented by the following formula (t1):

-(C=O)ₕ-(O)ᵢ-CF₂-O-(CX⁶₂)ₑ-{O-CF(CF3) }_{f}-(O)_{g}-CZ¹Z²- (t1)

wherein X⁶ is each independently H, F, or CF₃; e is an integer of 0 to 3; f is an integer of 0 to 3; g is 0 or 1; h is 0 or 1; i is 0 or 1; and Z¹ and Z² are each independently F or CF₃,
and is more preferably a group in which one of Z¹ and Z² is F and the other is CF₃ in the formula (t1).

Also, in the general formula (4), -R^{a}-(CZ¹Z²)ₖ- is preferably a divalent group represented by the following formula (t2):

-(C=O)ₕ-(O)ᵢ-CF₂-O-(CX⁷₂)ₑ-(O)_{g}-CZ¹Z²- (t2)

wherein X⁷ is each independently H, F, or CF₃; e is an integer of 0 to 3; g is 0 or 1; h is 0 or 1; i is 0 or 1; and Z¹ and Z² are each independently F or CF₃,
and is more preferably a group in which one of Z¹ and Z² is F and the other is CF₃ in the formula (t2) .

The compound represented by the general formula (4) also preferably has a C-F bond and does not have a C-H bond, in the portion excluding the hydrophilic group (Y³). In other words, in the general formula (4), Xⁱ, X^{j}, and X^{k} are all F, and R^{a} is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by the general formula (4) may be partially fluorinated. In other words, the compound represented by the general formula (4) also preferably has at least one hydrogen atom bonded to a carbon atom and at least one fluorine atom bonded to a carbon atom, in the portion excluding the hydrophilic group (Y³).

The compound represented by the general formula (4) is also preferably a compound represented by the following formula (4a):

CF₂=CF-O-Rf⁰-Y³ (4a)

wherein Y³ is a hydrophilic group; and Rf⁰ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by the general formula (4) is also preferably a compound represented by the following formula (4b):

CH₂=CH-O-Rf⁰-Y³ (4b)

wherein Y³ is a hydrophilic group; and Rf⁰ is a perfluorinated divalent linking group as defined in the formula (4a).

In the general formula (4), Y³ is preferably -OSO₃M. Examples of the compound represented by the general formula (4) when Y³ is -OSO₃M include CF₂=CF(OCF₂CF₂CH₂OSO₃M), CH₂=CH((CF₂)₄CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH((CF₂)₄CH₂OSO₃M), CF₂=CF(OCF₂CF₂SO₂N(CH₃)CH₂CH₂OSO₃M), CH₂=CH(CF₂CF₂CH₂OSO₃M), CF₂=CF(OCF₂CF₂CF₂CF₂SO₂N(CH₃)CH₂CH₂OSO₃M), and CH₂=CH((CF₂)₃CH₂OSO₃M). In the formula, M is the same as above.

In a preferred embodiment, in the general formula (4), Y³ is - SO₃M. Examples of the compound represented by the general formula (4) when Y³ is -SO₃M include CF₂=CF(OCF₂CF₂SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(CF₂CF₂SO₃M), CF₂=CF(OCF₂CF(CF₃)OCF₂CF₂CF₂CF₂SO₃M), CH₂=CH((CF₂)₄SO₃M), CH₂=CH((CF₂)₃SO₃M). In the formula, M is the same as above.

In a preferred embodiment, in the general formula (4), Y³ is - COOM. Examples of the compound represented by the general formula (4) when Y³ is -COOM include CF₂=CF(OCF₂CF₂COOM), CF₂=CF(OCF₂CF₂CF₂COOM), CF₂=CF(O(CF₂)₅COOM), CF₂=CF(OCF₂CF(CF₃)COOM), CF₂=CF(OCF₂CF(CF₃)O(CF₂)ₙCOOM) (n is greater than 1), CH₂=CH(CF₂CF₂COOM), CH₂=CH((CF₂)₄COOM), CH₂=CH((CF₂)₃COOM), CF₂=CF(OCF₂CF₂SO₂NR'CH₂COOM), CF₂=CF(O(CF₂)₄SO₂NR'CH₂COOM), CF₂=CF(OCF₂CF(CF₃)SO₂NR'CH₂COOM), CF₂=CF(OCF₂CF(CF₃)OCF₂CF₂SO₂NR'CH₂COOM), CH₂=CHCF₂CF₂SO₂NR'CH₂COOM), CF₂=CF(OCF₂CF(CF₃)OCF₂CF₂CF₂CF₂SO₂NR'CH₂COOM), CH₂=CH((CF₂)₄SO₂NR'CH₂COOM), and CH₂=CH((CF₂)₃SO₂NR'CH₂COOM). In the formula, R' is an H or a C₁₋₄ alkyl group, and M is the same as above.

In a preferred embodiment, in the general formula (4), Y³ is preferably -OPO₃M or -OP(O)(OM)₂. Examples of the compound represented by the general formula (4) when Y³ is -OPO₃M or -OP(O)(OM)₂ include CF₂=CF(OCF₂CF₂CH₂OP(O)(OM)₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF(OCF₂CF₂SO₂N(CH₃)CH₂CH₂OP(O)(OM)₂), CF₂=CF(OCF₂CF₂CF₂CF₂SO₂N(CH₃)CH₂CH₂OP(O)(OM)₂), CH₂=CH(CF₂CF₂CH₂OP(O)(OM)₂, CH₂=CH((CF₂)₄CH₂OP(O)(OM)₂), and CH₂=CH((CF₂)₃CH₂OP(O)(CM)₂). In the formula, M is the same as above.

In a preferred embodiment, in the general formula (4), Y³ is preferably -PO₃M or -P(O)(OM)₂. Examples of the compound represented by the general formula (4) when Y³ is -PO₃M or -P(O)(OM)₂ include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(CF₂CF₂P(O)(OM)₂), CH₂=CH((CF₂)₄P(O)(OM)₂), and CH₂=CH((CF₂)₃P(O)(OM)₂), wherein M is the same as above.

The compound represented by the general formula (4) is preferably at least one selected from the group consisting of:
a compound represented by the general formula (5):

   CX₂=CY(-CZ₂-O-Rf-Y³) (5)

   wherein X is the same or different and is -H or -F; Y is -H, -F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above;
a compound represented by the general formula (6):

   CX₂=CY(-O-Rf-Y³) (6)

   wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above; and
a compound represented by the general formula (7):

   CX₂=CY(-Rf-Y³) (7)

   wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above.

The fluorine-containing alkylene group having 2 to 100 carbon atoms and having an ether bond is an alkylene group which does not include a structure wherein an oxygen atom is an end and which contains an ether bond between carbon atoms.

In the general formula (5), each X is -H or -F. X may be both - F, or at least one thereof may be -H. For example, one thereof may be -F and the other may be -H, or both may be -H.

In the general formula (5), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or -CF₃, and more preferably -F.

In the general formula (5), Z is the same or different and is - H, -F, an alkyl group, or a fluoroalkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Z is preferably -H, -F, or -CF₃, and more preferably -F.

In the general formula (5), at least one of X, Y, and Z preferably contains a fluorine atom. For example, X may be -H, and Y and Z may be -F.

In the general formula (5), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group also preferably has 30 or less carbon atoms, more preferably 20 or less carbon atoms, and still more preferably 10 or less carbon atoms. Examples of the fluorine-containing alkylene group include -CF₂-, -CH₂CF₂-, -CF₂CF₂-, -CF₂CH₂-, - CF₂CF₂CH₂-, -CF(CF₃)-, -CF(CF₃)CF₂-, and -CF (CF₃) CH₂-. The fluorine-containing alkylene group is preferably a perfluoroalkylene group.

The fluorine-containing alkylene group having an ether bond preferably has 3 or more carbon atoms. Further, the fluorine-containing alkylene group having an ether bond preferably has 60 or less, more preferably 30 or less, and still more preferably 12 or less carbon atoms.

The fluorine-containing alkylene group having an ether bond is also preferably a divalent group represented by the following formula: 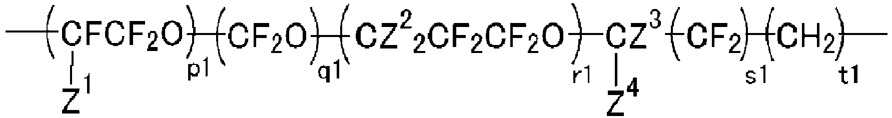 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF (CF₃) CF₂-O-CF (CF₃) -, - (CF (CF₃) CF₂-O)ₙ₋CF(CF₃) - (wherein n is an integer of 1 to 10), -CF(CF₃)CF₂-O-CF(CF₃)CH₂-, -(CF(CF₃)CF₂-O)ₙ-CF (CF₃) CH₂- (wherein n is an integer of 1 to 10), -CH₂CF₂CF₂O-CH₂CF₂CH₂-, - CF₂CF₂CF₂O-CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In the general formula (5), Y³ is -COCM, -SO₃M, or -OSO₃M, wherein M is H, a metal atom, NR^{7y}₄, imidazolium optionally having a substituent, pyridinium optionally having a substituent, or phosphonium optionally having a substituent, wherein R^{7y} is H or an organic group, and may be the same or different, and any two thereof may be bonded to each other to form a ring.

The alkyl group is preferable as the organic group in R^{7y}.

R^{7y} is preferably H or a C₁₋₁₀ organic group, more preferably H or a C₁₋₄ organic group, and still more preferably H or a C₁₋₄ alkyl group.

Examples of the metal atom include alkali metals (Group 1) and alkaline earth metals (Group 2), and preferred is Na, K, or Li.

M is preferably -H, a metal atom, or -NR^{7y}₄, more preferably -H, an alkali metal (Group 1), an alkaline earth metal (Group 2), or -NR^{7y}₄, still more preferably -H, -Na, -K, -Li, or -NH₄, further preferably -Na, -K, or -NH₄, particularly preferably -Na or -NH₄, and most preferably -NH₄.

Y³ is preferably -COCM or -SO₃M, and more preferably -COCM.

The compound represented by the general formula (5) is preferably a compound (5a) represented by the general formula (5a):

CH₂=CF(-CF₂-O-Rf-Y³) (5a)

wherein Rf and Y³ are as described above.

Specific examples of the compound represented by the general formula (5a) include a compound represented by the following formula: 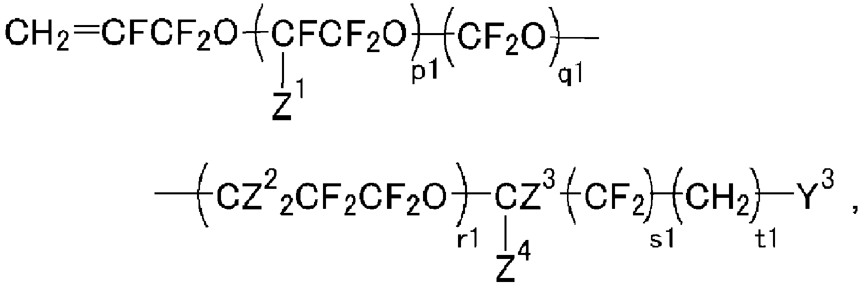 wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5; and Y³ is as described above, with the proviso that when Z³ and Z⁴ are both H, p1+q1+r1+s1 is not 0. More specifically, preferred examples thereof include:

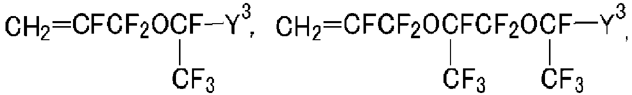

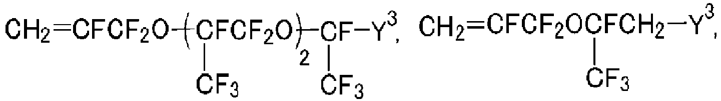

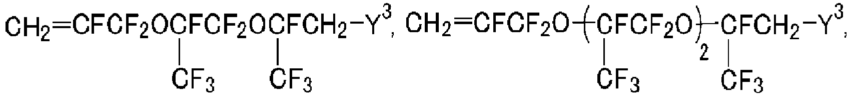

CH₂=CFCF₂OCH₂CF₂-Y³, CH₂=CFCF₂O(CH₂CF₂CF₂O)CH₂CF₂-Y³,

CH₂=CFCF₂OCH₂CF₂CH₂-Y³,

CH₂=CFCF₂O(CH₂CF₂CF₂O)CH₂CF₂CH₂-Y³

CH₂=CFCF₂OCF₂CF₂-Y³, CH₂=CFCF₂O(CF₂CF₂CF₂O)CF₂CF₂-Y³,

CH₂=CFCF₂OCF₂CF₂CH₂-Y³,

CH₂=CFCF₂O(CF₂CF₂CF₂O)CF₂CF₂CH₂-Y³,

CH₂=CFCF₂OCF₂-Y³, CH₂=CFCF₂O(CF₂CF₂O)CF₂-Y³,

CH₂=CFCF₂OCF₂CH₂-Y³,

CH₂=CFCF₂O(CF₂CF₂O)CF₂CH₂-Y³,

Of these, 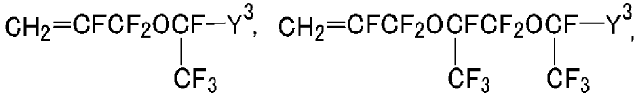 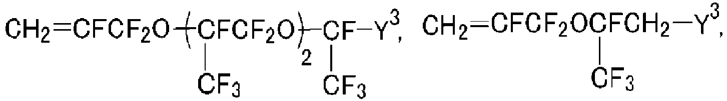 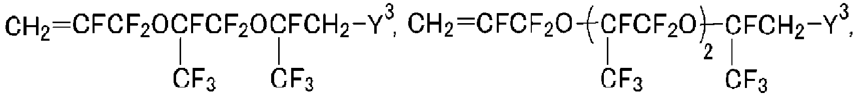 are preferable.

In the compound represented by the general formula (5a), Y³ in the formula (5a) is preferably -COCM. Specifically, the compound represented by the general formula (5a) is preferably at least one selected from the group consisting of CH₂=CFCF₂OCF(CF₃)COOM and CH₂=PCF₂OCF(CF₃) CF₂OCF(CF₃) COOM (wherein M is as defined above), and more preferably CH₂=CFCF₂OCF(CF₃) COOM.

The compound represented by the general formula (5) is preferably a compound (5b) represented by the general formula (5b):

CX²₂=CFCF₂-O-(CF (CF₃) CF₂O)ₙ₅-CF(CF₃) -Y³ (5b)

wherein each X² is the same, and each represent F or H; n5 represents 0 or an integer of 1 to 10, and Y³ is as defined above.

In the formula (5b), n5 is preferably 0 or an integer of 1 to 5, more preferably 0, 1, or 2, and still more preferably 0 or 1 from the viewpoint of stability of the resulting aqueous dispersion. Y³ is preferably -COCM from the viewpoint of obtaining appropriate water-solubility and stability of the aqueous dispersion, and M is preferably H or NH₄ from the viewpoint of being less likely to remain as impurities and improving the heat resistance of the resulting molded body.

Examples of the perfluorovinylalkyl compound represented by the formula (5b) include CH₂=CFCF₂OCF(CF₃) COOM and
CH₂=CFCF₂OCF(CF₃)CF₂OCF(CF₃)COOM, wherein M is as defined above.

Examples of the compound represented by the general formula (5) further include a compound represented by the general formula (5c):

CF₂=CFCF₂-O-Rf-Y³ (5c)

wherein Rf and Y³ are as described above.

More specific examples thereof include:

CF₂=C FCF₂OCF₂CF₂CF₂-Y³,

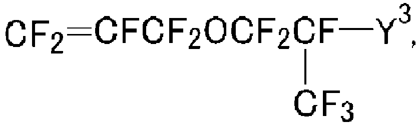

CF₂=CFCF₂OCF₂CF₂CF₂CH₂-Y³,

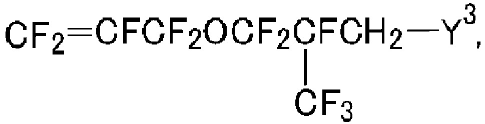

or the like.

In the general formula (6), each X is -H or -F. X may be both - F, or at least one thereof may be -H. For example, one thereof may be -F and the other may be -H, or both may be -H.

In the general formula (6), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or -CF₃, and more preferably -F.

In the general formula (6), at least one of X and Y preferably contains a fluorine atom. For example, X, Y, and Z may be -H, -F, and -F, respectively.

In the general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. Further, the fluorine-containing alkylene group preferably has 30 or less, more preferably 20 or less, and still more preferably 10 or less carbon atoms. Examples of the fluorine-containing alkylene group include -CF₂-, -CH₂CF₂-, -CF₂CF₂-, -CF₂CH₂-, -CF₂CF₂CH₂-, -CF(CF₃)-, - CF(CF₃)CF₂-, and -CF(CF₃)CH₂-. The fluorine-containing alkylene group is preferably a perfluoroalkylene group.

In the general formula (6), Y³ is -COCM, -SO₃M, or -OSO₃M, wherein M is H, a metal atom, NR^{7y}₄, imidazolium optionally having a substituent, pyridinium optionally having a substituent, or phosphonium optionally having a substituent, wherein R^{7y} is H or an organic group, and may be the same or different, and any two thereof may be bonded to each other to form a ring.

The alkyl group is preferable as the organic group of R^{7y}.

R^{7y} is preferably H or a C₁₋₁₀ organic group, more preferably H or a C₁₋₄ organic group, and still more preferably H or a C₁₋₄ alkyl group.

Examples of the metal atom include alkali metals (Group 1) and alkaline earth metals (Group 2), and preferred is Na, K, or Li.

M is preferably -H, a metal atom, or -NR^{7y}₄, more preferably -H, an alkali metal (Group 1), an alkaline earth metal (Group 2), or -NR^{7y}₄, still more preferably -H, -Na, -K, -Li, or -NH₄, further preferably -Na, -K, or -NH₄, particularly preferably -Na or -NH₄, and most preferably -NH₄.

Y³ is preferably -COCM or -SO₃M, and more preferably -COCM.

The compound represented by the general formula (6) is preferably at least one selected from the group consisting of compounds represented by the general formulas (6a), (6b), (6c), (6d), and (6e):

CF₂=CF-O-(CF₂)ₙ₁-Y³ (6a)

wherein n1 represents an integer of 1 to 10, and Y³ is as defined above;

CF₂=CF-O-(CF₂C(CF₃) F) ₙ₂-Y³ (6b)

wherein n2 represents an integer of 1 to 5, and Y³ is as defined above;

CF₂=CF-O-(CFX¹)ₙ₃-Y³ (6c)

wherein X¹ represents F or CF₃; n3 represents an integer of 1 to 10; and Y³ is as defined above;

CF2=CF-O-(CF₂CFX¹O)ₙ₄-(CF2) ₙ₆-Y³ (6d)

wherein n4 represents an integer of 1 to 10; n6 represents an integer of 1 to 3; and Y³ and X¹ are as defined above; and

CF₂=CF-O-(CF₂CF₂CFX¹O)ₙ₅-CF₂CF₂CF₂-Y³ (6e)

wherein n5 represents an integer of 0 to 10, and Y³ and X¹ are the same as defined above.

In the formula (6a), n1 is preferably an integer of 5 or less, and more preferably an integer of 2 or less. Y³ is preferably -COCM from the viewpoint of obtaining appropriate water-solubility and stability of the aqueous dispersion, and M is preferably H or NH₄ from the viewpoint of being less likely to remain as impurities and improving the heat resistance of the resulting molded body.

Examples of the compound represented by the formula (6a) include CF₂=CF-O-CF₂COOM, CF₂=CF(OCF₂CF₂COCM), and CF₂=CF(OCF₂CF₂CF₂COOM) (wherein, M is the same as defined above).

In the formula (6b), n2 is preferably an integer of 3 or less from the viewpoint of stability of the resulting aqueous dispersion, Y³ is preferably -COCM from the viewpoint of obtaining appropriate water-solubility and stability of the aqueous dispersion, and M is preferably H or NH₄ from the viewpoint of being less likely to remain as impurities and improving the heat resistance of the resulting molded body.

In the formula (6c), n3 is preferably an integer of 5 or less from the viewpoint of water-solubility, Y³ is preferably -COCM from the viewpoint of obtaining appropriate water-solubility and stability of the aqueous dispersion, and M is preferably H or NH₄ from the viewpoint of improving dispersion stability.

In the formula (6d), X¹ is preferably -CF₃ from the viewpoint of stability of the aqueous dispersion, n4 is preferably an integer of 5 or less from the viewpoint of water-solubility, Y³ is preferably -COCM from the viewpoint of obtaining appropriate water-solubility and stability of the aqueous dispersion, and M is preferably H or NH₄.

Examples of the compound represented by the formula (6d) include CF₂=CFOCF₂CF(CF₃) OCF₂CF₂COCM, CF₂=CFOCF₂CF(CF₃) OCF₂COCM, and CF₂=CFOCF₂CF(CF₃) OCF₂CF₂CF₂COOM (wherein M represents H, NH₄, or an alkali metal).

In the general formula (6e), n5 is preferably an integer of 5 or less in terms of water solubility, Y³ is preferably -COCM in terms of obtaining moderate water solubility and stability of the aqueous dispersion, and M is preferably H or NH₄.

Examples of the compound represented by the general formula (6e) include CF₂=CFOCF₂CF₂CF₂COOM (wherein M represents H, NH₄, or an alkali metal).

In the general formula (7), Rf is preferably a fluorine-containing alkylene group having 1 to 40 carbon atoms. In the general formula (7), at least one of X and Y preferably contains a fluorine atom.

The compound represented by the general formula (7) is preferably at least one selected from the group consisting of:
a compound represented by the general formula (7a):

   CF₂=CF-(CF₂)ₙ₁-Y³ (7a)

   wherein n1 represents an integer of 1 to 10; and Y³ is as defined above; and
a compound represented by the general formula (7b):

   CF₂=CF-(CF₂C(CF₃) F) ₙ₂-Y³ (7b)

   wherein n2 represents an integer of 1 to 5; and Y³ is as defined above.
Y³ is preferably -SO₃M or -COCM, and M is preferably H, a metal atom, NR^{7y}₄, imidazolium optionally having a substituent, pyridinium optionally having a substituent, or phosphonium optionally having a substituent. R^{7y} represents H or an organic group.

In the general formula (7a), n1 is preferably an integer of 5 or less, and more preferably an integer of 2 or less. Y³ is preferably - COOM from the viewpoint of obtaining appropriate water-solubility and stability of the aqueous dispersion, and M is preferably H or NH₄ from the viewpoint of being less likely to remain as impurities and improving the heat resistance of the resulting molded body.

Examples of the compound represented by the formula (7a) include CF₂=CFCF₂COOM, wherein, M is as defined above.

In the formula (7b), n2 is preferably an integer of 3 or less from the viewpoint of stability of the resulting aqueous dispersion, Y³ is preferably -COCM from the viewpoint of obtaining appropriate water-solubility and stability of the aqueous dispersion, and M is preferably H or NH₄ from the viewpoint of being less likely to remain as impurities and improving the heat resistance of the resulting molded body.

The modifying monomer preferably contains a modifying monomer (A), and preferably contains at least one selected from the group consisting of compounds represented by the general formulas (5a), (5b), (6a), (6b), (6c), and (6d), and more preferably contains a compound represented by the general formula (5a) or (5b).

When the modifying monomer (A) is used as the modifying monomer, the content of the modifying monomer (A) unit is preferably in the range of 0.00001 to 1.0% by mass based on the total polymerization unit of PTFE. The lower limit thereof is more preferably 0.0001% by mass, more preferably 0.0005% by mass, still more preferably 0.001% by mass, and further preferably 0.005% by mass. The upper limit thereof is preferably 0.90% by mass, more preferably 0.50% by mass, still more preferably 0.40% by mass, further preferably 0.30% by mass, still further preferably 0.10% by mass, particularly preferably 0.08% by mass, and particularly preferably 0.05% by mass.

### <Hydrocarbon surfactant>

The hydrocarbon surfactant may be, for example, those disclosed in Japanese National Publication of International Patent Application No. 2013/542308, Japanese National Publication of International Patent Application No. 2013/542309, and Japanese National Publication of International Patent Application No. 2013/542310.

The hydrocarbon surfactant may be a surfactant having a hydrophilic moiety and a hydrophobic moiety on the same molecule. These may be cationic, nonionic or anionic.

Cationic hydrocarbon surfactants usually have a positively charged hydrophilic moiety such as alkylated ammonium halide such as alkylated ammonium bromide and a hydrophobic moiety such as long chain fatty acids.

Anionic hydrocarbon surfactants usually have a hydrophilic moiety such as a carboxylate, a sulfonate or a sulfate and a hydrophobic moiety that is a long chain hydrocarbon moiety such as alkyl.

The nonionic hydrocarbon surfactant is usually free from charged groups and has hydrophobic moieties that are long chain hydrocarbons. The hydrophilic moiety of the nonionic surfactant contains water-soluble functional groups such as chains of ethylene ether derived from polymerization with ethylene oxide.

### Examples of nonionic hydrocarbon surfactants

Polyoxyethylene alkyl ether, polyoxyethylene alkyl phenyl ether, polyoxyethylene alkyl ester, sorbitan alkyl ester, polyoxyethylene sorbitan alkyl ester, glycerol ester, and derivatives thereof.

Specific examples of polyoxyethylene alkyl ethers: polyoxyethylene lauryl ether, polyoxyethylene cetyl ether, polyoxyethylene stearyl ether, polyoxyethylene oleyl ether, polyoxyethylene behenyl ether, and the like.

Specific examples of polyoxyethylene alkyl phenyl ether: polyoxyethylene nonylphenyl ether, polyoxyethylene octylphenyl ether, and the like.

Specific examples of polyoxyethylene alkyl esters: polyethylene glycol monolaurylate, polyethylene glycol monooleate, polyethylene glycol monostearate, and the like.

Specific examples of sorbitan alkyl ester: polyoxyethylene sorbitan monolaurate, polyoxyethylene sorbitan monopalmitate, polyoxyethylene sorbitan monostearate, polyoxyethylene sorbitan monooleate, and the like.

Specific examples of polyoxyethylene sorbitan alkyl ester: polyoxyethylene sorbitan monolaurate, polyoxyethylene sorbitan monopalmitate, polyoxyethylene sorbitan monostearate, and the like.

Specific examples of glycerol ester: glycerol monomyristate, glycerol monostearate, glycerol monooleate, and the like.

Specific examples of the derivatives: polyoxyethylene alkylamine, polyoxyethylene alkyl phenyl-formaldehyde condensate, and polyoxyethylene alkyl ether phosphate.

The ethers and esters may have an HLB value of 10 to 18.

Examples of nonionic hydrocarbon surfactants include Triton (R) X series (X15, X45, X100, etc.), Tergitol(R) 15-S series, and Tergitol(R) manufactured by Dow Chemical Company, TMN series (TMN-6, TMN-10, TMN-100, etc.), Tergitol(R) L series, Pluronic(R) R series (31R1, 17R2, 10R5, 25R4 (m to 22, n to 23), and Iconol(R) TDA series (TDA-6, TDA-9, TDA-10) manufactured by BASF.

Examples of the anionic hydrocarbon surfactant include Versatic(R) 10 manufactured by Resolution Performance Products, and Avanel S series (S-70, S-74, etc.) manufactured by BASF.

Examples of the hydrocarbon surfactant include an anionic surfactant represented by R^{z}-L-M, wherein R^{z} is a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; L is -ArSO₃⁻, -SO₃⁻, -SO₄-, -PO₃⁻ or COO⁻, and, M is, H, a metal atom, NR^{5Z}₄, imidazolium optionally having a substituent, pyridinium optionally having a substituent, or phosphonium optionally having a substituent, wherein R^{5Z} is H or an organic group, and -ArSO₃⁻ is an aryl sulfonate. Specific examples thereof include a compound represented by CH₃-(CH₂)ₙ-L-M, wherein n is an integer of 6 to 17, as represented by lauryl acid and lauryl sulfate (dodecylsulfate), and L and M are the same as described above.

Mixtures of those in which R^{Z} is an alkyl group having 12 to 16 carbon atoms and L-M is sulfate can also be used.

Further, examples of other compounds having surfactant function include an anionic surfactant represented by R^{6Z}(-L-M)₂, wherein R^{6Z} is a linear or branched alkylene group having 1 or more carbon atoms and optionally having a substituent, or a cyclic alkylene group having 3 or more carbon atoms and optionally having a substituent, and optionally contains a monovalent or divalent heterocycle or optionally forms a ring when having 3 or more carbon atoms; L is -ArSO₃⁻, -SO₃⁻, -SO₄-, -PO₃⁻ or COO⁻, and, M is, H, a metal atom, NR^{5Z}₄, imidazolium optionally having a substituent, pyridinium optionally having a substituent, or phosphonium optionally having a substituent, wherein R^{5Z} is H or an organic group, and -ArSO₃⁻ is an aryl sulfonate.

Examples of the hydrocarbon surfactant include an anionic surfactant represented by R^{7Z}(-L-M)₃, wherein R^{7Z} is a linear or branched alkylidine group having 1 or more carbon atoms and optionally having a substituent, or a cyclic alkylidine group having 3 or more carbon atoms and optionally having a substituent, and optionally contains a monovalent or divalent heterocycle or optionally forms a ring when having 3 or more carbon atoms; L is -ArSO₃⁻, -SO₃⁻, -SO₄-, -PO₃⁻ or COO⁻, and, M is, H, a metal atom, NR^{5Z}₄, imidazolium optionally having a substituent, pyridinium optionally having a substituent, or phosphonium optionally having a substituent, R^{5Z} is H or an organic group; and -ArSO₃⁻ is an aryl sulfonate.

R^{5Z} is preferably H or an alkyl group, more preferably H or an alkyl group having 1 to 10 carbon atoms, and still more preferably H or an alkyl group having 1 to 4 carbon atoms.

In the present disclosure, unless otherwise specified, the term "substituent" means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

Further, examples of the hydrocarbon surfactant include a siloxane hydrocarbon surfactant. Examples of the siloxane hydrocarbon surfactant include those described in Silicone Surfactants, R. M. Hill, Marcel Dekker, Inc., ISBN: 0-8247-00104. The structure of the siloxane hydrocarbon surfactant includes defined hydrophobic and hydrophilic moieties. The hydrophobic moiety contains one or more dihydrocarbyl siloxane units, where the substituents on the silicone atoms are completely hydrocarbon.

In the sense that the carbon atoms of the hydrocarbyl groups are fully substituted with hydrogen atoms where they can be substituted by halogen such as fluorine, these siloxane hydrocarbon surfactants can also be regarded as hydrocarbon surfactants, i.e. the monovalent substituents on the carbon atoms of the hydrocarbyl groups are hydrogen.

The hydrophilic moiety of the siloxane hydrocarbon surfactant may contain one or more polar moieties including ionic groups such as sulfate, sulfonate, phosphonate, phosphate ester, carboxylate, carbonate, sulfosuccinate, taurate (as the free acid, a salt or an ester), phosphine oxides, betaine, betaine copolyol, or quaternary ammonium salts. Ionic hydrophobic moieties may also contain ionically functionalized siloxane grafts.

Examples of such siloxane hydrocarbon surfactants include polydimethylsiloxane-graft-(meth)acrylic acid salts, polydimethylsiloxane-graft-polyacrylate salts, and polydimethylsiloxane-grafted quaternary amines.

The polar moieties of the hydrophilic moiety of the siloxane hydrocarbon surfactant may contain nonionic groups formed by polyethers, such as polyethylene oxide (PEO), and mixed polyethylene oxide/polypropylene oxide polyethers (PEO/PPO); mono- and disaccharides; and water-soluble heterocycles such as pyrrolidinone. The ratio of ethylene oxide to propylene oxide (EO/PO) may be varied in mixed polyethylene oxide/propylene oxide polyethers.

The hydrophilic moiety of the siloxane hydrocarbon surfactant may also contain a combination of ionic and nonionic moieties. Such moieties include, for example, ionically end-functionalized or randomly functionalized polyether or polyol. Preferred for the practice of the present disclosure is a siloxane having a nonionic moiety, i.e., a nonionic siloxane surfactant.

The arrangement of the hydrophobic and hydrophilic moieties of the structure of a siloxane hydrocarbon surfactant may take the form of a diblock polymer (AB), triblock polymer (ABA), wherein the "B" represents the siloxane portion of the molecule, or a multi-block polymer. Alternatively, the siloxane surfactant may include a graft polymer.

The siloxane hydrocarbon surfactants also include those disclosed in U.S. Patent No. 6,841,616.

Examples of the siloxane-based anionic hydrocarbon surfactant include Noveon(R) by Lubrizol Advanced Materials, Inc. and SilSense^{™} PE-100 silicone and SilSense^{™} CA-1 silicone available from Consumer Specialties.

Examples of the anionic hydrocarbon surfactant also include a sulfosuccinate surfactant Lankropol(R) K8300 by Akzo Nobel Surface Chemistry LLC.

Examples of the sulfosuccinate surfactant include sodium diisodecyl sulfosuccinate (Emulsogen(R) SB10 by Clariant) and sodium diisotridecyl sulfosuccinate (Polirol(R) TR/LNA by Cesapinia Chemicals).

Examples of the hydrocarbon surfactants also include PolyFox(R) surfactants by Omnova Solutions, Inc. (PolyFox^{™} PF-156A, PolyFox^{™} PF-136A, etc.).

The hydrocarbon surfactant is preferably an anionic hydrocarbon surfactant. The anionic hydrocarbon surfactant used may be those described above, including the following preferred anionic hydrocarbon surfactants.

Examples of the anionic hydrocarbon surfactant includes a compound (α) represented by the following formula (α):

R¹⁰⁰-COOM (α)

wherein R¹⁰⁰ is a monovalent organic group containing one or more carbon atoms; and M is H, a metal atom, NR¹⁰¹₄, imidazolium optionally having a substituent, pyridinium optionally having a substituent, or phosphonium optionally having a substituent, wherein R¹⁰¹ is H or an organic group and may be the same or different. The alkyl group is preferable as the organic group of R¹⁰¹. R¹⁰¹ is preferably H or an organic group having 1 to 10 carbon atoms, more preferably H or an organic group having 1 to 4 carbon atoms, and still more preferably H or an alkyl group having 1 to 4 carbon atoms.

From the viewpoint of surfactant function, the number of carbon atoms in R¹⁰⁰ is preferably 2 or more, and more preferably 3 or more. From the viewpoint of water-solubility, the number of carbon atoms in R¹⁰⁰ is preferably 29 or less, and more preferably 23 or less.

Examples of the metal atom as M include alkali metals (Group 1) and alkaline earth metals (Group 2), and preferred is Na, K, or Li. M is preferably H, a metal atom, or NR¹⁰¹₄, more preferably H, an alkali metal (Group 1), an alkaline earth metal (Group 2), or NR¹⁰¹₄, still more preferably H, Na, K, Li, or NH₄, further preferably Na, K, or NH₄, particularly preferably Na or NH₄, and most preferably NH₄.

Examples of the compound (α) include an anionic surfactant represented by R¹⁰²-COOM, wherein R¹⁰² is a linear or branched, alkyl group, alkenyl group, alkylene group, or alkenylene group having 1 or more carbon atoms and optionally having a substituent, or a cyclic alkyl group, alkenyl group, alkylene group, or alkenylene group having 3 or more carbon atoms and optionally having a substituent, each of which optionally contains an ether bond; when having 3 or more carbon atoms, R¹⁰² optionally contains a monovalent or divalent heterocycle, or optionally forms a ring; and M is as described above. Specific examples thereof include a compound represented by CH₃-(CH₂)ₙ-COOM, wherein n is an integer of 2 to 28, and M is as described above.

From the viewpoint of emulsion stability, the compound (α) may be preferably free from a carbonyl group which is not in a carboxyl group. Preferred examples of the hydrocarbon-containing surfactant free from a carbonyl group include a compound of the following formula (A):

R¹⁰³-COO-M (A)

wherein R¹⁰³ is an alkyl group, an alkenyl group, an alkylene group, or an alkenylene group, each of which optionally contains an ether bond; M is H, a metal atom, NR¹⁰¹₄, imidazolium optionally having a substituent, pyridinium optionally having a substituent, or phosphonium optionally having a substituent; and R¹⁰¹ is the same or different and is H or an organic group.

In the formula (A), R¹⁰³ is preferably an alkyl group or an alkenyl group, each of which optionally contains an ether group. The alkyl group or alkenyl group for R¹⁰³ may be linear or branched. The number of carbon atoms in R¹⁰³ is, but is not limited to, 2 to 29.

When the alkyl group is linear, the number of carbon atoms in R¹⁰³ is preferably 3 to 29, and more preferably 5 to 23. When the alkyl group is branched, the number of carbon atoms in R¹⁰³ is preferably 5 to 35, and more preferably 11 to 23.

When the alkenyl group is linear, the number of carbon atoms in R¹⁰³ is preferably 2 to 29, and more preferably 9 to 23. When the alkenyl group is branched, the number of carbon atoms in R¹⁰³ is preferably 4 to 29, and more preferably 9 to 23.

Examples of the alkyl group and the alkenyl group include a methyl group, an ethyl group, an isobutyl group, a t-butyl group, and a vinyl group.

Examples of the compound (α) (carboxylic acid-type hydrocarbon surfactant) include butylic acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)linolenic acid, eleostearic acid, arachidic acid, 8,11-eicosadienoic acid, mead acid, arachidonic acid, behenic acid, lignoceric acid, nervonic acid, cerotic acid, montanic acid, melissic acid, crotonic acid, myristoleic acid, palmitoleic acid, sapienoic acid, oleic acid, elaidic acid, vaccenic acid, gadoleic acid, eicosenoic acid, erucic acid, nervonic acid, linoleic acid, eicosadienoic acid, docosadienoic acid, linolenic acid, pinolenic acid, α-eleostearic acid, β-eleostearic acid, mead acid, dihomo-γ-linolenic acid, eicosatrienoic acid, stearidonic acid, arachidonic acid, eicosatetraenoic acid, adrenic acid, boseopentaenoic acid, eicosapentaenoic acid, osbond acid, sardine acid, tetracosapentaenoic acid, docosahexaenoic acid, nisinic acid, and salts thereof.

Particularly, preferred is at least one selected from the group consisting of lauric acid, capric acid, myristic acid, pentadecylic acid, palmitic acid, and salts thereof.

Examples of the salts include, but are not limited to, those in which hydrogen of the carboxyl group is a metal atom, NR¹⁰¹₄, imidazolium optionally having a substituent, pyridinium optionally having a substituent, or phosphonium optionally having a substituent as M in the formula described above.

The surfactant (α) (carboxylic acid-type hydrocarbon surfactant) is preferably at least one selected from the group consisting of lauric acid, capric acid, myristic acid, pentadecylic acid, palmitic acid, and salts thereof, and still preferably lauric acid and salts thereof, particularly preferably lauric acid salts, and most preferably sodium laurate and ammonium laurate, because particles having a small average primary particle size can be obtained by polymerization, a large number of particles can be generated during polymerization to efficiently produce PTFE.

Preferred examples of the hydrocarbon surfactant include a surfactant represented by the following general formula (1) (hereinafter, also referred to as "surfactant (1)"): 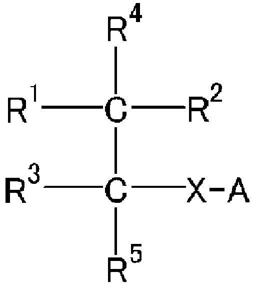 wherein R¹ to R⁵ each represent H or a monovalent substituent, with the proviso that at least one of R¹ and R³ represents a group represented by the general formula: -Y-R⁶ and at least one of R² and R⁵ represents a group represented by the general formula: -X-A or a group represented by the general formula: -Y-R⁶;
X is the same or different at each occurrence and represents a divalent linking group or a bond;
   A is the same or different at each occurrence and represents -COCM, -SO₃M, or -OSO₃M, wherein M is H, a metal atom,- NR⁷₄, imidazolium optionally having a substituent, pyridinium optionally having a substituent, or phosphonium optionally having a substituent, and R⁷ is H or an organic group;
Y is the same or different at each occurrence and represents a divalent linking group selected from the group consisting of -S(=O)₂-, -O-, -COO-, -OCO-, -CONR⁸-, and -NR⁸CO-, or a bond, wherein R⁸ is H or an organic group;
   R⁶ is the same or different at each occurrence and represents an alkyl group having 1 or more carbon atoms and optionally containing, between carbon atoms, at least one selected from the group consisting of a carbonyl group, an ester group, an amide group, and a sulfonyl group; and
any two of R¹ to R⁵ optionally bind to each other to form a ring.

The surfactant (1) will be described.

In the formula, R¹ to R⁵ each represent H or a monovalent substituent, with the proviso that at least one of R¹ and R³ represents a group represented by the general formula: -Y-R⁶ and at least one of R² and R⁵ represents a group represented by the general formula: -X-A or a group represented by the general formula: -Y-R⁶. Any two of R¹ to R⁵ optionally bind to each other to form a ring.

The substituent which may be contained in the alkyl group for R¹ is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for R¹ is preferably free from a carbonyl group. In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R¹ is preferably a linear or branched alkyl group having 1 to 10 carbon atoms and optionally having a substituent or a cyclic alkyl group having 3 to 10 carbon atoms and optionally having a substituent, more preferably a linear or branched alkyl group having 1 to 10 carbon atoms and free from a carbonyl group or a cyclic alkyl group having 3 to 10 carbon atoms and free from a carbonyl group, still more preferably a linear or branched alkyl group having 1 to 10 carbon atoms and not having a substituent, further preferably a linear or branched alkyl group having 1 to 3 carbon atoms and not having a substituent, particularly preferably a methyl group (-CH₃) or an ethyl group (-C₂H₅), and most preferably a methyl group (-CH₃) .

The monovalent substituent is preferably a group represented by the general formula: -Y-R⁶, a group represented by the general formula: - X-A, -H, and a C₁₋₂₀ alkyl group optionally having a substituent, -NH₂,-NHR⁹ (wherein R⁹ is an organic group), -OH, -COOR⁹ (wherein R⁹ is an organic group) or -OR⁹ (wherein R⁹ is an organic group). The alkyl group preferably has 1 to 10 carbon atoms.

R⁹ is preferably a C₁₋₁₀ alkyl group or a C₁₋₁₀ alkylcarbonyl group, and more preferably a C₁₋₄ alkyl group or a C₁₋₄ alkylcarbonyl group.

In the formula, X is the same or different at each occurrence and represents a divalent linking group or a bond.

When R⁶ does not contain any of a carbonyl group, an ester group, an amide group, and a sulfonyl group, X is preferably a divalent linking group containing at least one selected from the group consisting of a carbonyl group, an ester group, an amide group, and a sulfonyl group.

X is preferably a divalent linking group containing at least one bond selected from the group consisting of -CO-, -S(=O)₂-, -O-,-COO-, -OCO-, -S (=O)₂-O-, -O-S(=O)₂-, -CONR⁸-, and -NR⁸CO-, a C₁₋₁₀ alkylene group, or a bond. R⁸ represents H or an organic group.

The alkyl group is preferable as the organic group in R⁸. R⁸ is preferably H or a C₁₋₁₀ organic group, more preferably H or a C₁₋₄ organic group, still more preferably H or a C₁₋₄ alkyl group, and further preferably H.

In the formula, A is the same or different at each occurrence and represents -COCM, -SO₃M, or -OSO₃M, wherein M is H, a metal atom, - NR⁷₄, imidazolium optionally having a substituent, pyridinium optionally having a substituent, or phosphonium optionally having a substituent, and R⁷ is H or an organic group; and the four R⁷ may be the same as or different from each other. In a preferred embodiment, in the general formula (1), A is - COCM.

The alkyl group is preferable as the organic group in R⁷. R⁷ is preferably H or a C₁₋₁₀ organic group, more preferably H or a C₁₋₄ organic group, and still more preferably H or a C₁₋₄ alkyl group.

Examples of the metal atom include alkali metals (Group 1) and alkaline earth metals (Group 2), and preferred is Na, K, or Li.

M is preferably H, a metal atom, or NR⁷₄, more preferably H, an alkali metal (Group 1), an alkaline earth metal (Group 2), or NR⁷₄, still more preferably H, Na, K, Li, or NH₄, further preferably Na, K, or NH₄, particularly preferably Na or NH₄, and most preferably NH₄.

In the formula, Y is the same or different at each occurrence and represents a divalent linking group selected from the group consisting of -S(=O)₂-, -O-,-COO-, -OCO-, -CONR⁸-, and -NR⁸CO-, or a bond, wherein R⁸ is H or an organic group.

Y is preferably a divalent linking group selected from the group consisting of a bond, -O-,-COO-, -OCO-, -CONR⁸-, and -NR⁸CO-, more preferably a divalent linking group selected from the group consisting of a bond, - COO-, and -OCO-.

The alkyl group is preferable as the organic group in R⁸. R⁸ is preferably H or a C₁₋₁₀ organic group, more preferably H or a C₁₋₄ organic group, still more preferably H or a C₁₋₄ alkyl group, and further preferably H.

In the formula, R⁶ is the same or different at each occurrence and represents an alkyl group having 1 or more carbon atoms and optionally containing, between carbon atoms, at least one selected from the group consisting of a carbonyl group, an ester group, an amide group, and a sulfonyl group. The organic group represented by R⁶ preferably has 2 or more carbon atoms and preferably has 20 or less carbon atoms, more preferably 2 to 20 carbon atoms, and still more preferably 2 to 10 carbon atoms.

When the alkyl group for R⁶ has 2 or more carbon atoms, the alkyl group may contain one or two or more of, between carbon atoms, at least one selected from the group consisting of a carbonyl group, an ester group, an amide group, and a sulfonyl group, but the alkyl group does not contain these groups at both ends. In the alkyl group for R⁶, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R⁶ is preferably
a group represented by the general formula: -R¹⁰-CO-R¹¹,
a group represented by the general formula: -R¹⁰-COO-R¹¹,
a group represented by the general formula: -R¹¹,
a group represented by the general formula: -R¹⁰-NR⁸CO-R¹¹, or
a group represented by the general formula: -R¹⁰-CONR⁸-R¹¹,
wherein R⁸ represents H or an organic group; R¹⁰ is an alkylene group; and
R¹¹ is an alkyl group optionally having a substituent.

R⁶ is more preferably a group represented by the general formula: - R¹⁰-CO-R¹¹.

The alkyl group is preferable as the organic group in R⁸. R⁸ is preferably H or a C₁₋₁₀ organic group, more preferably H or a C₁₋₄ organic group, still more preferably H or a C₁₋₄ alkyl group, and further preferably H.

The alkylene group for R¹⁰ preferably has 1 or more, and more preferably 3 or more carbon atoms, and preferably 20 or less, more preferably 12 or less, still more preferably 10 or less, and particularly preferably 8 or less carbon atoms. Further, the alkylene group for R¹⁰ preferably has 1 to 20, more preferably 1 to 10, and still more preferably 3 to 10 carbon atoms.

The alkyl group for R¹¹ may have 1 to 20 carbon atoms, and preferably has 1 to 15, more preferably 1 to 12, still more preferably 1 to 10, further preferably 1 to 8, still further preferably 1 to 6, still much more preferably 1 to 3, particularly preferably 1 or 2, and most preferably 1 carbon atom. The alkyl group for R¹¹ preferably consists only of primary carbons, secondary carbons, and tertiary carbons, and particularly preferably consists only of primary carbons and secondary carbons. In other words, R¹¹ is preferably a methyl group, an ethyl group, an n-propyl group, or an isopropyl group, and most preferably a methyl group.

In a preferred embodiment, in the general formula (1), at least one of R² and R⁵ is a group represented by the general formula: -X-A, and A is -COOM.

The surfactant (1) is preferably a compound represented by the following general formula (1-1), a compound represented by the following general formula (1-2), or a compound represented by the following general formula (1-3), more preferably a compound represented by the general formula (1-1) or a compound represented by the general formula (1-2): 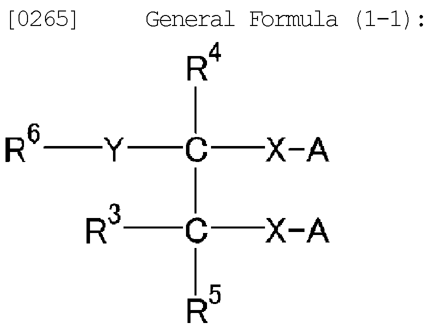 wherein R³ to R⁶, X, A, and Y are defined as described above. 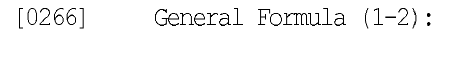 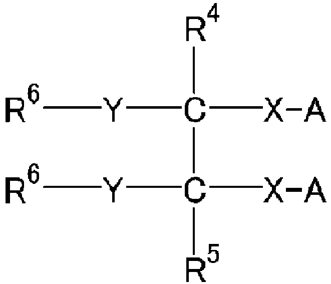 wherein R⁴ to R⁶, X, A, and Y are defined as described above. 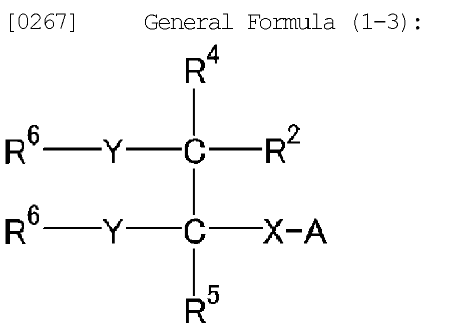 wherein R², R⁴ to R⁶, X, A, and Y are defined as described above.

The group represented by the general formula: -X-A is preferably

-COOM,

-R¹²COOM,

-SO₃M,

-OSO₃M, -R¹²SO₃M,

-R¹²OSO₃M,

-OCO-R¹²-COOM,

-OCO-R¹²-SO₃M,

-OCO-R¹²-OSO₃M

-COO-R¹²-COOM,

-COO-R¹²-SO₃M,

-COO-R¹²-OSO₃M,

-CONR⁸-R¹²-COOM,

-CONR⁸-R¹²-SO₃M,

-CONR⁸-R¹²-OSO₃M,

-NR⁸CO-R¹²-COOM,

-NR⁸CO-R¹²-SO₃M,

-NR⁸CO-R¹²-OSO₃M,

-OS(=O)₂-R¹²-COOM,

-OS (=O)₂-R¹²-SO₃M, or

-OS (=O)₂-R1²-OSO₃M

wherein R⁸ and M are defined as described above; and R¹² is a C₁₋₁₀ alkylene group.

In the alkylene group for R¹², 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The group represented by the general formula: -Y-R⁶ is preferably
a group represented by the general formula: -R¹⁰-COR¹¹,
a group represented by the general formula: -OCO-R¹⁰-CO-R¹¹,
a group represented by the general formula: -COO-R¹⁰-CO-R¹¹,
a group represented by the general formula: -OCO-R¹⁰-COO-R¹¹,
a group represented by the general formula: -COO-R¹¹,
a group represented by the general formula: -NR⁸CO-R¹⁰-CO-R¹¹, or
a group represented by the general formula: -CONR⁸-R¹⁰-NR⁸CO-R¹¹,
wherein R⁸, R¹⁰, and R¹¹ are defined as described above.

In the formula, R⁴ and R⁵ are preferably independently H or a C₁₋₄ alkyl group.

In the alkyl group for R⁴ and R⁵, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R³ in the general formula (1-1) is preferably H or a C₁₋₂₀ alkyl group optionally having a substituent, more preferably H or a C₁₋₂₀ alkyl group having no substituent, and still more preferably H.

In the alkyl group for R³, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R² in the general formula (1-3) is preferably H, OH, or a C₁₋₂₀ alkyl group optionally having a substituent, more preferably H, OH, or a C₁₋₂₀ alkyl group having no substituent, and still more preferably H or OH.

In the alkyl group for R², 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

Examples of the hydrocarbon surfactant include a surfactant (1-0A) represented by the following formula (1-0A): 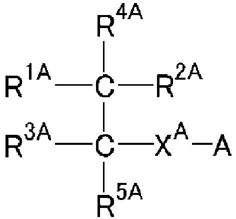 wherein R^{1A} to R^{5A} are H, a monovalent hydrocarbon group optionally containing, between carbon atoms, an ester group, or a group represented by general formula: -X^{A}-A, with the proviso that at least one of R^{2A} and R^{5A} represents a group represented by the general formula: -X^{A}-A;
X^{A} is the same or different at each occurrence and represents a divalent hydrocarbon group or a bond;
A is the same or different at each occurrence and represents -COOM, wherein M is H, a metal atom,- NR⁷₄, imidazolium optionally having a substituent, pyridinium optionally having a substituent, or phosphonium optionally having a substituent, and R⁷ is H or an organic group; and any two of R^{1A} to R^{5A} optionally bind to each other to form a ring.

In the general formula (1-0A), in R^{1A} to R^{5A}, the monovalent hydrocarbon group optionally containing, between carbon atoms, an ester group preferably has 1 to 50 carbon atoms, and more preferably 5 to 20 carbon atoms. Any two of R^{1A} to R^{5A} optionally bind to each other to form a ring. The monovalent hydrocarbon group optionally containing, between carbon atoms, an ester group is preferably an alkyl group.

In the formula, in X^{A}, the number of carbon atoms in the divalent hydrocarbon group is 1 to 50, and more preferably 5 to 20. Examples of the divalent hydrocarbon group include an alkylene group and an alkanediyl group, and preferred is an alkylene group.

In the general formula (1-0A), any one of R^{2A} and R^{5A} is preferably a group represented by the formula: -X^{A}-A, and more preferably, R^{2A} is a group represented by the formula: -X^{A}-A.

In a preferred embodiment, in the general formula (1-0A), R^{2A} is a group represented by the general formula: -X^{A}-A, and R^{1A}, R^{3A}, R^{4A}, and R^{5A} are H. In this case, X^{A} is preferably a bond or an alkylene group having 1 to 5 carbon atoms.

Another preferred embodiment is an embodiment in which in general formula (1-0A), R^{2A} is a group represented by general formula: -X^{A}-A, R^{1A} and R^{3A} are groups represented by -Y^{A}-R⁶, Y^{A} is the same or different at each occurrence, and is -COO-, -OCO-, or a bond, and R⁶ is the same or different at each occurrence, and is an alkyl group having 1 or more carbon atoms. In this case, it is preferable that R^{4A} and R^{5A} are H.

Examples of the hydrocarbon surfactant represented by the general formula (1-0A) include glutaric acid or a salt thereof, adipic acid or a salt thereof, pimelic acid or a salt thereof, suberic acid or a salt thereof, azelaic acid or a salt thereof, and sebacic acid or a salt thereof.

The aliphatic carboxylic acid-type hydrocarbon surfactant represented by the general formula (1-0A) may be a 2-chain 2-hydrophilic type synthetic surfactant, and examples of the gemini type surfactant include geminiserf (CHUKYO YUSHI CO.,LTD.), Gemsurf α142 (carbon number: 12, lauryl group), Gemsurf α102 (carbon number: 10), and Gemsurf α182 (carbon number: 14).

Examples of the hydrocarbon surfactant also include a hydrocarbon surfactant having one or more carbonyl groups which are not in a carboxyl group.

Further, a hydrocarbon surfactant obtained by subjecting the hydrocarbon surfactant having one or more carbonyl groups which are not in a carboxyl group to a radical treatment or an oxidation treatment may also be used.

The radical treatment may be any treatment that generates radicals in the hydrocarbon surfactant having one or more carbonyl groups which are not in a carboxyl group, for example, a treatment in which deionized water and the hydrocarbon surfactant are added to the reactor, the reactor is hermetically sealed, the inside of the reactor is replaced with nitrogen, the reactor is heated and pressurized, a polymerization initiator is charged, the reactor is stirred for a certain time, and then the reactor is depressurized to the atmospheric pressure, and the reactor is cooled. The oxidation treatment is a treatment in which an oxidizing agent is added to a hydrocarbon surfactant having one or more carbonyl groups which are not in a carboxyl group. Examples of the oxidizing agent include oxygen, ozone, hydrogen peroxide solution, manganese(IV) oxide, potassium permanganate, potassium dichromate, nitric acid, and sulfur dioxide. In order to promote the radical treatment or oxidation treatment, the radical treatment or oxidation treatment may be performed in a pH-adjusted aqueous solution. The pH of the aqueous solution for performing the radical treatment or the oxidation treatment is preferably less than 7, and the pH of the aqueous solution can be adjusted using sulfuric acid, nitric acid, hydrochloric acid, or the like.

The hydrocarbon surfactant having one or more carbonyl groups which are not in a carboxyl group is preferably a surfactant represented by the formula: R^{x}-X^{x}, wherein R^{x} is a fluorine-free organic group having one or more carbonyl groups which are not in a carboxyl group and having 1 to 2,000 carbon atoms, X^{x} is, -OSO₃X^{X1}, - COOX^{X1}, or -SO₃X^{X1}, wherein X^{X1} is H, a metal atom, NR^{X1}₄, imidazolium optionally having a substituent, pyridinium optionally having a substituent, or phosphonium optionally having a substituent, wherein R^{X1} is H or an organic group and is the same or different. R^{X} preferably has 500 or less carbon atoms, more preferably 100 or less, still more preferably 50 or less, and further preferably 30 or less. The alkyl group is preferable as the organic group of R^{X1}. R^{X1} is preferably H or an organic group having 1 to 10 carbon atoms, more preferably H or an organic group having 1 to 4 carbon atoms, and still more preferably H or an alkyl group having 1 to 4 carbon atoms.

The hydrocarbon surfactant is more preferably at least one selected from the group consisting of a surfactant (a) represented by the following formula (a): 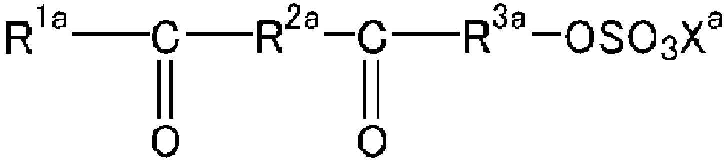 wherein R^{1a} is a linear or branched alkyl group having 1 or more carbon atoms or a cyclic alkyl group having 3 or more carbon atoms, with a hydrogen atom bonded to a carbon atom therein being optionally replaced by a hydroxy group or a monovalent organic group containing an ester bond, optionally contains a carbonyl group when having 2 or more carbon atoms, and optionally contains a monovalent or divalent heterocycle or optionally forms a ring when having 3 or more carbon atoms; R^{2a} and R^{3a} are each independently a single bond or a divalent linking group; the total number of carbon atoms of R^{1a}, R^{2a}, and R^{3a} is 6 or more; X^{a} is H, a metal atom, NR^{4a} ₄, imidazolium optionally having a substituent, pyridinium optionally having a substituent, or phosphonium optionally having a substituent, wherein R^{4a} is H or an organic group and is the same or different; and any two of R^{1a}, R^{2a}, and R^{3a} optionally bind to each other to form a ring;
a surfactant (b) represented by the following formula (b): 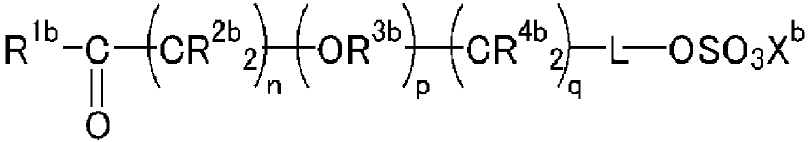 wherein R^{1b} is a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; R^{2b} and R^{4b} are each independently H or a substituent; R^{3b} is an alkylene group having 1 to 10 carbon atoms and optionally having a substituent; n is an integer of 1 or more; p and q are each independently an integer of 0 or more; X^{b} is H, a metal atom, NR^{5b}₄, imidazolium optionally having a substituent, pyridinium optionally having a substituent, or phosphonium optionally having a substituent, wherein R^{5b} is H or an organic group and is the same or different; any two of R^{1b}, R^{2b}, R^{3b}, and R^{4b} optionally bind to each other to form a ring; L is a single bond, -CO₂-B-*, -OCO-B-*, - CONR^{6b}-B-*, -NR^{6b}CO-B-*, or -CO- other than the carbonyl groups in -CO₂-B-, -OCO-B-, -CONR^{6b}-B-, and -NR^{6b}CO-B-, wherein B is a single bond or an alkylene group having 1 to 10 carbon atoms and optionally having a substituent, R^{6b} is H or an alkyl group having 1 to 4 carbon atoms and optionally having a substituent; and * indicates the side bonded to -OSO₃X^{b} in the formula;
a surfactant (c) presented by the following formula (c): 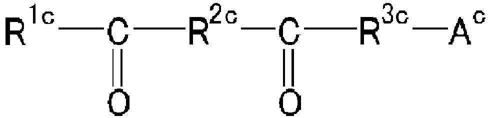 wherein R^{1c} is a linear or branched alkyl group having 1 or more carbon atoms or a cyclic alkyl group having 3 or more carbon atoms, with a hydrogen atom bonded to a carbon atom therein being optionally replaced by a hydroxy group or a monovalent organic group containing an ester bond, optionally contains a carbonyl group when having 2 or more carbon atoms, and optionally contains a monovalent or divalent heterocycle or optionally forms a ring when having 3 or more carbon atoms; R^{2c} and R^{3c} are each independently a single bond or a divalent linking group; the total number of carbon atoms of R^{1c}, R^{2c}, and R^{3c} is 5 or more; A^{c} is -COOX^{c} or - SO₃X^{c}, wherein X^{c} is H, a metal atom, NR^{4c}₄, imidazolium optionally having a substituent, pyridinium optionally having a substituent, or phosphonium optionally having a substituent, wherein R^{4c} is H or an organic group and may be the same or different; and any two of R^{1c}, R^{2c}, and R^{3c} optionally bind to each other to form a ring; and
a surfactant (d) represented by the following formula (d): 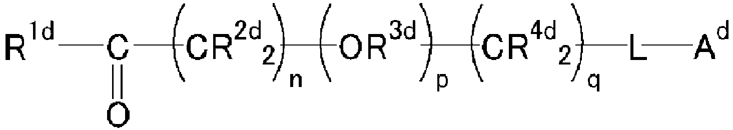 wherein R^{1d} is a linear or branched alkyl group having 1 or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; R^{2d} and R^{4d} are each independently H or a substituent; R^{3d} is an alkylene group having 1 to 10 carbon atoms and optionally having a substituent; n is an integer of 1 or more; p and q are each independently an integer of 0 or more; A^{d} is -SO₃X^{d} or -COOX^{d}, wherein X^{d} is H, a metal atom, NR^{5d}₄, imidazolium optionally having a substituent, pyridinium optionally having a substituent, or phosphonium optionally having a substituent, wherein R^{5d} is H or an organic group and may be the same or different; any two of R^{1d}, R^{2d}, R^{3d}, and R^{4d} optionally bind to each other to form a ring; L is a single bond, -CO₂-B-*, -OCO-B-*, - CONR^{6d}-B-*, -NR^{6d}O-B-*, or -CO- other than the carbonyl groups in -CO₂-B-, -OCO-B-, - CONR^{6d}-B-, and -NR^{6d}O-B-, wherein B is a single bond or an alkylene group having 1 to 10 carbon atoms and optionally having a substituent, R^{6d} is H or an alkyl group having 1 to 4 carbon atoms and optionally having a substituent; and * indicates the side bonded to A^{d} in the formula.

The surfactant (a) will be described.

In the formula (a), R^{1a} is a linear or branched alkyl group having 1 or more carbon atoms or a cyclic alkyl group having 3 or more carbon atoms.

When having 3 or more carbon atoms, the alkyl group optionally contains a carbonyl group (-C(=O)-) between two carbon atoms. When having 2 or more carbon atoms, the alkyl group optionally contains the carbonyl group at an end of the alkyl group. In other words, acyl groups such as an acetyl group represented by CH₃-C(=O)- are also included in the alkyl group.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1a}, a divalent heterocycle may be present between two carbon atoms, or a divalent heterocycle may be present at an end and bind to -C(=O)-, or a monovalent heterocycle may be present at an end of the alkyl group.

In the present disclosure, "the number of carbon atoms" in the alkyl group includes the number of carbon atoms constituting the carbonyl groups and the number of carbon atoms constituting the heterocycles. For example, the number of carbon atoms in the group represented by CH₃-C(=O)-CH₂- is 3, the number of carbon atoms in the group represented by CH₃-C (=O)-C₂H₄-C(=O)-C₂H₄- is 7, and the number of carbon atoms in the group represented by CH₃-C(=O)- is 2.

In the alkyl group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{101a}, wherein R^{101a} is an alkyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula, R^{2a} and R^{3a} are each independently a single bond or a divalent linking group.

Preferably, R^{2a} and R^{3a} are each independently a single bond, or a linear or branched alkylene group having 1 or more carbon atoms, or a cyclic alkylene group having 3 or more carbon atoms.

The alkylene group constituting R^{2a} and R^{3a} is preferably free from a carbonyl group.

In the alkylene group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{102a}, wherein R^{102a} is an alkyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of R^{1a}, R^{2a}, and R^{3a} is 6 or more. The total number of carbon atoms is preferably 8 or more, more preferably 9 or more, still more preferably 10 or more, and preferably 20 or less, more preferably 18 or less, still more preferably 15 or less.

Any two of R^{1a}, R^{2a}, and R^{3a} optionally bind to each other to form a ring.

In the formula (a), X^{a} is H, a metal atom, NR^{4a}₄, imidazolium optionally having a substituent, pyridinium optionally having a substituent, or phosphonium optionally having a substituent, and R^{4a} is H or an organic group. The four R^{4a} may be the same as or different from each other. The alkyl group is preferable as the organic group in R^{4a}. R^{4a} is preferably H or an organic group having 1 to 10 carbon atoms, more preferably H or an organic group having 1 to 4 carbon atoms, and still more preferably H or an alkyl group having 1 to 4 carbon atoms. Examples of the metal atom include monovalent and divalent metal atoms, and examples thereof include alkali metals (Group 1) and alkaline earth metals (Group 2), and preferred is Na, K or Li.

X^{a} is preferably H, an alkali metal (Group 1), an alkaline earth metal (Group 2), or NR^{4a}₄, more preferably H, Na, K, Li, or NH₄ because they are easily dissolved in water, still more preferably Na, K, or NH₄ because they are more easily dissolved in water, particularly preferably Na or NH₄, and most preferably NH₄ because it can be easily removed. When X^{a} is NH₄, the solubility of the surfactant in an aqueous medium is excellent, and the metal component is unlikely to remain in the PTFE or the final product.

R^{1a} is preferably a linear or branched alkyl group having 1 to 8 carbon atoms and free from a carbonyl group, a cyclic alkyl group having 3 to 8 carbon atoms and free from a carbonyl group, a linear or branched alkyl group having 2 to 45 carbon atoms and containing 1 to 10 carbonyl groups, a cyclic alkyl group having 3 to 45 carbon atoms and containing a carbonyl group, or an alkyl group having 3 to 45 carbon atoms and containing a monovalent or divalent heterocycle.

R^{1a} is more preferably a group represented by the following formula: 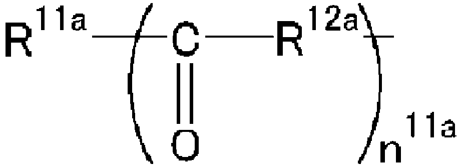 wherein n^{11a} is an integer of 0 to 10; R^{11a} is a linear or branched alkyl group having 1 to 5 carbon atoms or a cyclic alkyl group having 3 to 5 carbon atoms; R^{12a} is an alkylene group having 0 to 3 carbon atoms; and when n^{11a} is an integer of 2 to 10, each R^{12a} may be the same or different.

n^{11a} is preferably an integer of 0 to 5, more preferably an integer of 0 to 3, and still more preferably an integer of 1 to 3.

The alkyl group for R^{11a} is preferably free from a carbonyl group.

In the alkyl group for R^{11a}, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{103a}, wherein R^{103a} is an alkyl group.

In the alkyl group for R^{11a}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{12a} is an alkylene group having 0 to 3 carbon atoms. The alkylene group preferably has 1 to 3 carbon atoms.
The alkylene group for R^{12a} may be either linear or branched.

The alkylene group for R^{12a} is preferably free from a carbonyl group. R^{12a} is more preferably an ethylene group (-C₂H₄-) or a propylene group (-C₃H₆-).

In the alkylene group for R^{12a}, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{104a}, wherein R^{104a} is an alkyl group.

In the alkylene group for R^{12a}, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

R^{2a} and R^{3a} are preferably each independently an alkylene group having 1 or more carbon atoms and free from a carbonyl group, more preferably an alkylene group having 1 to 3 carbon atoms and free from a carbonyl group, and still more preferably an ethylene group (-C₂H₄-) or a propylene group (-C₃H₆-).

Examples of the surfactant (a) include the following surfactants. In each formula, X^{a} is defined as described above.

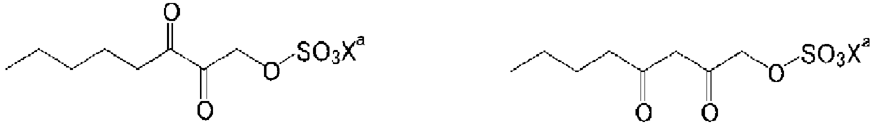

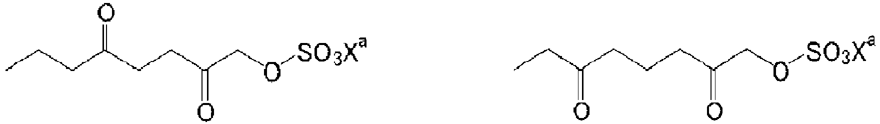

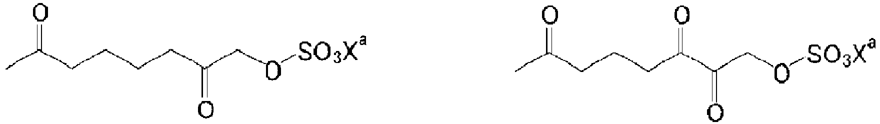

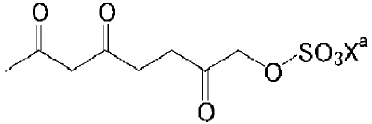

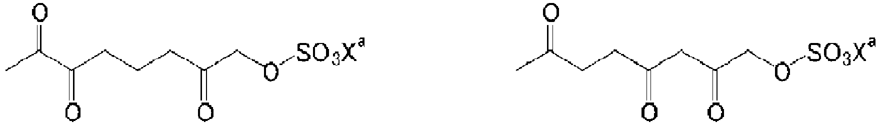

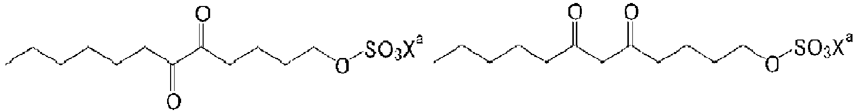

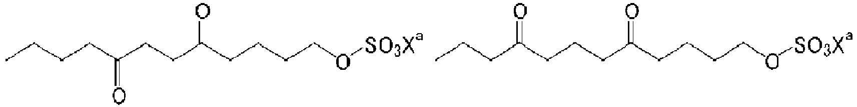

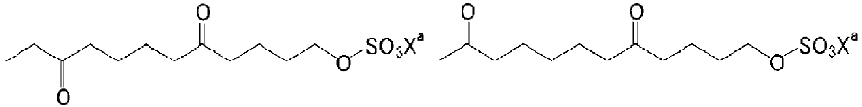

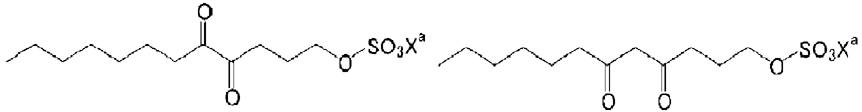

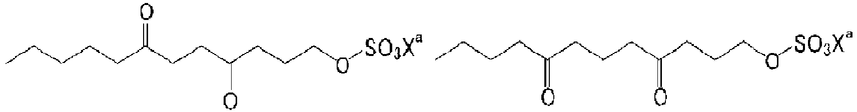

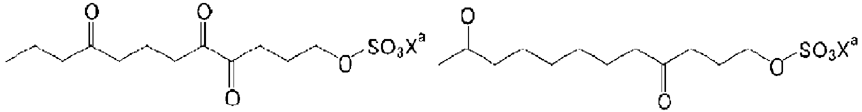

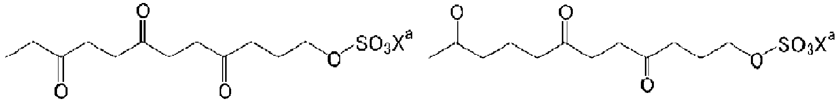

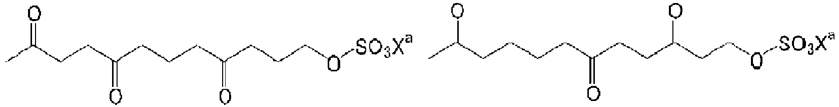

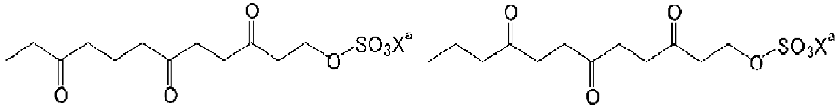

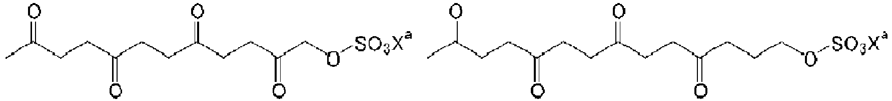

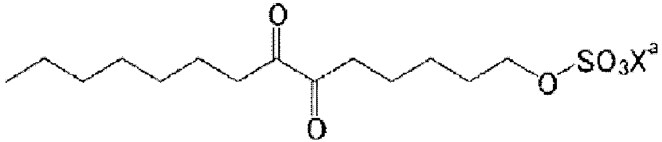

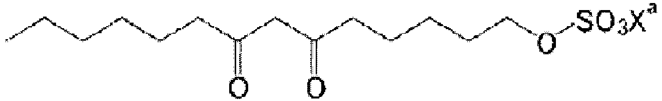

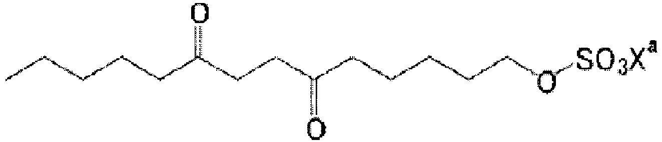

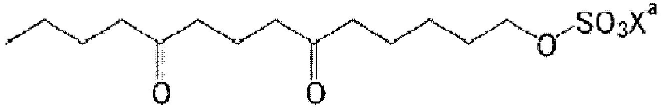

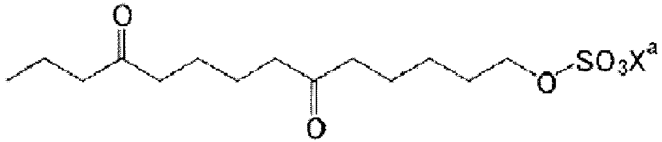

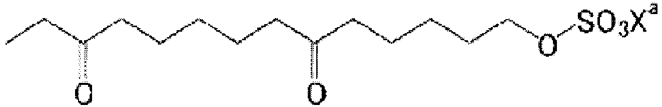

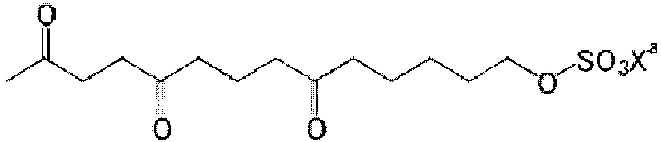

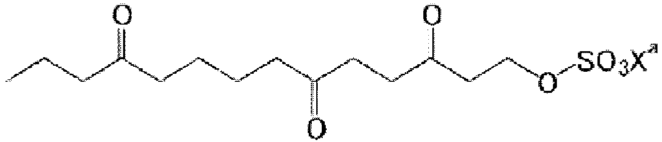

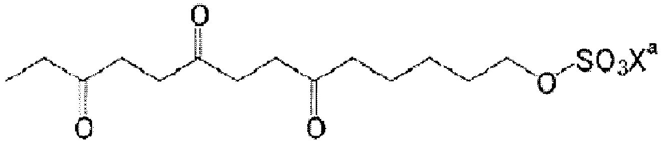

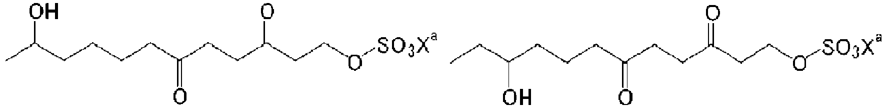

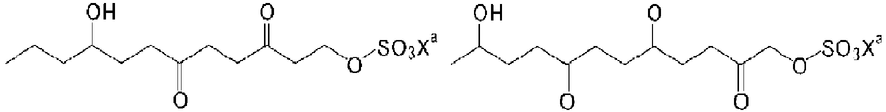

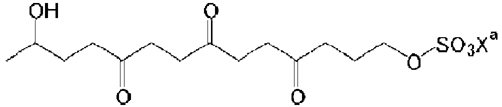

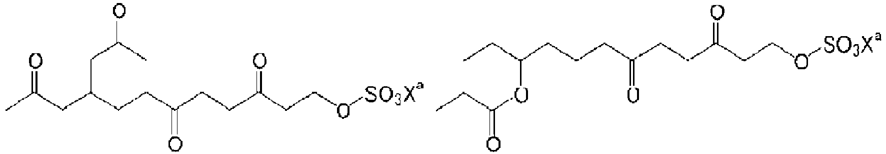

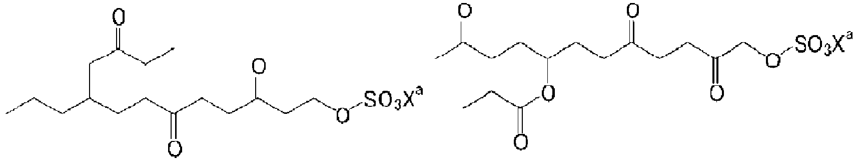

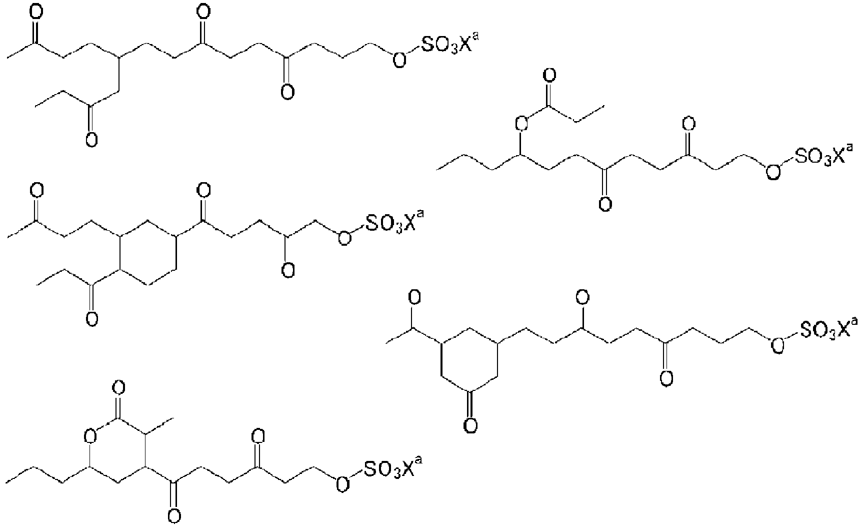

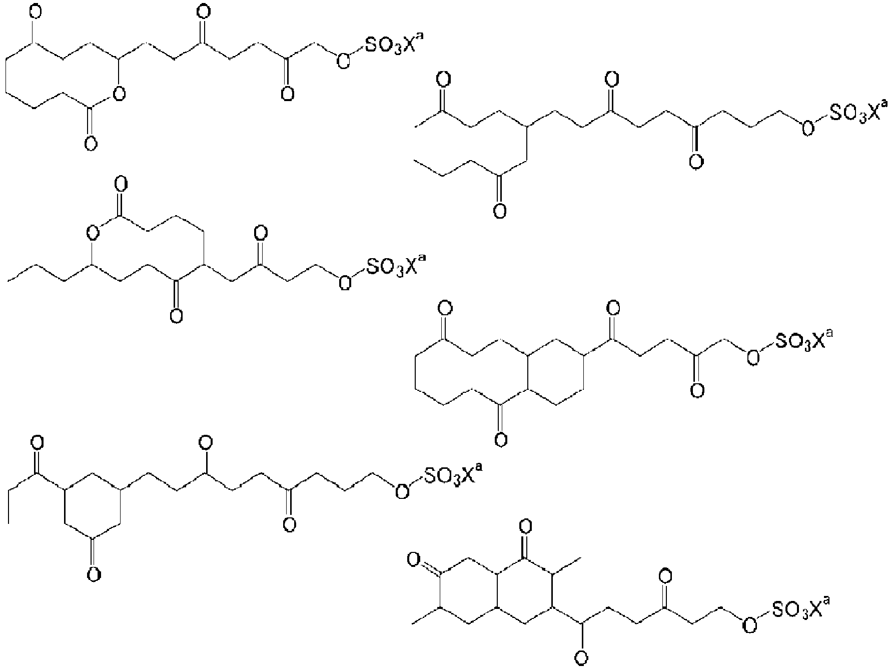

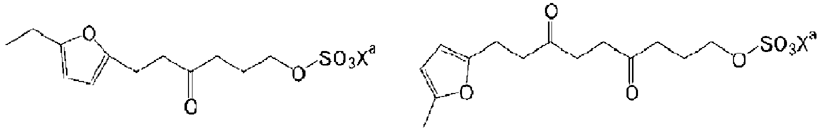

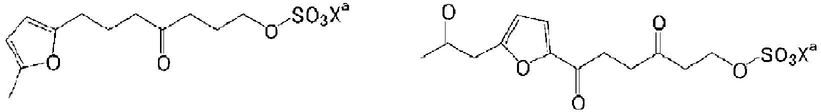

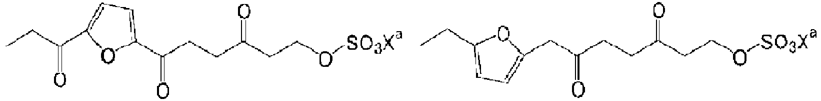

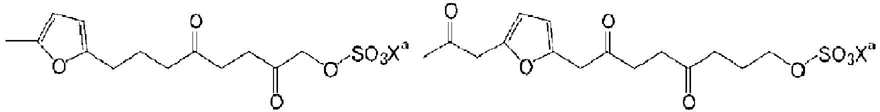

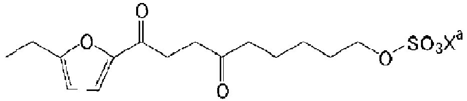

Next, the surfactant (b) will be described.

In the formula (b), R^{1b} is a linear or branched alkyl group having 1 or more carbon atoms and optionally having a substituent, or a cyclic alkyl group having 3 or more carbon atoms and optionally having a substituent.
When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1b} a divalent heterocycle may be present between two carbon atoms, or a divalent heterocycle may be present at an end and bind to - C(=O)-, or a monovalent heterocycle may be present at an end of the alkyl group.

In the present disclosure, "the number of carbon atoms" in the alkyl group includes the number of carbon atoms constituting the heterocycles.

The substituent which may be contained in the alkyl group for R^{1b} is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for R^{1b} is preferably free from a carbonyl group. In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.
The alkyl group preferably contains no substituent.

R^{1b} is preferably a linear or branched alkyl group having 1 to 10 carbon atoms and optionally having a substituent or a cyclic alkyl group having 3 to 10 carbon atoms and optionally having a substituent, more preferably a linear or branched alkyl group having 1 to 10 carbon atoms and free from a carbonyl group or a cyclic alkyl group having 3 to 10 carbon atoms and free from a carbonyl group, still more preferably a linear or branched alkyl group having 1 to 10 carbon atoms and not having a substituent, further preferably a linear or branched alkyl group having 1 to 3 carbon atoms and not having a substituent, particularly preferably a methyl group (-CH₃) or an ethyl group (-C₂H₅), and most preferably a methyl group (-CH₃) .

In the formula (b), R^{2b} and R^{4b} are each independently H or a substituent. A plurality of R^{2b} and R^{4b} may be the same or different.

The substituent for each of R^{2b} and R^{4b} is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for R^{2b} and R^{4b} is preferably free from a carbonyl group. In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.
The alkyl group preferably contains no substituent.

The alkyl group for each of R^{2b} and R^{4b} is preferably a linear or branched alkyl group having 1 to 10 carbon atoms and free from a carbonyl group or a cyclic alkyl group having 3 to 10 carbon atoms and free from a carbonyl group, more preferably a linear or branched alkyl group having 1 to 10 carbon atoms and free from a carbonyl group, still more preferably a linear or branched alkyl group having 1 to 3 carbon atoms and not having a substituent, and particularly preferably a methyl group (-CH₃) or an ethyl group (-C₂H₅).

R^{2b} and R^{4b} are preferably each independently H or a linear or branched alkyl group having 1 to 10 carbon atoms and free from a carbonyl group, more preferably H or a linear or branched alkyl group having 1 to 3 carbon atoms and not having a substituent, still more preferably H, a methyl group (-CH₃), or an ethyl group (-C₂H₅), and particularly preferably H.

In the formula (b), R^{3b} is an alkylene group having 1 to 10 carbon atoms and optionally having a substituent. When a plurality of R^{3b} are present, they may be the same or different.

The alkylene group is preferably free from a carbonyl group. In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms. The alkylene group preferably contains no substituent.

The alkylene group is preferably a linear or branched alkylene group having 1 to 10 carbon atoms and optionally having a substituent or a cyclic alkylene group having 3 to 10 carbon atoms and optionally having a substituent, preferably a linear or branched alkylene group having 1 to 10 carbon atoms and free from a carbonyl group or a cyclic alkylene group having 3 to 10 carbon atoms and free from a carbonyl group, more preferably a linear or branched alkylene group having 1 to 10 carbon atoms and not having a substituent, and still more preferably a methylene group (-CH₂-), an ethylene group (-C₂H₄-), an isopropylene group (-CH (CH₃)CH₂-), or a propylene group (-C₃H₆-).

Any two of R^{1b}, R^{2b}, R^{3b}, and R^{4b} optionally bind to each other to form a ring, but preferably not to form a ring.

In the formula (b), n is an integer of 1 or more n is preferably an integer of 1 to 40, more preferably an integer of 1 to 30, still more preferably an integer of 5 to 25, and particularly preferably an integer of 5 to 9 and 11 to 25.

In the formula (b), p and q are each independently an integer of 0 or more; p is preferably an integer of 0 to 10, more preferably 0 or 1. q is preferably an integer of 0 to 10, more preferably an integer of 0 to 5.

The total of n, p, and q is preferably an integer of 5 or more. The total of n, p, and q is more preferably an integer of 8 or more. The total of n, p, and q is also preferably an integer of 60 or less, more preferably an integer of 50 or less, and still more preferably an integer of 40 or less.

In the formula (b), X^{b} is H, a metal atom, NR^{5b}₄, imidazolium optionally having a substituent, pyridinium optionally having a substituent, or phosphonium optionally having a substituent, and R^{5b} is H or an organic group. The four R^{5b} may be the same as or different from each other. The alkyl group is preferable as the organic group in R^{5b}. R^{5b} is preferably H or an organic group having 1 to 10 carbon atoms, more preferably H or an organic group having 1 to 4 carbon atoms, and still more preferably H or an alkyl group having 1 to 4 carbon atoms. Examples of the metal atom include monovalent and divalent metal atoms, alkali metals (Group 1) and alkaline earth metals (Group 2), and preferred is Na, K, or Li. X^{b} may be a metal atom or NR^{5b}₄, wherein R^{5b} is defined as described above.

X^{b} is preferably H, an alkali metal (Group 1), an alkaline earth metal (Group 2), or NR^{5b}₄, more preferably H, Na, K, Li, or NH₄ because they are easily dissolved in water, still more preferably Na, K, or NH₄ because they are more easily dissolved in water, particularly preferably Na or NH₄, and most preferably NH₄ because it can be easily removed. When X^{b} is NH₄, the solubility of the surfactant in an aqueous medium is excellent, and the metal component is unlikely to remain in the PTFE or the final product.

In the formula (b), L is a single bond, -CO₂-B-*, -OCO-B-*, - CONR^{6b}-B-*, -NR^{6b}CO-B-*, or -CO- other than the carbonyl groups in -CO₂-B-, -OCO-B-, -CONR^{6b}-B-, and -NR^{6b}CO-B-, wherein B is a single bond or an alkylene group having 1 to 10 carbon atoms and optionally having a substituent, R^{6b} is H or an alkyl group having 1 to 4 carbon atoms and optionally having a substituent. The alkylene group more preferably has 1 to 5 carbon atoms. R^{6b} is more preferably H or a methyl group. * indicates the side bonded to -OSO₃X^{b} in the formula.

L is preferably a single bond.

The surfactant (b) is preferably a compound represented by the following formula: 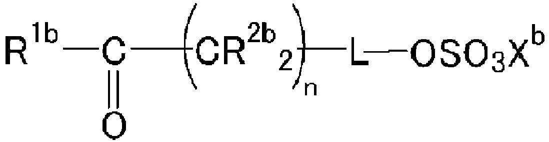 (wherein R^{1b}, R^{2b}, L, n, and X^{b} are defined as described above) .

The surfactant (b) preferably has a ¹H-NMR spectrum in which all peak intensities observed in a chemical shift range of 2.0 to 5.0 ppm give an integral value of 10% or higher.

The surfactant (b) preferably has a ¹H-NMR spectrum in which all peak intensities observed in a chemical shift range of 2.0 to 5.0 ppm give an integral value within the above range. In this case, the surfactant preferably has a ketone structure in the molecule.

The integral value of the surfactant (b) is more preferably 15 or more, and preferably 95 or less, more preferably 80 or less, and still more preferably 70 or less.

The integral value is determined using a heavy water solvent at room temperature. The heavy water content is adjusted to 4.79 ppm.

Examples of the surfactant (b) include:

CH₃C(O)CH₂CH₂CH₂CH₂CH₂CH₂CH₂CH₂CH₂OSO₃Na,

CH₃C(O)CH₂CH₂CH₂CH₂CH₂CH₂CH₂CH₂OSO₃Na,

CH₃C(O)CH₂CH₂CH₂CH₂CH₂CH₂CH₂OSO₃Na,

CH₃C(O)CH₂CH₂CH₂CH₂CH₂CH₂OSO₃Na,

CH₃C(O)CH₂CH₂CH₂CH₂CH₂OSO₃Na,

CH₃C(O)CH₂CH₂CH₂CH₂OSO₃Na,

(CH₃)₃CC(O)CH₂CH₂CH₂CH₂CH₂CH₂CH₂CH₂CH₂OSO₃Na,

(CH₃)₂CHC(O)CH₂CH₂CH₂CH₂CH₂CH₂CH₂CH₂CH₂OSO₃Na,

(CH₂)₅CHC(O)CH₂CH₂CH₂CH₂CH₂CH₂CH₂CH₂CH₂OSO₃Na,

CH₃CH₂C(O)CH₂CH₂CH₂CH₂CH₂CH₂CH₂CH₂OSO₃Na,

CH₃CH₂CH₂C(O)CH₂CH₂CH₂CH₂CH₂CH₂CH₂OSO₃Na,

CH₃CH₂CH₂CH₂C(O)CH₂CH₂CH₂CH₂CH₂CH₂OSO₃Na,

CH₃CH₂CH₂CH₂CH₂C(O)CH₂CH₂CH₂CH₂CH₂OSO₃Na,

CH₃CH₂CH₂CH₂CH₂CH₂C(O)CH₂CH₂CH₂CH₂OSO₃Na,

CH₃CH₂CH₂CH₂CH₂CH₂CH₂C(O)CH₂CH₂CH₂OSO₃Na,

CH₃CH₂CH₂CH₂CH₂CH₂CH₂CH₂C(O)CH₂CH₂OSO₃Na,

CH₃CH₂CH₂CH₂CH₂CH₂CH₂CH₂CH₂C(O)CH₂OSO₃Na,

CH₃C(O)CH₂CH₂CH₂CH₂CH₂CH₂CH₂CH₂CH₂OCH₂CH₂OSO₃Na,

CH₃C(O)CH₂CH₂CH₂CH₂CH₂CH₂CH₂CH₂CH₂C(O)NHCH₂OSO₃Na,

CH₃C(O)CH₂CH₂CH₂CH₂CH₂CH₂CH₂CH₂CH₂NHC(O)CH₂OSO₃Na,

CH₃C(O)CH₂CH₂CH₂CH₂CH₂CH₂CH₂CH₂CH₂C(O)OSO₃Na,

CH₃C(O)CH₂CH₂CH₂CH₂CH₂CH₂CH₂CH₂CH₂C(O)OCH₂OSO₃Na,

CH₃C(O)CH₂CH₂CH₂CH₂CH₂CH₂CH₂CH₂CH₂OC(O)CH₂OSO₃Na,

CH₃C(O)CH₂CH₂CH₂CH₂CH₂CH₂CH₂CH₂CH₂OSO₃H,

CH₃C(O)CH₂CH₂CH₂CH₂CH₂CH₂CH₂CH₂CH₂OSO₃Li,

CH₃C(O)CH₂CH₂CH₂CH₂CH₂CH₂CH₂CH₂CH₂OSO₃K,

CH₃C(O)CH₂CH₂CH₂CH₂CH₂CH₂CH₂CH₂CH₂OSO₃NH₄,

CH₃C(O)CH₂CH₂CH₂CH₂CH₂CH₂CH₂CH₂CH(CH₃)₂OSO₃Na,

CH₃C(O)CH₂CH₂CH₂CH₂CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂CH₂OSO₃Na,

CH₃C(O)CH₂CH₂CH₂CH₂CH₂CH₂CH₂CH₂CH₂CH₂OSO₃Na,

(CH₃)₃CC(O)CH₂CH₂CH₂CH₂CH₂CH₂CH₂CH₂CH₂CH₂CH₂CH₂CH₂CH₂CH₂CH₂CH₂OSO₃Na,

(CH₃)₂CHC(O)CH₂CH₂CH₂CH₂CH₂CH₂CH₂CH₂CH₂CH₂CH₂CH₂CH₂CH₂CH₂CH₂CH₂OSO₃Na,

(CH₂)₅CHC(O)CH₂CH₂CH₂CH₂CH₂CH₂CH₂CH₂CH₂CH₂CH₂CH₂CH₂CH₂CH₂CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂OSO₃Na,

CH₃CH₂CH₂CH₂CH₂C(O)CH₂CH₂CH₂CH₂CH₂CH₂CH₂CH₂CH₂CH₂CH₂CH₂CH₂OSO₃Na,

CH₃CH₂CH₂CH₂CH₂CH₂CH₂CH₂C(O)CH₂CH₂CH₂CH₂CH₂CH₂CH₂CH₂CH₂CH₂OSO₃Na,

CH₃CH₂CH₂CH₂CH₂CH₂CH₂CH₂CH₂CH₂CH₂C(O)CH₂CH₂CH₂CH₂CH₂CH₂CH₂OSO₃Na,

CH₃CH₂CH₂CH₂CH₂CH₂CH₂CH₂CH₂CH₂CH₂CH₂CH₂CH₂C(O)CH₂CH₂CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂OCH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂C(O)NHCH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂NHC(O)CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂C (O)OCH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂OC(O)CH₂CH₂OSO₃Na,

CH₃CH₂C(O)CH₂CH₂CH₂CH₂CH₂CH₂CH₂CH₂CH₂CH₂CH₂CH₂CH₂CH₂CH₂CH₂C (O)OSO₃Na,

CH₃CH₂C(O)CH₂CH₂CH₂CH₂CH₂CH₂CH₂CH₂CH₂CH₂CH₂CH₂CH₂CH₂CH₂CH₂OSO₃H,

CH₃CH₂C(O)CH₂CH₂CH₂CH₂CH₂CH₂CH₂CH₂CH₂CH₂CH₂CH₂CH₂CH₂CH₂CH₂OSO₃Li,

CH₃CH₂C(O) CH₂CH₂CH₂CH₂CH₂CH₂CH₂CH₂CH₂CH₂CH₂CH₂CH₂CH₂CH₂CH₂OSO₃K,

CH₃CH₂C(O)CH₂CH₂CH₂CH₂CH₂CH₂CH₂CH₂CH₂CH₂CH₂CH₂CH₂CH₂CH₂CH₂OSO₃NH₄,

and

CH₃C(O)CH₂CH₂CH₂CH₂CH₂CH₂CH₂CH₂CH₂CH₂CH₂CH₂CH₂CH₂CH₂CH₂CH₂CH₂CH₂CH₂CH₂OSO₃Na -

The surfactant (c) will be described.

In the formula (c), R^{1c} is a linear or branched alkyl group having 1 or more carbon atoms or a cyclic alkyl group having 3 or more carbon atoms.

When having 3 or more carbon atoms, the alkyl group optionally contains a carbonyl group (-C(=O)-) between two carbon atoms. When having 2 or more carbon atoms, the alkyl group optionally contains the carbonyl group at an end of the alkyl group. In other words, acyl groups such as an acetyl group represented by CH₃-C(=O)- are also included in the alkyl group.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1c} a divalent heterocycle may be present between two carbon atoms, or a divalent heterocycle may be present at an end and bind to -C(=O)-, or a monovalent heterocycle may be present at an end of the alkyl group.

In the present disclosure, the number of carbon atoms" in the alkyl group includes the number of carbon atoms constituting the carbonyl groups and the number of carbon atoms constituting the heterocycles. For example, the number of carbon atoms in the group represented by CH₃-C(=O)-CH₂- is 3, the number of carbon atoms in the group represented by CH₃-C (=O)-C₂H₄-C(=O)-C₂H₄- is 7, and the number of carbon atoms in the group represented by CH₃-C(=O)- is 2.

In the alkyl group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{101c}, wherein R^{101c} is an alkyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

In the formula (c), R^{2c} and R^{3c} are each independently a single bond or a divalent linking group.

Preferably, R^{2c} and R^{3c} are each independently a single bond, or a linear or branched alkylene group having 1 or more carbon atoms, or a cyclic alkylene group having 3 or more carbon atoms.

The alkylene group constituting R^{2c} and R^{3c} is preferably free from a carbonyl group.

In the alkylene group, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{102c}, wherein R^{102c} is an alkyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

The total number of carbon atoms of R^{1c}, R^{2c}, and R^{3c} is 5 or more. The total number of carbon atoms is preferably 7 or more, more preferably 9 or more, and preferably 20 or less, more preferably 18 or less, still more preferably 15 or less.

Any two of R^{1c}, R^{2c}, and R^{3c} optionally bind to each other to form a ring.

In the formula (c), in the formula, A^{c} is -COOX^{c} or - SO₃X^{c}, wherein X^{c} is H, a metal atom, NR^{4c}₄, imidazolium optionally having a substituent, pyridinium optionally having a substituent, or phosphonium optionally having a substituent, wherein R^{4c} is H or an organic group and may be the same or different. The alkyl group is preferable as the organic group in R^{4c}. R^{4c} is preferably H or an organic group having 1 to 10 carbon atoms, more preferably H or an organic group having 1 to 4 carbon atoms, and still more preferably H or an alkyl group having 1 to 4 carbon atoms. Examples of the metal atom include monovalent and divalent metal atoms, alkali metals (Group 1) and alkaline earth metals (Group 2), and preferred is Na, K, or Li.

X^{c} is preferably H, an alkali metal (Group 1), an alkaline earth metal (Group 2), or NR^{4c}₄, more preferably H, Na, K, Li, or NH₄ because they are easily dissolved in water, still more preferably Na, K, or NH₄ because they are more easily dissolved in water, particularly preferably Na or NH₄, and most preferably NH₄ because it can be easily removed. When X^{c} is NH₄, the solubility of the surfactant in an aqueous medium is excellent, and the metal component is unlikely to remain in the PTFE or the final product.

R^{1c} is preferably a linear or branched alkyl group having 1 to 8 carbon atoms and free from a carbonyl group, a cyclic alkyl group having 3 to 8 carbon atoms and free from a carbonyl group, a linear or branched alkyl group having 2 to 45 carbon atoms and containing 1 to 10 carbonyl groups, a cyclic alkyl group having 3 to 45 carbon atoms and containing a carbonyl group, or an alkyl group having 3 to 45 carbon atoms and containing a monovalent or divalent heterocycle.

R^{1c} is more preferably a group represented by the following formula: 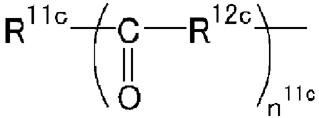 wherein n^{11c} is an integer of 0 to 10; R^{11c} is a linear or branched alkyl group having 1 to 5 carbon atoms or a cyclic alkyl group having 3 to 5 carbon atoms; R^{12c} is an alkylene group having 0 to 3 carbon atoms; and when n^{11c} is an integer of 2 to 10, each R^{12c} may be the same or different.

n^{11c} is preferably an integer of 0 to 5, more preferably an integer of 0 to 3, and still more preferably an integer of 1 to 3.

The alkyl group for R^{11c} is preferably free from a carbonyl group.

In the alkyl group for R^{11c}, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{103c}, wherein R^{103c} is an alkyl group.

In the alkyl group for R^{11c}, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

R^{12c} is an alkylene group having 0 to 3 carbon atoms. The alkylene group preferably has 1 to 3 carbon atoms.

The alkylene group for R^{12c} may be either linear or branched.

The alkylene group for R^{12c} is preferably free from a carbonyl group. R^{12c} is more preferably an ethylene group (-C₂H₄-) or a propylene group (-C₃H₆-).

In the alkylene group for R^{12c}, a hydrogen atom bonded to a carbon atom may be replaced by a functional group such as a hydroxy group (-OH) or a monovalent organic group containing an ester bond. Still, it is preferably not replaced by any functional group.

An example of the monovalent organic group containing an ester bond is a group represented by the formula: -O-C(=O)-R^{104c}, wherein R^{104c} is an alkyl group.

In the alkylene group for R^{12c}, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkylene group free from halogen atoms such as fluorine atoms and chlorine atoms.

R^{2c} and R^{3c} are preferably each independently an alkylene group having 1 or more carbon atoms and free from a carbonyl group, more preferably an alkylene group having 1 to 3 carbon atoms and free from a carbonyl group, and still more preferably an ethylene group (-C₂H₄-) or a propylene group (-C₃H₆-).

Examples of the surfactant (c) include the following surfactants. In each formula, A^{c} is defined as described above.

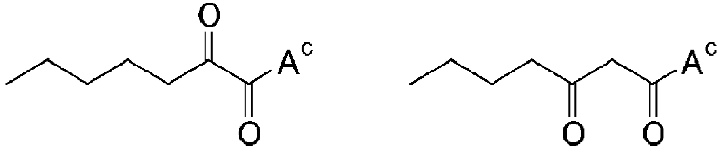

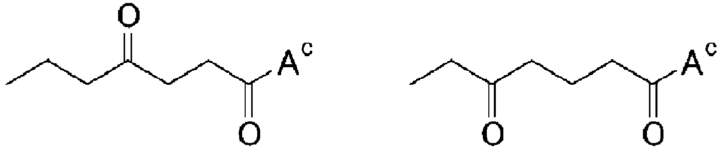

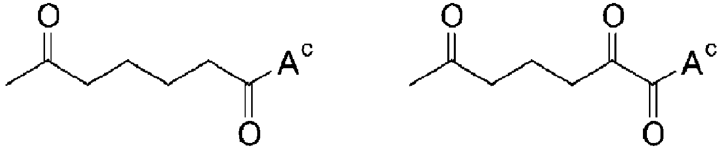

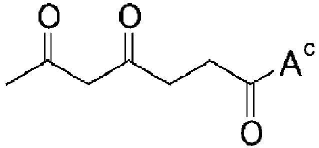

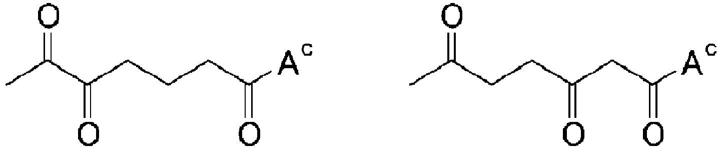

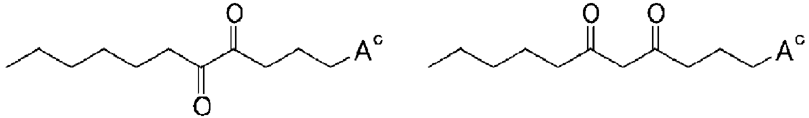

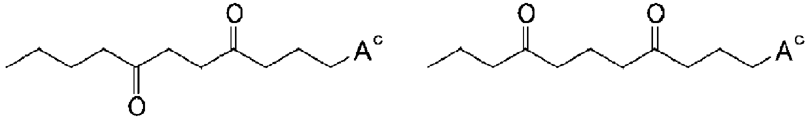

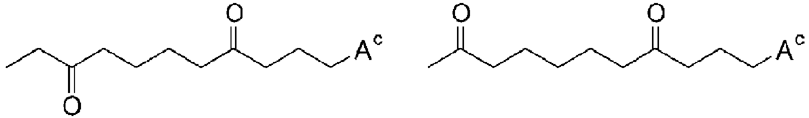

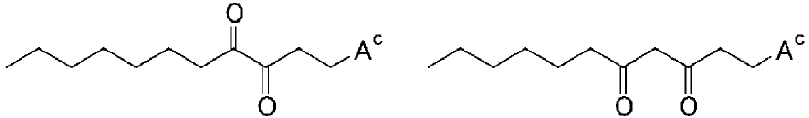

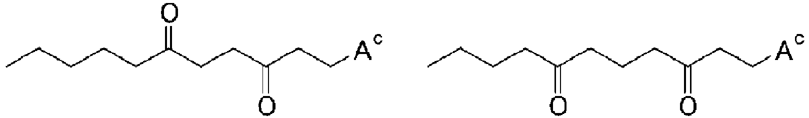

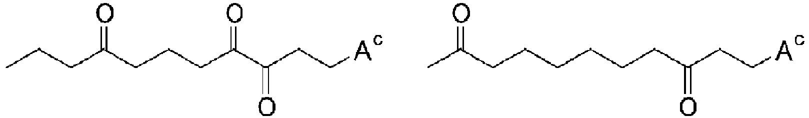

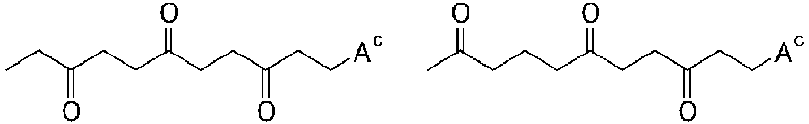

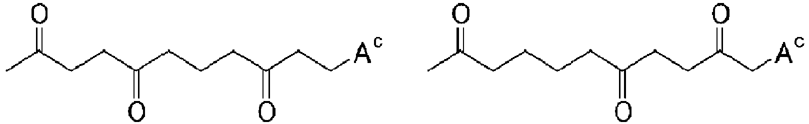

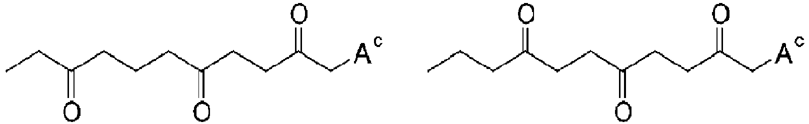

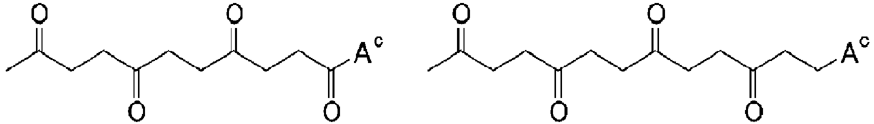

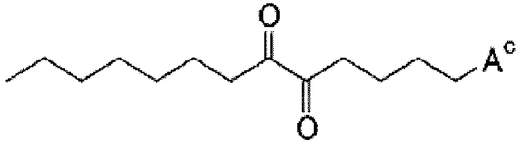

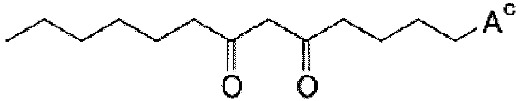

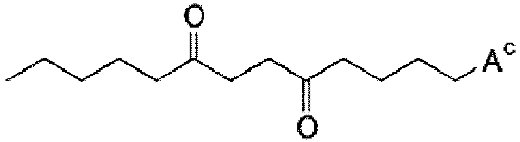

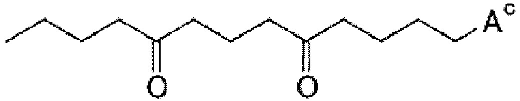

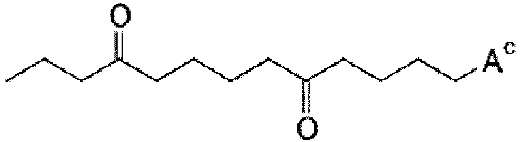

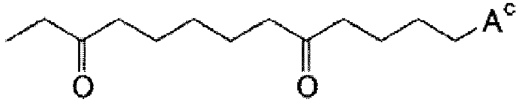

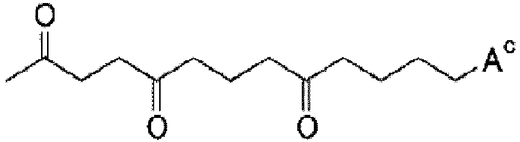

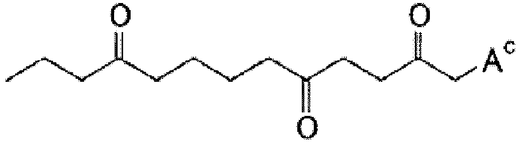

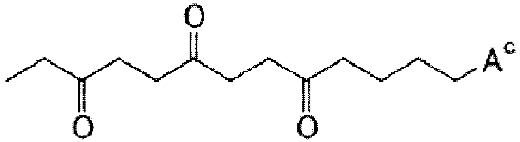

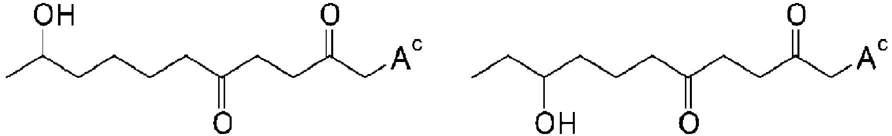

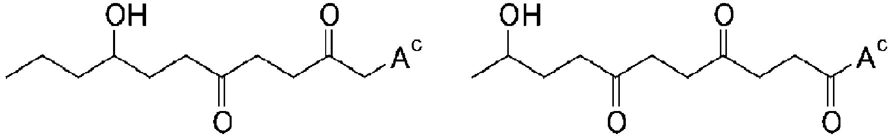

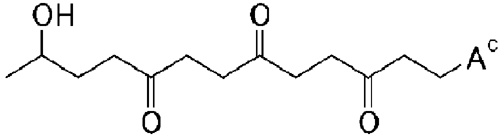

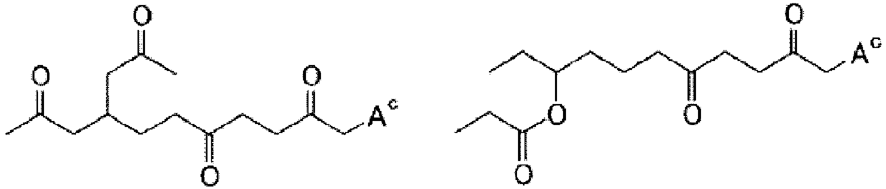

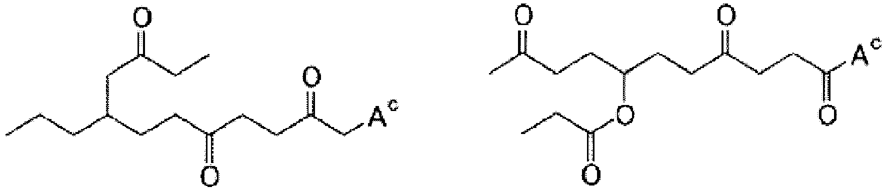

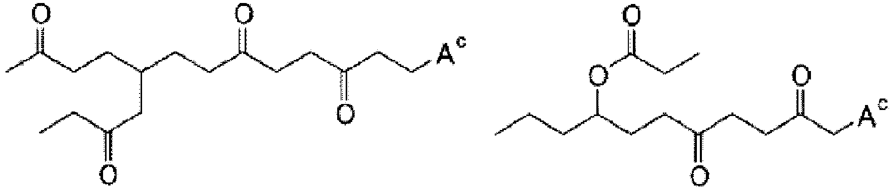

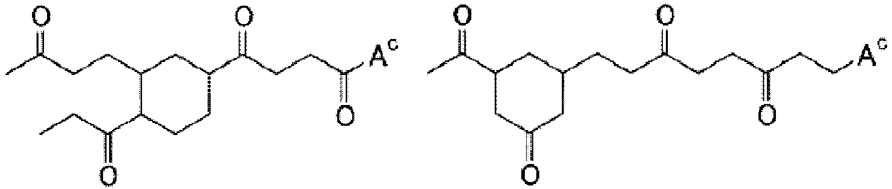

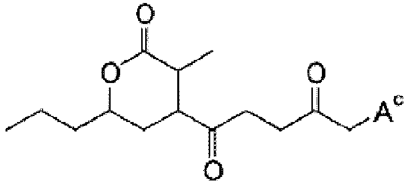

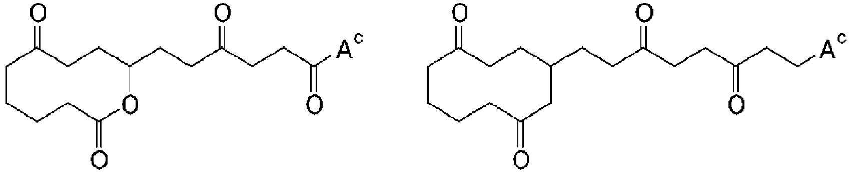

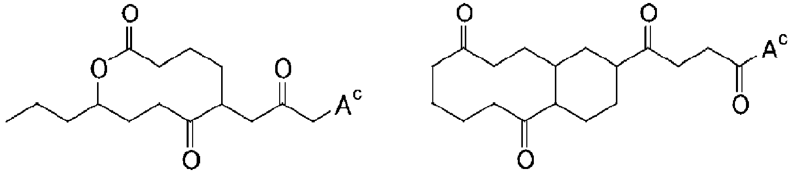

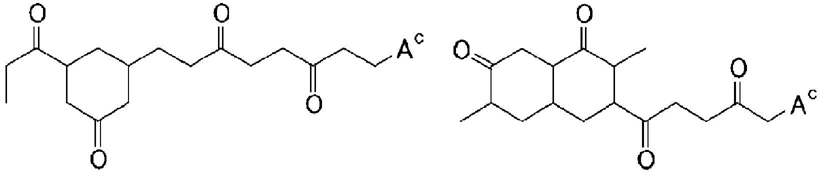

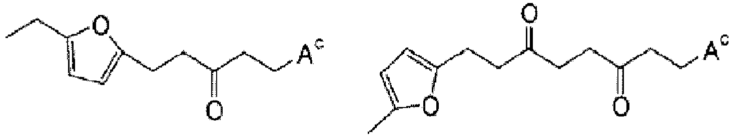

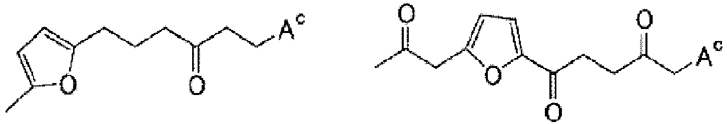

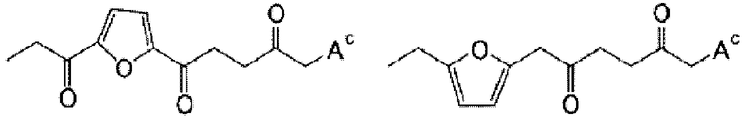

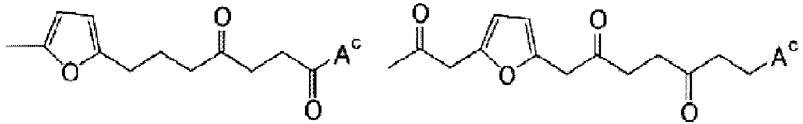

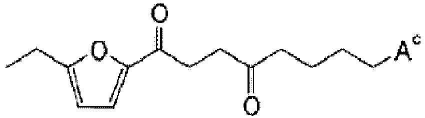

The surfactant (d) will be described.

In the formula (d), R^{1d} is a linear or branched alkyl group having 1 or more carbon atoms and optionally having a substituent, or a cyclic alkyl group having 3 or more carbon atoms and optionally having a substituent.

When having 3 or more carbon atoms, the alkyl group optionally contains a monovalent or divalent heterocycle, or optionally forms a ring. The heterocycle is preferably an unsaturated heterocycle, more preferably an oxygen-containing unsaturated heterocycle, and examples thereof include a furan ring. In R^{1d} a divalent heterocycle may be present between two carbon atoms, or a divalent heterocycle may be present at an end and bind to -C(=O)-, or a monovalent heterocycle may be present at an end of the alkyl group.

In the present disclosure, the number of carbon atoms" in the alkyl group includes the number of carbon atoms constituting the heterocycles.

The substituent which may be contained in the alkyl group for R^{1d} is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for R^{1d} is preferably free from a carbonyl group.

In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.

The alkyl group preferably contains no substituent.

R^{1d} is preferably a linear or branched alkyl group having 1 to 10 carbon atoms and optionally having a substituent or a cyclic alkyl group having 3 to 10 carbon atoms and optionally having a substituent, more preferably a linear or branched alkyl group having 1 to 10 carbon atoms and free from a carbonyl group or a cyclic alkyl group having 3 to 10 carbon atoms and free from a carbonyl group, still more preferably a linear or branched alkyl group having 1 to 10 carbon atoms and not having a substituent, further preferably a linear or branched alkyl group having 1 to 3 carbon atoms and not having a substituent, particularly preferably a methyl group (-CH₃) or an ethyl group (-C₂H₅), and most preferably a methyl group (-CH₃) .

In the formula (d), R^{2d} and R^{4d} are each independently H or a substituent. A plurality of R^{2d} and R^{4d} may be the same or different.

The substituent for each of R^{2d} and R^{4d} is preferably a halogen atom, a linear or branched alkyl group having 1 to 10 carbon atoms, or a cyclic alkyl group having 3 to 10 carbon atoms, or a hydroxy group, and particularly preferably a methyl group or an ethyl group.

The alkyl group for R^{2d} and R^{4d} is preferably free from a carbonyl group. In the alkyl group, 75% or less of the hydrogen atoms bonded to the carbon atoms may be replaced by halogen atoms, 50% or less thereof may be replaced by halogen atoms, or 25% or less thereof may be replaced by halogen atoms. The alkyl group is preferably a non-halogenated alkyl group free from halogen atoms such as fluorine atoms and chlorine atoms.
The alkyl group preferably contains no substituent.

The alkyl group for each of R^{2d} and R^{4d} is preferably a linear or branched alkyl group having 1 to 10 carbon atoms and free from a carbonyl group or a cyclic alkyl group having 3 to 10 carbon atoms and free from a carbonyl group, more preferably a linear or branched alkyl group having 1 to 10 carbon atoms and free from a carbonyl group, still more preferably a linear or branched alkyl group having 1 to 3 carbon atoms and not having a substituent, and particularly preferably a methyl group (-CH₃) or an ethyl group (-C₂H₅).

R^{2d} and R^{4d} are preferably each independently H or a linear or branched alkyl group having 1 to 10 carbon atoms and free from a carbonyl group, more preferably H or a linear or branched alkyl group having 1 to 3 carbon atoms and not having a substituent, still more preferably H, a methyl group (-CH₃), or an ethyl group (-C₂H₅), and particularly preferably H.

In the formula (d), R^{3d} is an alkylene group having 1 to 10 carbon atoms and optionally having a substituent. When a plurality of R^{3d} are present, they may be the same or different.

The alkylene group is preferably free from a carbonyl group.

In the alkylene group, 75% or less of the hydrogen atoms bonded to the carbon atoms may be replaced by halogen atoms, 50% or less thereof may be replaced by halogen atoms, or 25% or less thereof may be replaced by halogen atoms. The alkylene group is preferably a non-halogenated alkyl group free from halogen atoms such as fluorine atoms and chlorine atoms.

The alkylene group preferably contains no substituent.

The alkylene group is preferably a linear or branched alkylene group having 1 to 10 carbon atoms and optionally having a substituent or a cyclic alkylene group having 3 to 10 carbon atoms and optionally having a substituent, preferably a linear or branched alkylene group having 1 to 10 carbon atoms and free from a carbonyl group or a cyclic alkylene group having 3 to 10 carbon atoms and free from a carbonyl group, more preferably a linear or branched alkylene group having 1 to 10 carbon atoms and not having a substituent, and still more preferably a methylene group (-CH₂-), an ethylene group (-C₂H₄-), an isopropylene group (-CH(CH₃)CH₂-), or a propylene group (-C₃H₆-).

Any two of R^{1d}, R^{2d}, R^{3d}, and R^{4d} optionally bind to each other to form a ring.

In the formula (d), n is an integer of 1 or more. n is preferably an integer of 1 to 40, more preferably an integer of 1 to 30, and still more preferably an integer of 5 to 25.

In the formula (d), p and q are each independently an integer of 0 or more. p is preferably an integer of 0 to 10, more preferably 0 or 1. q is preferably an integer of 0 to 10, more preferably an integer of 0 to 5.

The total of n, p, and q is preferably an integer of 6 or more. The total of n, p, and q is more preferably an integer of 8 or more. The total of n, p, and q is also preferably an integer of 60 or less, more preferably an integer of 50 or less, and still more preferably an integer of 40 or less.

In the formula (d), A^{d} is -SO₃X^{d} or -COOX^{d}, wherein X^{d} is H, a metal atom, NR^{5d}₄, imidazolium optionally having a substituent, pyridinium optionally having a substituent, or phosphonium optionally having a substituent, wherein R^{5d} is H or an organic group and may be the same or different. The alkyl group is preferable as the organic group in R^{5d}. R^{5d} is preferably H or an organic group having 1 to 10 carbon atoms, more preferably H or an organic group having 1 to 4 carbon atoms, and still more preferably H or an alkyl group having 1 to 4 carbon atoms. Examples of the metal atom include monovalent and divalent metal atoms, alkali metals (Group 1) and alkaline earth metals (Group 2), and preferred is Na, K, or Li. X^{d} may be a metal atom or NR^{5d}₄, wherein R^{5d} is defined as described above.

X^{d} is preferably H, an alkali metal (Group 1), an alkaline earth metal (Group 2), or NR^{5d}₄, more preferably H, Na, K, Li, or NH₄ because they are easily dissolved in water, still more preferably Na, K, or NH₄ because they are more easily dissolved in water, particularly preferably Na or NH₄, and most preferably NH₄ because it can be easily removed. When X^{d} is NH₄, the solubility of the surfactant in an aqueous medium is excellent, and the metal component is unlikely to remain in the PTFE or the final product.

In the formula (d), L is a single bond, -CO₂-B-*, -OCO-B-*,-CONR^{6d}-B-*, -NR^{6d}CO-B-*, or -CO- other than the carbonyl groups in -CO₂-B-, -OCO-B-, -CONR^{6d}-B-, and -NR^{6d}CO-B-, wherein B is a single bond or an alkylene group having 1 to 10 carbon atoms and optionally having a substituent, R^{6d} is H or an alkyl group having 1 to 4 carbon atoms and optionally having a substituent. The alkylene group more preferably has 1 to 5 carbon atoms. R^{6d} is more preferably H or a methyl group. * indicates the side bonded to A^{d} in the formula.

L is preferably a single bond.

The surfactant preferably has a ¹H-NMR spectrum in which all peak intensities observed in a chemical shift range of 2.0 to 5.0 ppm give an integral value of 10 or higher.

The surfactant preferably has a ¹H-NMR spectrum in which all peak intensities observed in a chemical shift range of 2.0 to 5.0 ppm give an integral value within the above range. In this case, the surfactant preferably has a ketone structure in the molecule.

The integral value of the surfactant is more preferably 15 or more, and preferably 95 or less, more preferably 80 or less, and still more preferably 70 or less.

The integral value is determined using a heavy water solvent at room temperature. The heavy water content is adjusted to 4.79 ppm.

Examples of the surfactant (d) include:

CH₃C(O)CH₂CH₂CH₂CH₂CH₂CH₂CH₂CH₂COOK,

CH₃C(O)CH₂CH₂CH₂CH₂CH₂CH₂CH₂COONa,

CH₃C(O)CH₂CH₂CH₂CH₂CH₂CH₂COONa,

CH₃C(O)CH₂CH₂CH₂CH₂CH₂COONa,

CH₃C(O)CH₂CH₂CH₂CH₂COONa,

CH₃C(O)CH₂CH₂CH₂COONa,

CH₃C(O)CH₂CH₂CH₂CH₂CH₂CH₂CH₂CH₂CH₂CH₂CH₂CH₂CH₂COONa,

CH₃C(O)CH₂CH₂CH₂CH₂CH₂CH₂CH₂CH₂CH₂CH₂CH₂CH₂CH₂CH₂CH₂CH₂CH₂CH₂COONa,

(CH₃)₃CC(O)CH₂CH₂CH₂CH₂CH₂CH₂CH₂CH₂COONa,

(CH₃)₂CHC(O)CH₂CH₂CH₂CH₂CH₂CH₂CH₂CH₂COONa,

(CH₂)₅CHC(O)CH₂CH₂CH₂CH₂CH₂CH₂CH₂CH₂COONa,

CH₃CH₂C(O)CH₂CH₂CH₂CH₂CH₂CH₂CH₂COONa,

CH₃CH₂CH₂C(O)CH₂CH₂CH₂CH₂CH₂CH₂COONa,

CH₃CH₂CH₂CH₂C(O)CH₂CH₂CH₂CH₂CH₂COONa,

CH₃CH₂CH₂CH₂CH₂C(O)CH₂CH₂CH₂CH₂COONa,

CH₃CH₂CH₂CH₂CH₂CH₂C(O)CH₂CH₂CH₂COONa,

CH₃CH₂CH₂CH₂CH₂CH₂CH₂C(O)CH₂CH₂COONa,

CH₃CH₂CH₂CH₂CH₂CH₂CH₂CH₂C(O)CH₂COONa,

CH₃C(O)CH₂CH₂CH₂CH₂CH₂CH₂CH₂CH₂OCH₂CH₂COONa,

CH₃C(O)CH₂CH₂CH₂CH₂CH₂CH₂CH₂CH₂C(O)NHCH₂COOK,

CH₃C(O)CH₂CH₂CH₂CH₂CH₂CH₂CH₂CH₂NHC(O)CH₂COOK,

CH₃C(O)CH₂CH₂CH₂CH₂CH₂CH₂CH₂CH₂C(O)OCH₂COONa,

CH₃C(O)CH₂CH₂CH₂CH₂CH₂CH₂CH₂CH₂OC(O)CH₂COONa,

CH₃C(O)CH₂CH₂CH₂CH₂CH₂CH₂CH₂CH₂C(O)COONa,

CH₃C(O)CH₂CH₂CH₂CH₂CH₂CH₂CH₂CH₂C(O)COOH,

CH₃C(O)CH₂CH₂CH₂CH₂CH₂CH₂CH₂CH₂C(O)COOLi,

CH₃C(O)CH₂CH₂CH₂CH₂CH₂CH₂CH₂CH₂C(O)COONH₄,

CH₃C(O)CH₂CH₂CH₂CH₂CH₂CH₂CH₂CH₂C(O)COONa,

CH₃C(O)CH₂CH₂CH₂CH₂CH₂CH₂CH₂C(CH₃)₂COOK,

CH₃C(O)CH₂CH₂CH₂CH₂CH₂CH₂CH₂CH₂CH₂SO₃Na,

CH₃C(O)CH₂CH₂CH₂CH₂CH₂CH₂CH₂CH₂SO₃Na,

CH₃C(O)CH₂CH₂CH₂CH₂CH₂CH₂CH₂SO₃Na,

CH₃C(O)CH₂CH₂CH₂CH₂CH₂CH₂SO₃Na,

CH₃C(O)CH₂CH₂CH₂CH₂CH₂SO₃Na,

CH₃C(O)CH₂CH₂CH₂CH₂SO₃Na,

CH₃C(O)CH₂CH₂CH₂CH₂CH₂CH₂CH₂CH₂CH₂CH₂CH₂CH₂CH₂SO₃Na,

CH₃C(O)CH₂CH₂CH₂CH₂CH₂CH₂CH₂CH₂CH₂CH₂CH₂CH₂CH₂CH₂CH₂CH₂CH₂CH₂SO₃Na,

CH₃C(O)CH₂CH₂CH₂CH₂CH₂CH₂CH₂CH₂CH₂CH₂SO₃Na,

(CH₃)₃CC(O)CH₂CH₂CH₂CH₂CH₂CH₂CH₂CH₂CH₂SO₃Na,

(CH₃)₂CHC(O)CH₂CH₂CH₂CH₂CH₂CH₂CH₂CH₂CH₂SO₃Na,

(CH₂)₅CHC(O)CH₂CH₂CH₂CH₂CH₂CH₂CH₂CH₂CH₂SO₃Na,

CH₃C(O)CH₂CH₂CH₂CH₂CH₂CH₂CH₂CH₂SO₃Na,

CH₃C(O)CH₂CH₂CH₂CH₂CH₂CH₂CH₂SO₃Na,

CH₃C(O)CH₂CH₂CH₂CH₂CH₂CH₂SO₃Na,

CH₃C(O)CH₂CH₂CH₂CH₂CH₂SO₃Na,

CH₃C(O)CH₂CH₂CH₂CH₂SO₃Na,

CH₃C(O)CH₂CH₂CH₂SO₃Na,

CH₃C(O)CH₂CH₂SO₃Na,

CH₃C(O)CH₂SO₃Na,

CH₃C(O)CH₂CH₂CH₂CH₂CH₂CH₂CH₂CH₂CH₂0CH₂CH₂CH₂SO₃Na,

CH₃C(O)CH₂CH₂CH₂CH₂CH₂CH₂CH₂CH₂CH₂C(O)NHCH₂SO₃Na,

CH₃C(O)CH₂CH₂CH₂CH₂CH₂CH₂CH₂CH₂CH₂NHC(O)CH₂SO₃Na,

CH₃C(O)CH₂CH₂CH₂CH₂CH₂CH₂CH₂CH₂CH₂C(O)SO₃Na,

CH₃C(O)CH₂CH₂CH₂CH₂CH₂CH₂CH₂CH₂CH₂C(O)OCH₂SO₃Na,

CH₃C(O)CH₂CH₂CH₂CH₂CH₂CH₂CH₂CH₂CH₂OC(O)CH₂SO₃Na,

CH₃C(O)CH₂CH₂CH₂CH₂CH₂CH₂CH₂CH₂CH₂SO₃H,

CH₃C(O)CH₂CH₂CH₂CH₂CH₂CH₂CH₂CH₂CH₂SO₃K,

CH₃C(O)CH₂CH₂CH₂CH₂CH₂CH₂CH₂CH₂CH₂SO₃Li,

CH₃C(O)CH₂CH₂CH₂CH₂CH₂CH₂CH₂CH₂CH₂SO₃NH₄,

CH₃C(O)CH₂CH₂CH₂CH₂CH₂CH₂CH₂CH₂C(CH₃)₂SO₃Na,

or the like.

In the production method of the present disclosure, two or more of the hydrocarbon surfactants may be used at the same time.

The hydrocarbon surfactant is, for example, the surfactant described above (1), the hydrocarbon surfactant having one or more carbonyl groups which are not in a carboxyl group described above, or a specific hydrocarbon surfactant obtained by radically treating or oxidizing the hydrocarbon surfactant having one or more carbonyl groups which are not in a carboxyl group.

The specific hydrocarbon surfactant is also preferably a hydrocarbon surfactant having one or more carbonyl groups which are not in a carboxyl group described above or a hydrocarbon surfactant obtained by radically treating or oxidizing the hydrocarbon surfactant having one or more carbonyl groups which are not in a carboxyl group.

By using the specific hydrocarbon surfactant obtained by radically treating or oxidizing the hydrocarbon surfactant, primary particles having a small average primary particle size and aspect ratio can be easily obtained, whereby the polymerization of TFE in an aqueous medium smoothly proceeds and PTFE can be easily produced.

The radical treatment may be any treatment in which radicals act on the hydrocarbon surfactant, for example, a treatment in which deionized water and the hydrocarbon surfactant are added to the reactor, the reactor is hermetically sealed, the inside of the reactor is replaced with nitrogen, the reactor is heated and pressurized, a polymerization initiator is charged, the reactor is stirred for a certain time, and then the reactor is depressurized to the atmospheric pressure, and the reactor is cooled. The oxidation treatment is a treatment in which an oxidizing agent acts on the carboxylic acid-type hydrocarbon surfactant. Examples of the oxidizing agent include oxygen, ozone, hydrogen peroxide solution, manganese(IV) oxide, potassium permanganate, potassium dichromate, nitric acid, and sulfur dioxide.

The specific hydrocarbon surfactant is preferably at least one selected from the group consisting of the surfactant (1) represented by the general formula (1), the surfactant (a) represented by the formula (a), the surfactant (b) represented by the formula (b), the surfactant (c) represented by the formula (c), the surfactant (d) represented by the formula (d), and the surfactant obtained by radically treating or oxidizing the surfactants (a) to (d), and more preferably at least one selected from the group consisting of the surfactant (a) represented by formula (a), the surfactant (b) represented by formula (b), the surfactant (c) represented by formula (c), the surfactant (d) represented by formula (d), and the surfactant obtained by radically treating or oxidizing the surfactants (a) to (d).

The hydrocarbon surfactant used in the production method of the present disclosure is also preferably a carboxylic acid-type hydrocarbon surfactant. Carboxylic acid-type hydrocarbon surfactants tend to have a shorter coagulation completion time than sulfate surfactants. However, according to the production method of the present disclosure, an aqueous dispersion having a long coagulation completion time can be produced even when a carboxylic acid-type hydrocarbon surfactant is used.

That is, the production method of the present disclosure is particularly suitable when the hydrocarbon surfactant is a carboxylic acid-type hydrocarbon surfactant.

The carboxylic acid-type hydrocarbon surfactant is usually an anionic hydrocarbon surfactant having a hydrophilic moiety formed of carboxylate and a hydrophobic moiety which is a long chain hydrocarbon moiety such as alkyl. In particular, the carboxylic acid-type hydrocarbon surfactant is not limited as long as it has a carboxyl group (-COOH) or a group in which the hydrogen atom of the carboxyl group is substituted with an inorganic cation (for example, metal atoms, ammonium, etc.), and for example, a hydrocarbon surfactant having a carboxyl group or a group in which the hydrogen atom of the carboxyl group is substituted with an inorganic cation can be used from among the hydrocarbon surfactants described above.

The carboxylic acid-type hydrocarbon surfactant may be an aliphatic-type carboxylic acid-type hydrocarbon surfactant or a carboxylic acid-type hydrocarbon surfactant other than the aliphatic-type.

In the present disclosure, the term "aliphatic-type carboxylic acid-type hydrocarbon surfactant" means a carboxylic acid type hydrocarbon surfactant free from a carbonyl group which is not in a carboxyl group or an ester group.

The ester group means a group represented by -COO- or -OCO-.

The carboxylic acid-type hydrocarbon surfactant used may be, for example, a hydrocarbon surfactant having a carboxyl group or a group in which the hydrogen atom of the carboxyl group is replaced by an inorganic cation among the specific hydrocarbon surfactants described above.

The hydrocarbon surfactant of a carboxylic acid-type is preferably at least one selected from a group consisting of a surfactant having a carboxyl group (-COOH) or a group in which the hydrogen atom of the carboxyl group is replaced with an inorganic cation (for example, metal atoms, ammonium, etc.) among the surfactant (1), the anionic surfactant represented by R^{6Z}(-L-M)₂ described above, the anionic surfactant represented by R^{7Z}(-L-M)₃ described above, the compound (α), the surfactant (1-0A), and those obtained by radically treating or oxidizing these surfactants. The carboxylic acid-type hydrocarbon surfactant may be used alone or in a mixture of two or more.

The compound (α) includes not only the anionic hydrocarbon surfactant represented by the formula: R¹⁰⁰-COOM (wherein R¹⁰⁰ and M are the same as above) (preferably, the compound represented by the formula (A)), but also those having a carboxyl group (-COOH) or a group in which the hydrogen atom of the carboxyl group is substituted with an inorganic cation (for example, metal atoms, ammonium, etc.) among the anionic surfactant represented by the formula: R^{Z}-L-M (wherein R^{Z}, L, and M are the same as above), the surfactant (c), and the surfactant (d).

The carboxylic acid-type hydrocarbon surfactant is preferably the compound (α), and more preferably at least one selected from the group consisting of a compound represented by the formula (A), a compound in which A^{c} is -COOX^{c} in the formula (c), a compound in which A^{d} is - COOX^{d} in the formula (d), a compound in which A is -COCM in the formula (1), a compound in which A is -COOM in the formula (1-0A), and those obtained by radically treating or oxidizing these surfactants, and still more preferably at least one selected from the group consisting of a compound represented by the formula (A) and a compound obtained by radically treating or oxidizing the compound.

In particular, preferred is at least one selected from the group consisting of lauric acid, capric acid, myristic acid, pentadecylic acid, palmitic acid, salts thereof, and those obtained by radically treating or oxidizing these compounds, more preferred is at least one selected from the group consisting of lauric acid and salts thereof, and those obtained by radically treating or oxidizing these compounds, still more preferred is at least one selected from the group consisting of lauric acid salts and those obtained by radically treating or oxidizing these, and still more preferred is at least one selected from the group consisting of sodium laurate and those obtained by radically treating or oxidizing sodium laurate. Examples of the salts include, but are not limited to, those in which hydrogen of the carboxyl group is a metal atom, NR¹⁰¹₄, imidazolium optionally having a substituent, pyridinium optionally having a substituent, or phosphonium optionally having a substituent as M in the formula described above.

The carboxylic acid-type hydrocarbon surfactant is preferably at least one selected from the group consisting of the surfactant (1-0A) represented by the general formula (1-0A), the compound (α), the surfactant (c) represented by the formula (c), and the surfactant (d) represented by the formula (d).

### <Fluorine-containing surfactant>

Examples of the fluorine-containing surfactant include anionic fluorine-containing surfactants.

The anionic fluorine-containing surfactant may be, for example, a fluorine atom-containing surfactant having 20 or less carbon atoms in total in the portion excluding the anionic group.

The fluorine-containing surfactant may also be a fluorine-containing surfactant having an anionic moiety having a molecular weight of 1000 or less, preferably 800 or less, and still more preferably 600 or less.

The "anionic moiety" means the portion of the fluorine-containing surfactant excluding the cation. For example, in the case of F(CF₂)ₙ₁COCM represented by the formula (I) described later, the anionic moiety is the "F(CF₂)ₙ₁COO" portion.

Examples of the fluorine-containing surfactant include fluorine-containing surfactants having a Log POW of 3.5 or less. The Log POW is a partition coefficient between 1-octanol and water, which is represented by Log P (wherein P is the ratio between the concentration of the fluorine-containing surfactant in octanol and the concentration of the fluorine-containing surfactant in water in a phase-separated octanol/water (1:1) liquid mixture containing the fluorine-containing surfactant).

Log POW is determined as follows. Specifically, HPLC is performed on standard substances (heptanoic acid, octanoic acid, nonanoic acid, and decanoic acid) each having a known octanol/water partition coefficient using TOSOH ODS-120T (ϕ4.6 mm×250 mm, manufactured by Tosoh Corp.) as a column and acetonitrile/0.6% by mass HClO₄ aqueous solution (=1/1 (vol/vol%)) as an eluent at a flow rate of 1.0 ml/min, a sample amount of 300 µL, and a column temperature of 40°C; with a detection light of UV 210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those disclosed in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Cpen No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the general formula (N⁰):

Xn⁰-Rfⁿ⁰-Y⁰ (N⁰)

wherein Xⁿ⁰ is H, Cl, and or F; Rfⁿ⁰ is a linear, branched, or cyclic alkylene group having 3 to 20 carbon atoms in which some or all of Hs are replaced by F; the alkylene group may contain one or more ether bonds, and some Hs may be replaced by Cl; and Y⁰ is an anionic group.

The anionic group Y⁰ may be -COCM, -SO₂M, or -SO₃M, and may be -COCM or -SO₃M.

M is H, a metal atom, NR^{8y}₄, imidazolium optionally having a substituent, pyridinium optionally having a substituent, or phosphonium optionally having a substituent, and R^{8y} is H or an organic group.

Examples of the metal atom include alkali metals (Group 1) and alkaline earth metals (Group 2), such as Na, K, or Li.

The alkyl group is preferable as the organic group in R^{8y}.

R^{8y} may be H or a C₁₋₁₀ organic group, may be H or a C₁₋₄ organic group, and may be H or a C₁₋₄ alkyl group.

M may be H, a metal atom, or NR^{8y}₄, may be H, an alkali metal (Group 1), an alkaline earth metal (Group 2), or NR^{8y}₄, and may be H, Na, K, Li, or NH₄.

Rfⁿ⁰ may be one in which 50% or more of H has been replaced by fluorine.

Examples of the compound represented by the general formula (N⁰) include:
a compound represented by
   the general formula (N¹):

   Xⁿ⁰-(CF₂)ₘ₁-Y⁰ (N¹)

   wherein Xⁿ⁰ is H, Cl, and F; m1 is an integer of 3 to 15; and Y⁰ is as defined above;
a compound represented by the general formula (N²):

   Rfⁿ¹-O-(CF (CF₃)CF₂O)ₘ₂CFXⁿ¹-Y⁰ (N²)

   wherein Rfⁿ¹ is a perfluoroalkyl group having 1 to 5 carbon atoms; m2 is an integer of 0 to 3; Xⁿ¹ is F or CF₃; and Y⁰ is as defined above;
a compound represented by the general formula (N³):

   Rfⁿ²(CH₂)ₘ₃-(Rfⁿ³)_{q}-Y⁰ (N³)

   wherein Rfⁿ² is a partially or fully fluorinated alkyl group having 1 to 13 carbon atoms and optionally containing an ether bond; m3 is an integer of 1 to 3; Rfⁿ³ is a linear or branched perfluoroalkylene group having 1 to 3 carbon atoms; q is 0 or 1; and Y⁰ is as defined above;
a compound represented by the general formula (N⁴):

   Rfⁿ⁴-O-(CYⁿ¹Yⁿ²)ₚCF₂-Y⁰ (N⁴)

   wherein Rfⁿ⁴ is a linear or branched partially or fully fluorinated alkyl group having 1 to 12 carbon atoms and optionally containing an ether bond and/or a chlorine atom; and Yⁿ¹ and Yⁿ² are the same or different and are each H or F; p is 0 or 1; and Y⁰ is as defined above; and
a compound represented by the general formula (N⁵): 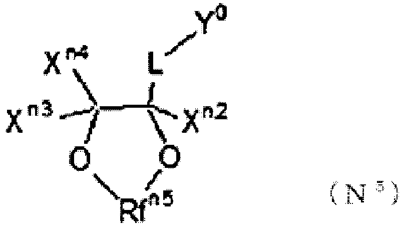
wherein Xⁿ², Xⁿ³, and Xⁿ⁴ may be the same or different and are each H, F, or a linear or branched partial or fully fluorinated alkyl group having 1 to 6 carbon atoms and optionally containing an ether bond; Rfⁿ⁵ is a linear or branched partially or fully fluorinated alkylene group having 1 to 3 carbon atoms and optionally containing an ether bond; L is a linking group; and Y⁰ is as defined above, with the proviso that the total carbon number of Xⁿ², Xⁿ³, Xⁿ⁴, and Rfⁿ⁵ is 18 or less.

More specific examples of the compound represented by the general formula (N⁰) include a perfluorocarboxylic acid (I) represented by the general formula (I), an ω-H perfluorocarboxylic acid (II) represented by the general formula (II), a perfluoropolyethercarboxylic acid (III) represented by the general formula (III), a perfluoroalkylalkylenecarboxylic acid (IV) represented by the general formula (IV), a perfluoroalkoxyfluorocarboxylic acid (V) represented by the general formula (V), a perfluoroalkylsulfonic acid (VI) represented by the general formula (VI), an ω-H perfluorosulfonic acid (VII) represented by the general formula (VII), a perfluoroalkylalkylene sulfonic acid (VIII) represented by the general formula (VIII), an alkylalkylene carboxylic acid (IX) represented by the general formula (IX), a fluorocarboxylic acid (X) represented by the general formula (X), an alkoxyfluorosulfonic acid (XI) represented by the general formula (XI), a compound (XII) represented by the general formula (XII), and a compound (XIII) represented by the general formula (XIII).

The perfluorocarboxylic acid (I) is represented by the general formula (I)

F (CF₂)ₙ₁COOM (I)

wherein n1 is an integer of 3 to 14; and M is H, a metal atom, NR⁷₄, imidazolium optionally having a substituent, pyridinium optionally having a substituent, or phosphonium optionally having a substituent, and R⁷ is H or an organic group.

The ω-H perfluorocarboxylic acid (II) is represented by the general formula (II)

H (CF₂)ₙ₂COOM (II)

wherein n2 is an integer of 4 to 15; and M is as defined above.

The perfluoropolyethercarboxylic acid (III) is represented by the general formula (III)

Rf¹-O-(CF (CF₃)CF₂O)ₙ₃CF(CF₃)COOM (III)

wherein Rf¹ is a perfluoroalkyl group having 1 to 5 carbon atoms; n3 is an integer of 0 to 3; and M is as defined above.

The perfluoroalkylalkylenecarboxylic acid (IV) is represented by the general formula (IV)

Rf² (CH₂)ₙ₄Rf³COOM (IV)

wherein Rf² is a perfluoroalkyl group having 1 to 5 carbon atoms; Rf³ is a linear or branched perfluoroalkylene group having 1 to 3 carbon atoms; n4 is an integer of 1 to 3; and M is as defined above.

The alkoxyfluorocarboxylic acid (V) is represented by the general formula (V)

Rf⁴-O-CY¹Y²CF₂-COOM (V)

wherein Rf⁴ is a linear or branched partially or fully fluorinated alkyl group having 1 to 12 carbon atoms and optionally containing an ether bond and/or a chlorine atom; Y¹ and Y² are the same or different and are each H or F; and M is as defined above.

The perfluoroalkylsulfonic acid (VI) is represented by the general formula (VI)

F(CF₂)ₙ₅SO₃M (VI)

wherein n5 is an integer of 3 to 14; and M is as defined above.

The ω-H perfluorosulfonic acid (VII) is represented by the general formula (VII)

H (CF₂)ₙ₆SO₃M (VII)

wherein n6 is an integer of 4 to 14; and M is as defined above.

The perfluoroalkylalkylenesulfonic acid (VIII) is represented by the general formula (VIII)

Rf⁵ (CH₂)ₙ₇SO₃M (VIII)

wherein Rf⁵ is a perfluoroalkyl group having 1 to 13 carbon atoms; n7 is an integer of 1 to 3; and M is as defined above.

The alkylalkylenecarboxylic acid (IX) is represented by the general formula (IX)

Rf⁶ (CH₂)ₙ₈COOM (IX)

wherein Rf⁶ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the general formula (X)

Rf⁷-O-Rf⁸-O-CF₂-COOM (X)

wherein Rf⁷ is a linear or branched partially or fully fluorinated alkyl group having 1 to 6 carbon atoms and optionally containing an ether bond and/or a chlorine atom; Rf⁸ is a linear or branched partially or fully fluorinated alkyl group having 1 to 6 carbon atoms; and M is as defined above.

The alkoxyfluorosulfonic acid (XI) is represented by the general formula (XI)

Rf⁹-O-CY¹Y²CF₂-SO₃M (XI)

wherein Rf⁹ is a linear or branched partially or fully fluorinated alkyl group having 1 to 12 carbon atoms and optionally containing an ether bond and optionally containing chlorine; Y¹ and Y² are the same or different and are each H or F; and M is as defined above.

The compound (XII) is represented by the general formula (XII): 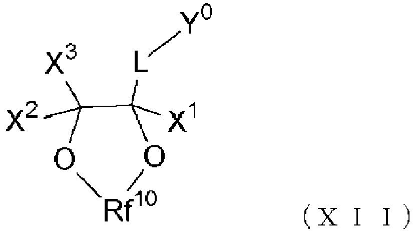 wherein X¹, X², and X³ may be the same or different and are H, F, or a linear or branched partially or fully fluorinated alkyl group having 1 to 6 carbon atoms and optionally containing an ether bond; Rf¹⁰ is a perfluoroalkylene group having 1 to 3 carbon atoms; L is a linking group; and Y⁰ is an anionic group.

Y⁰ may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the general formula (XIII) :

Rf¹¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms containing chlorine, n9 is an integer of 0 to 3, n10 is an integer of 0 to 3, and M is the same as defined above. Examples of the compound (XIII) include CF₂ClO(CF₂CF(CF₃)O)ₙ₉(CF₂O)ₙ₁₀CF₂COONH₄ (mixture having an average molecular weight of 750, in the formula, n9 and n10 are defined above).

As described above, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

Examples of the fluorine-containing surfactant include compounds represented by the following formulas. The fluorine-containing surfactant may be a mixture of these compounds. In one embodiment, the composition of the present disclosure is substantially free from a compound represented by the following formulas:

F (CF₂)₇COOM,

F (CF₂)₅COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂FₛOCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COCM,

CF₂ClCF₂CF₂OCF₂CF(CF₃)OCF₂COOM,

CF₂ClCF(CF₃)OCF(CF₃)CF₂OCF₂COOM,

and

CF₂ClCF(CF₃)OCF₂CF(CF₃)OCF₂COOM,

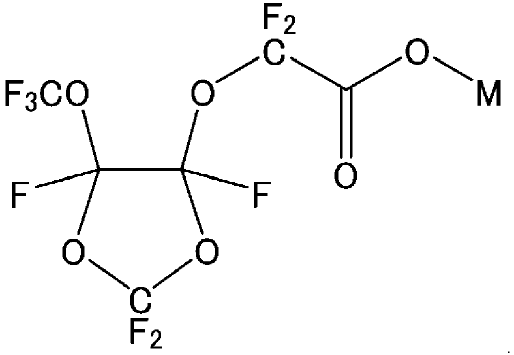

wherein M is H, a metal atom, NR⁷₄, imidazolium optionally having a substituent, pyridinium optionally having a substituent, or phosphonium optionally having a substituent.

In the present disclosure, "substantially free from a compound represented by the above formula" means that the content of the compound represented by the above formula in the composition is, in total, 10 mass ppm or less, preferably 1 mass ppm or less, more preferably 100 mass ppb or less, still more preferably 10 mass ppb or less, further more preferably 1 mass ppb or less, and particularly preferably equal to or less than the detection limit as measured by liquid chromatography-mass spectrometry (LC/MS/MS).

### <Chain transfer agent>

Examples of the chain transfer agent include esters such as dimethyl malonate, diethyl malonate, methyl acetate, ethyl acetate, butyl acetate, and dimethyl succinate, as well as isopentane, methane, ethane, propane, isobutane, methanol, ethanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the following general formula:
R^{a}IₓBr_{y}
wherein x and y are each an integer of 0 to 2 and satisfy 1 ≤ x + y ≤ 2;
and R^{a} is a saturated or unsaturated fluorohydrocarbon or chlorofluorohydrocarbon group having 1 to 16 carbon atoms, or a hydrocarbon group having 1 to 3 carbon atoms, each of which optionally contains an oxygen atom. By using a bromine compound or an iodine compound, iodine or bromine is introduced into the polymer, and serves as a crosslinking point.

Examples of the bromine compound or the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used alone or in any combination.

The chain transfer agent is preferably at least one selected from the group consisting of alkanes and alcohols from the viewpoints of polymerization reactivity, crosslinkablility, availability, and the like. The alkane preferably has 1 to 6, and more preferably 1 to 5 carbon atoms. Further, the alcohol preferably has 1 to 5, and more preferably 1 to 4 carbon atoms. The chain transfer agent is particularly preferably at least one selected from the group consisting of methane, ethane, propane, isobutane, methanol, ethanol, and isopropanol.

The amount of the chain transfer agent is preferably 0.001 to 10,000 mass ppm based on the aqueous medium. The amount of the chain transfer agent is more preferably 0.01 mass ppm or more, still more preferably 0.05 mass ppm or more, and particularly preferably 0.1 mass ppm or more based on the aqueous medium. The amount thereof is more preferably 1,000 mass ppm or less, still more preferably 500 mass ppm or less, and particularly preferably 100 mass ppm or less based on the aqueous medium.

Next, embodiments of the production method of the present disclosure will be described in more detail.

The production method of the present disclosure may further include a step of adjusting the pH of the aqueous medium containing the hydrocarbon surfactant to basic. Regarding the basicity, the pH is preferably 7.1 or higher, more preferably 7.5 or higher, still more preferably 8.0 or higher, particularly preferably 8.5 or higher, and still further preferably 9.0 or higher. By adjusting the pH to basic, the surfactant abilities can be increased. The step of adjusting the pH may be performed before or after the step of performing the radical treatment or the oxidation treatment on the carboxylic acid-type hydrocarbon surfactant, but is preferably performed thereafter. Examples of the method of adjusting the pH include, but are not limited to, a method of adding a pH adjuster to the aqueous medium. Examples of the pH adjuster include ammonia, NaOH aqueous solution, potassium hydroxide aqueous solution, sodium carbonate, potassium carbonate, ammonium carbonate, sodium hydrogen carbonate, potassium hydrogen carbonate, ammonium hydrogen carbonate, sodium phosphate, potassium phosphate, sodium citrate, potassium citrate, ammonium citrate, sodium gluconate, potassium gluconate, and ammonium gluconate. The pH can be measured by a pH meter manufactured by Orion.

The polymerization step is also preferably a step in which the polymerization is performed in an aqueous medium having a pH of 4.0 or more in the presence of a hydrocarbon surfactant and a polymerization initiator. The polymerization step is preferably performed in an aqueous medium having a pH of 4.0 or higher. Conventionally, the pH of the aqueous medium used in the polymerization was less than 4.0 because an acidic polymerization initiator was used in the polymerization step for producing PTFE. As a result of diligent studies by the present disclosers, surprisingly, it has been found that by setting the pH of the aqueous medium used for polymerization to 4.0 or more, the stability of polymerization is improved and PTFE having a high molecular weight can be produced.

The pH may be 4.0 or more, preferably more than 4.0, more preferably 4.5 or more, still more preferably 5.0 or more, further preferably 5.5 or more, still further preferably 6.0 or more, particularly preferably 6.5 or more, particularly preferably 7.0 or more, particularly preferably 7.5 or more, and particularly preferably 8.0 or more. The upper limit value of the pH is not limited, but may be, for example, 13.0 or less. From the viewpoint of corrosion of the polymerization tank, it is preferably 12.0 or less, more preferably 11.5 or less, and still more preferably 11.0 or less.

The pH can be measured by a pH meter.

In the polymerization step, the hydrocarbon surfactant is preferably an anionic hydrocarbon surfactant, and more preferably a carboxylic acid-type hydrocarbon surfactant.

The method of adjusting the pH of the aqueous medium to 4.0 or more is not limited, but the pH can be made 4.0 or more by using, for example, an alkaline aqueous solution, an alkaline aqueous dispersion, or a pH adjuster, but the method is not limited. Further, even in a case where a polymerization initiator that shows acidity when dissolved in an aqueous medium is used, the pH can be adjusted to 4.0 or more by further adding an alkaline compound such as sodium hydroxide. The alkali compound may be any compound which dissolves in water and ionizes to produce OH⁻, and examples thereof include, but not limited to, a hydroxide of an alkali metal such as sodium hydroxide or potassium hydroxide; a hydroxide of alkaline earth metals; ammonia; and amines. The polymerization step may include a step of adding an alkaline compound to an aqueous medium.

The pH of the aqueous medium may be 4.0 or more during the entire period of the polymerization step. Further, the pH may be 4.0 or more in the middle of the polymerization step, or the pH may be 4.0 or more in the final stage of the polymerization step. Further, the pH may be 4.0 or more in the middle and the final stage of the polymerization step.

For example, in the polymerization step, the pH of the aqueous medium is preferably 4.0 or more when the polymer solid concentration is 3% by mass or more. In other words, the polymerization step is a step of polymerizing a fluoromonomer in an aqueous medium in the presence of a hydrocarbon surfactant to obtain a fluoropolymer, and in the polymerization step, the pH is preferably 4.0 or more when the polymer solid concentration is 3% by mass or more. The aqueous medium preferably has a pH of 4.0 or more when the polymer solid concentration is 5% by mass or more, still more preferably has a pH of 4.0 or more when the polymer solid concentration is 8% by mass or more, further preferably has a pH of 4.0 or more when the polymer solid concentration is 10% by mass or more, still further preferably has a pH of 4.0 or more when the polymer solid concentration is 15% by mass or more, particularly preferably has a pH of 4.0 or more when the polymer solid concentration is 18% by mass or more, more preferably has a pH of 4.0 or more when the polymer solid concentration is 20% by mass or more, and still more preferably has a pH of 4.0 or more when the polymer solid concentration is 25% by mass or more.

Further, in the polymerization step, the pH of the aqueous medium is preferably maintained at 4.0 or more from the time point when the polymer solid concentration becomes 25% by mass to the completion of polymerization, more preferably maintained at 4.0 or more from the time point when the polymer solid concentration becomes 20% by mass to the completion of polymerization, still more preferably maintained at 4.0 or more from the time point when the polymer solid concentration becomes 18% by mass to the completion of polymerization, further preferably maintained at 4.0 or more from the time point when the polymer solid concentration becomes 15% by mass to the completion of polymerization, still further preferably maintained at 4.0 or more from the time point when the polymer solid concentration becomes 10% by mass to the completion of polymerization, particularly preferably maintained at 4.0 or more from the time point when the polymer solid concentration becomes 8% by mass to the completion of polymerization, more preferably maintained at 4.0 or more from the time point when the polymer solid concentration becomes 5% by mass to the completion of polymerization, and still more preferably maintained at 4.0 or more from the time point when the polymer solid concentration becomes 3% by mass to the completion of polymerization.

In the polymerization step, the pH of the aqueous medium is also preferably 4.0 or more when the polymer solid concentration is less than 15% by mass. In the polymerization step, the pH of the aqueous medium is more preferably 4.0 or more when the polymer solid concentration is 3% by mass or more and less than 15% by mass, the pH of the aqueous medium is more preferably 4.0 or more when the polymer solid concentration is 5% by mass or more and less than 15% by mass, the pH of the aqueous medium is still more preferably 4.0 or more when the polymer solid concentration is 8% by mass or more and less than 15% by mass, and the pH of the aqueous medium is further preferably 4.0 or more when the polymer solid concentration is 10% by mass or more and less than 15% by mass.

In the polymerization step, the pH of the aqueous medium is preferably maintained at 4.0 or more while the polymer solid concentration is 10% by mass or more and up to 15% by mass, the pH of the aqueous medium is more preferably maintained at 4.0 or more while the polymer solid concentration is at 8% by mass or more and up to 15% by mass, and the pH of the aqueous medium is further preferably maintained at 4.0 or more while polymer solid concentration is 5% by mass or more and up to 15% by mass.

The pH of the aqueous medium is preferably more than 4.0 in any case, more preferably 4.5 or more, still more preferably 5.0 or more, further preferably 5.5 or more, still further preferably 6.0 or more, particularly preferably 6.5 or more, more preferably 7.0 or more, still more preferably 7.5 or more, and further preferably 8.0 or more.

In the polymerization step, from the time of the initiation of the polymerization to the time point when the polymer solid concentration is 3% by mass (preferably 5% by mass, more preferably 8% by mass, still more preferably 10% by mass, further preferably 15% by mass, still further preferably 18% by mass, yet still further preferably 20% by mass, particularly preferably 25% by mass), the pH of the aqueous medium is preferably 4.0 or more during a period of 60% or more (preferably 70% or more, more preferably 80% or more, still more preferably 90% or more, further preferably 95% or more, still further preferably 99% or more, particularly preferably 100%).

In the polymerization step, during a period of 60% or more (preferably 70% or more, more preferably 80% or more, still more preferably 90% or more, further preferably 95% or more, still further preferably 99% or more, particularly preferably 100%) from the time point when the polymer solid concentration is 10% by mass (preferably 8% by mass, more preferably 5% by mass, still more preferably 3% by mass, further preferably polymerization initiation) to the time point when the polymer solid concentration is 15% by mass, the pH of the aqueous medium is preferably 4.0 or more.

In the polymerization step, during a period of 60% or more (preferably 70% or more, more preferably 80% or more, still more preferably 90% or more, further preferably 95% or more, still further preferably 99% or more, particularly preferably 100%) from the time point when the polymer solid concentration is 15% by mass to the time point when the polymer solid concentration is 18% by mass (preferably 20% by mass, more preferably 25% by mass), the pH of the aqueous medium is preferably 4.0 or more.

In the polymerization step, during a period of 60% or more (preferably 70% or more, more preferably 80% or more, still more preferably 90% or more, further preferably 95% or more, more preferably 99% or more, particularly preferably 100%) from the time point when the polymer solid concentration is 25% by mass (preferably 20% by mass, more preferably 18% by mass, still more preferably 15% by mass, further preferably 10% by mass, still further preferably 8% by mass, particularly preferably 5% by mass, more preferably 3% by mass, and still more preferably polymerization initiation) to the time point when the polymerization is completed, the pH of the aqueous medium is preferably 4.0 or more.

The pH of the aqueous medium is preferably more than 4.0 in any case, more preferably 4.5 or more, still more preferably 5.0 or more, further preferably 5.5 or more, still further preferably 6.0 or more, particularly preferably 6.5 or more, more preferably 7.0 or more, still more preferably 7.5 or more, and further preferably 8.0 or more.

Also, the polymerization step preferably further includes a polymerization step of polymerizing a fluoromonomer in an aqueous medium in the presence of an anionic hydrocarbon surfactant and a polymerization initiator to obtain a fluoropolymer, in which the hydrocarbon surfactant contains a salt of the hydrocarbon surfactant. In other words, at least a part of the anionic hydrocarbon surfactant in the polymerization step is in the form of a salt.

As a result of diligent studies by the present disclosers and others, surprisingly, it has been found that by containing a salt of an anionic hydrocarbon surfactant, the stability of polymerization is improved and fluoropolymer having a high molecular weight can be produced.

It can be confirmed by measuring the conductivity that the anionic hydrocarbon surfactant contains a salt of the hydrocarbon surfactant.

The anionic hydrocarbon surfactant preferably has a salt concentration of 50% by mass or more, more preferably 60% by mass or more, still more preferably 70% by mass or more, further preferably 80% by mass or more, still further preferably 90% by mass or more, and particularly preferably 95% by mass or more, based on the total mass of the anionic hydrocarbon surfactant.

The ratio of the salt can be measured by the solution concentration and the conductivity.

In the polymerization step, the hydrocarbon surfactant is more preferably a carboxylic acid-type hydrocarbon surfactant.

In the salt of an anionic hydrocarbon surfactant, the cation that replaces the hydrogen atom of the acid (excluding hydrogen atom) are, for example, a metal atom, NR^{y}₄ (each R^{y} may be the same or different and H or an organic group), imidazolium optionally having a substituent, pyridinium optionally having a substituent, or phosphonium optionally having a substituent. R^{y} is preferably H or an alkyl group, more preferably H or an alkyl group having 1 to 10 carbon atoms, and still more preferably H or an alkyl group having 1 to 4 carbon atoms.

The cation in the salt of the anionic hydrocarbon surfactant is preferably a metal atom or NR^{y}₄, more preferably NR^{y}₄, and still more preferably NH₄.

Since the conductivity varies greatly depending on the temperature, the conductivity is measured using a thermostatic bath while keeping the sample liquid temperature at 25°C and the cell temperature of the pH meter at the same temperature.

The polymerization step is preferably performed substantially in the absence of the hydrocarbon surfactant in the form of an organic acid. By polymerizing substantially in the absence of the hydrocarbon surfactant in the form of an organic acid, the stability of the polymerization is further improved and a high-molecular-weight fluoropolymer can be obtained.

Substantially in the absence of the hydrocarbon surfactant in the form of an organic acid, the concentration of the organic acid is preferably 1.0% by mass or less, more preferably 0.5% by mass or less, still more preferably 0.1% by mass or less, further preferably 0.05% by mass or less, and particularly preferably 0.01% by mass or less, based on the mass of the resulting aqueous dispersion.

In the present disclosure, the term "organic acid" means an organic compound that exhibits acidity. Examples of the organic acid include a carboxylic acid having a -COOH group, and a sulfonic acid having a -SO₃H group, and preferred is a carboxylic acid from the viewpoint that the pH of an aqueous solution containing the organic acid can be easily adjusted.

Further, "form of an organic acid" is a form in which H is not free from the acidic group contained in the organic acid (for example, -COOH group, -SO₃H group) .

The polymerization step preferably includes an addition step of adding a composition containing a hydrocarbon surfactant after the initiation of the polymerization. By the addition step, the stability of polymerization is further improved, and a higher-molecular-weight PTFE can be obtained.

The hydrocarbon surfactant may be, for example, in the form of a solid (for example, powder of a hydrocarbon surfactant) or in the form of a liquid.

The composition may be any one containing a hydrocarbon surfactant, may be composed of only a hydrocarbon surfactant, or may be a solution or dispersion of a hydrocarbon surfactant containing a hydrocarbon surfactant and a liquid medium. Therefore, the addition step can also be said to be a step of adding an hydrocarbon surfactant alone or a composition containing the hydrocarbon surfactant after the initiation of polymerization.

The hydrocarbon surfactant is not limited to one type, and may be a mixture of two or more types. The liquid medium may be either an aqueous medium or an organic solvent, or may be a combination of an aqueous medium and an organic solvent.

Specific examples of the composition include an aqueous solution in which a hydrocarbon surfactant is dissolved in an aqueous medium and an aqueous dispersion in which a hydrocarbon surfactant is dispersed in an aqueous medium.

The hydrocarbon surfactant added in the addition step is preferably 0.0001 to 10% by mass based on the aqueous medium. It is more preferably 0.001% by mass or more, still more preferably 0.01% by mass or more, and particularly preferably 0.05% by mass or more based on the aqueous medium. Further, it is more preferably 5% by mass or less, still more preferably 3% by mass or less, and particularly preferably 1% by mass or less based on the aqueous medium.

Since the stability of polymerization is improved and a higher-molecular-weight PTFE can be obtained, the composition is preferably an aqueous solution containing a hydrocarbon surfactant and having a pH of 5.0 or more.

The pH of the aqueous solution is more preferably 6.0 or more, still more preferably 6.5 or more, further preferably 7.0 or more, still further preferably 7.5 or more, and particularly preferably 8.0 or more. The upper limit of pH is not limited, but may be 12.0 or less, or may be 11.0 or less.

The hydrocarbon surfactant in the addition step is preferably an anionic hydrocarbon surfactant, and more preferably a carboxylic acid-type hydrocarbon surfactant.

The anionic hydrocarbon surfactant and the carboxylic acid-type hydrocarbon surfactant are not limited, but for example, the anionic hydrocarbon surfactants and the carboxylic acid-type hydrocarbon surfactants exemplified as the hydrocarbon surfactants can be preferably used.

The production method of PTFE of the present disclosure can be efficiently performed by using at least one of the hydrocarbon surfactants. Further, the PTFE of the present disclosure may be produced by simultaneously using two or more of the hydrocarbon surfactants, or may be produced by simultaneously using a surfactant other than the hydrocarbon surfactants, as long as the compound has volatility or may remain in a molded body or the like made of PTFE.

The polymerization step may further polymerize TFE in the presence of a nucleating agent. That is, the polymerization step is preferably a step of polymerizing TFE in an aqueous medium in the presence of a hydrocarbon surfactant (excluding nonionic surfactant) and the nucleating agent to obtain PTFE.

The nucleating agent is preferably, for example, at least one selected from the group consisting of fluoropolyether, and a nonionic surfactant. It is particularly preferable to use an anionic hydrocarbon surfactant as the hydrocarbon surfactant and a nonionic surfactant as the nucleating agent.

The mass ratio of the hydrocarbon surfactant to the nucleating agent (hydrocarbon surfactant: nucleating agent) is preferably 10:1 to 100 × 10⁴:1, more preferably 100:1 to 15 × 10⁴:1, and still more preferably 500:1 to 1 × 10⁴:1.

The fluoropolyether is preferably perfluoropolyether.

The fluoropolyether preferably has a repeating unit represented by the formulas (1a) to (1d):

(-CFCF₃-CF₂-O-)ₙ (1a)

(-CF₂-CF₂-CF₂-O-)ₙ (1b)

(-CF₂-CF₂-O-)ₙ-(-CF₂-O-)ₘ (1c)

(-CF₂-CPCF₃-O-)ₙ-(-CF₂-O-)m (1d)

wherein m and n are integers of 1 or more.

The fluoropolyether is preferably fluoropolyetheric acid or a salt thereof, and the fluoropolyetheric acid is preferably a carboxylic acid, a sulfonic acid, a sulfonamide, or a phosphonic acid, and more preferably a carboxylic acid. Among the fluoropolyetheric acid or a salt thereof, a salt of fluoropolyetheric acid is preferable, an ammonium salt of fluoropolyetheric acid is more preferable, and an ammonium salt of fluoropolyethercarboxylic acid is still more preferable.

The fluoropolyetheric acid or a salt thereof can have any chain structure in which oxygen atoms in the main chain of the molecule are separated by saturated fluorocarbon groups having 1 to 3 carbon atoms. Two or more types of fluorocarbon groups can be present in the molecule.

The fluoropolyether acid or its salt is preferably a compound represented by the following formula:
CF₃-CF₂-CF₂-O(-CFCF₃-CF₂-O-)ₙCFCF₃-COOH, CF₃-CF₂-CF₂-O(-CF₂-CF₂-CF₂-O-)ₙ-CF₂-CF₂COOH, or HOOC-CF₂-O(-CF₂-CF₂-O-)ₙ-(-CF₂-O-)ₘCF₂COOH,
(wherein m and n are the same as above)
or a salt thereof.

These structures are described in J. Appl. Polymer Sci., 57, 797(1995) examined by Kasai. As disclosed herein, such fluoropolyethers can have a carboxylic acid group or a salt thereof at one end or both ends. Similarly, such fluoropolyethers may have a sulfonic acid or phosphonic acid group or a salt thereof at one end or both ends. In addition, fluoropolyethers having acid functional groups at both ends may have different groups at each end. Regarding monofunctional fluoropolyether, the other end of the molecule is usually perfluorinated, but may contain a hydrogen or chlorine atom.

Fluoropolyethers having acid groups at one or both ends have at least two ether oxygens, preferably at least four ether oxygens, and still more preferably at least six ether oxygens. Preferably, at least one fluorocarbon group separating ether oxygens, more preferably at least two of such fluorocarbon groups, has 2 or 3 carbon atoms. Still more preferably, at least 50% of the fluorocarbon groups separating ether oxygens has 2 or 3 carbon atoms. Also preferably, the fluoropolyether has at least 15 carbon atoms in total, and for example, a preferable minimum value of n or n + m in the repeating unit structure is preferably at least 5. Two or more fluoropolyethers having an acid group at one end or both ends can be used in the methods according to the present disclosure. Typically, fluoropolyethers may contain a plurality of compounds in varying proportions within the molecular weight range relative to the average molecular weight, unless special care is taken in the production of a single specific fluoropolyether compound.

The fluoropolyether preferably has a number average molecular weight of 800 g/mol or more. The fluoropolyether acid or the salt thereof preferably has a number average molecular weight of less than 6,000 g/mol, because the fluoropolyether acid or the salt thereof may be difficult to disperse in an aqueous medium. The fluoropolyether acid or the salt thereof more preferably has a number average molecular weight of 800 to 3,500 g/mol, and still more preferably 1,000 to 2,500 g/mol.

The amount of the fluoropolyether is preferably 5 to 3,000 mass ppm based on the aqueous medium, more preferably 5 to 2,000 mass ppm, still more preferably 10 mass ppm as a lower limit, and still more preferably 100 mass ppm as an upper limit.

Examples of the nonionic surfactant as the nucleating agent include the nonionic surfactant described above, and a fluorine-free nonionic surfactant is preferable. Examples of the nonionic surfactant include a compound represented by the general formula (i):

R³-O-A¹-H (i)

wherein R³ is a linear or branched primary or secondary alkyl group having 8 to 18 carbon atoms, and A¹ is a polyoxyalkylene chain. R³ preferably has 10 to 16, more preferably 12 to 16 carbon atoms. When R³ has 18 or less carbon atoms, the aqueous dispersion tends to have good dispersion stability. On the other hand, when the number of carbon atoms in R³ exceeds 18, it is difficult to handle because of the high flow temperature. When R³ has less than 8 carbon atoms, the surface tension of the aqueous dispersion becomes high, so that the permeability and wettability are likely to decrease.

The polyoxyalkylene chain may be composed of oxyethylene and oxypropylene. The polyoxyalkylene chain is preferably a polyoxyalkylene chain composed of an average repeating number of 5 to 20 oxyethylene groups and an average repeating number of 0 to 2 oxypropylene groups, and is a hydrophilic group. The number of oxyethylene units may have either a broad or narrow monomodal distribution as typically supplied, or a broader or bimodal distribution which may be obtained by blending. When the average repeating number of oxypropylene groups is more than 0, the oxyethylene groups and oxypropylene groups in the polyoxyalkylene chain may be arranged in blocks or randomly.

From the viewpoint of viscosity and stability of the aqueous dispersion, a polyoxyalkylene chain composed of an average repeating number of 7 to 12 oxyethylene groups and an average repeating number of 0 to 2 oxypropylene groups is preferred. In particular, when A¹ has 0.5 to 1.5 oxypropylene groups on average, low foaming properties are good, which is preferable.

More preferably, R³ is (R')(R")HC-, wherein R' and R" are the same or different linear, branched, or cyclic alkyl groups, and the total amount of carbon atoms is at least 5, preferably 7 to 17. Preferably, at least one of R' and R" is a branched or cyclic hydrocarbon group.

Specific examples of the nonionic surfactant include C₁₃H₂₇-O-(C₂H₄O)₁₀-H, C₁₂H₂₅-O-(C₂H₄O)₁₀-H, C₁₀H₂₁CH(CH₃)CH₂-O-(C₂H₄O)₉-H, C₁₃H₂₇-O-(C₂H₄O)₉-(CH (CH₃)CH₂O)-H, C₁₆H₃₃-O-(C₂H₄O)₁₀-H, and HC (C₅H₁₁)(C₇H₁₅)-O-(C₂H₄O)₉-H. Examples of commercially available products of the nonionic surfactant include Genapol X080 (product name, available from Clariant), NOIGEN TDS series (available from DKS Co., Ltd.) exemplified by NOIGEN TDS-80 (trade name), LEOCOL TD series (available from Lion Corp.) exemplified by LEOCOL TD-90 (trade name), LIONOL(R) TD series (available from Lion Corp.), T-Det A series (available from Harcros Chemicals Inc.) exemplified by T-Det A 138 (trade name), and TERGITOL(R) 15 S series (available from The Dow Chemical Company).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all product names, manufactured by Dow Chemical Co., Ltd.).

The hydrophobic group of the nonionic surfactant may be any of an alkylphenol group, a linear alkyl group, and a branched alkyl group.

Examples of the nonionic surfactant include a polyoxyethylene alkylphenyl ether-based nonionic compound represented by the general formula (ii):

R⁴-C₆H₄-O-A²-H (ii)

wherein R⁴ is a linear or branched primary or secondary alkyl group having 4 to 12 carbon atoms, and A² is a polyoxyalkylene chain. Specific examples of the polyoxyethylene alkylphenyl ether-based nonionic compound include Triton X-100 (trade name, manufactured by Dow Chemical Company).

Examples of the nonionic surfactant also include polyol compounds. Specific examples thereof include those described in International Publication No. WO2011/014715.

Typical examples of the polyol compound include compounds having one or more sugar units as polyol unit. The sugar units may have been modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as the polyol compound include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars have been modified in that one or more of the hydrogen atoms of a hydroxy group (and/or hydroxyalkyl group) bonded to the carbon ring atoms has been substituted by the long chain residues such that an ether or ester bond is created between the long chain residue and the sugar moiety.

The sugar-based polyol may contain a single sugar unit or a plurality of sugar units. The single sugar unit or the plurality of sugar units may be modified with long chain moieties as described above. Specific examples of sugar-based polyol compound include glycosides, sugar esters, sorbitan esters, and mixtures and combinations thereof.

A preferred type of polyol compounds are alkyl or modified alkyl glucosides. These type of surfactants contains at least one glucose moiety. Examples of alkyl or modified alkyl glucosides include compounds represented by the formula: 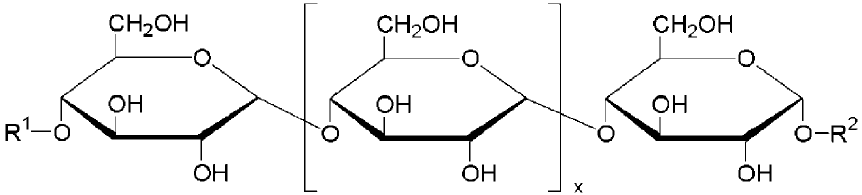 wherein x represents 0, 1, 2, 3, 4, or 5 and R¹ and R² each independently represent H or a long chain unit containing at least 6 carbon atoms, with the proviso that at least one of R¹ or R² is not H. Typical examples of R¹ and R² include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof.

It is understood that the above formula represents specific examples of alkyl poly glucosides showing glucose in its pyranose form but other sugars or the same sugars but in different enantiomeric or diastereomeric forms may also be used.

Alkyl glucosides are available, for example, by acid-catalyzed reactions of glucose, starch, or n-butyl glucoside with aliphatic alcohols which typically yields a mixture of various alkyl glucosides (Alkyl polygylcoside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic(R) R series, tridecyl alcohol alkoxylates supplied from BASF as Iconol(R) TDA series, and hydrocarbon-containing siloxane surfactants.

The amount of the nonionic surfactant is preferably 0.1 to 0.0000001% by mass, and more preferably 0.01 to 0.000001% by mass based on the aqueous medium.

Also, in the production method of the present disclosure, in addition to the hydrocarbon surfactant and other compounds having a surfactant function used as necessary, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. The stabilizing aid may be used alone or in combination of two or more. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. It is desirable that the stabilizing aid is sufficiently hydrophobic so that the stabilizing aid is completely separated from the PTFE aqueous emulsion after polymerization of TFE, and does not serve as a contaminating component.

The polymerization in the production method may be performed by charging a polymerization reactor with an aqueous medium, the hydrocarbon surfactant, a monomer, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomers, the polymerization initiator, a chain transfer agent, and the surfactant may additionally be added depending on the purpose. The hydrocarbon surfactant may be added after the polymerization reaction is initiated.

The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The polymerization initiator to be used may be an oil-soluble radical polymerization initiator, a water-soluble radical polymerization initiator, or a redox initiator.

The concentration of the polymerization initiator is appropriately determined depending on the types of the monomers, the molecular weight of the target PTFE, and the reaction rate.

The polymerization initiator may be added in any amount, and the initiator in an amount that does not significantly decrease the polymerization rate (e.g., several parts per million in water) or more may be added at once in the initial stage of polymerization, or may be added successively or continuously. The upper limit thereof falls within a range where the reaction temperature is allowed to increase while the polymerization reaction heat is removed through the device surfaces. The upper limit thereof is more preferably within a range where the polymerization reaction heat can be removed through the device surfaces.

The polymerization initiator to be used may be an oil-soluble radical polymerization initiator or a water-soluble radical polymerization initiator.

The oil-soluble radical polymerization initiator may be a known oil-soluble peroxide, and representative examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluorohexanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoylperfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples thereof include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

In the production method of the present disclosure, the polymerization initiator is preferably a redox initiator, and more preferably a redox initiator obtained by combining an oxidizing agent and a reducing agent. The use of a redox initiator allows for increasing the molecular weight of the obtained PTFE.

Further, in a case where the polymerization is performed at a low temperature of 30°C or lower, the polymerization initiator used is preferably a redox initiator obtained by combining an oxidizing agent and a reducing agent.

Examples of the oxidizing agent include persulfates such as ammonium persulfate and potassium persulfate; organic peroxides such as disuccinic acid peroxide and diglutaric acid peroxide; permanganic acid, permanganates such as ammonium permanganate, alkali metal salts of permanganate (potassium permanganate or the like), and alkali earth metal salts of permanganate; manganese triacetate (C₆HgMnO₆); cerium (IV) salts such as cerium ammonium nitrate and cerium ammonium sulfate; and bromic acid or salts thereof such as bromic acid, ammonium bromate, alkali metal salts of bromate, and alkaline earth metal salts of bromate.

Examples of the reducing agent include dicarboxylic acids such as oxalic acid, malonic acid, succinic acid, and glutaric acid or salts thereof; bromic acid or salts thereof; and diimines. The dicarboxylic acid or a salt thereof is preferably oxalic acid or a salt thereof. The bromic acid or a salt thereof is preferably potassium bromate.

In order to increase the decomposition rate of the initiator, the combination of the redox initiator preferably contains a copper salt or an iron salt. An example of the copper salt is copper(II) sulfate and an example of the iron salt is iron(II) sulfate.

In the redox initiator, the oxidizing agent is preferably a permanganic acid or a salt thereof, persulfate, manganese triacetate, a cerium (IV) salt, or bromic acid or a salt thereof, and the reducing agent is preferably a dicarboxylic acid or a salt thereof or diimine. The oxidizing agent is more preferably a permanganic acid or a salt thereof, persulfate, or bromic acid or a salt thereof, and the reducing agent is more preferably a dicarboxylic acid or a salt thereof.

Examples of the redox initiator include potassium permanganate/oxalic acid, potassium permanganate/ammonium oxalate, manganese triacetate/oxalic acid, manganese triacetate/ammonium oxalate, ammonium cerium nitrate/oxalic acid, ammonium cerium nitrate/ammonium oxalate, and bromate, and potassium permanganate/oxalate or potassium permanganate/ammonium oxalate is preferred.

In the case of using a redox initiator, either an oxidizing agent or a reducing agent may be charged into a polymerization tank in advance, followed by adding the other continuously or intermittently thereto to initiate the polymerization. For example, in the case of potassium permanganate/oxalic acid, preferably, oxalic acid is charged into a polymerization tank and potassium permanganate is continuously added thereto.

When the term "potassium permanganate/ammonium oxalate" is used in the redox initiator of the present disclosure, it means a combination of potassium permanganate and ammonium oxalate. The same applies to other compounds.

The redox initiator used is preferably an oxidizing agent or a reducing agent capable of adjusting the pH of the redox initiator aqueous solution to 4.0 or more. The redox initiator aqueous solution means a 0.50% by mass aqueous solution of an oxidizing agent or a 0.50% by mass aqueous solution of a reducing agent.

That is, at least one of the 0.50% by mass aqueous solution of the oxidizing agent and the 0.50% by mass aqueous solution of the reducing agent may have a pH of 4.0 or more, and it is preferable that both the 0.50% by mass aqueous solution of the oxidizing agent and the 0.50% by mass aqueous solution of the reducing agent have a pH of 4.0 or more.

The pH of the redox initiator aqueous solution (0.50% by mass aqueous solution of oxidizing agent or 0.50% by mass aqueous solution of reducing agent) is more preferably 5.0 or more, and still more preferably 5.5 or more, and particularly preferably 6.0 or more.

The redox initiator is particularly preferably a combination of an oxidizing agent which is a salt and a reducing agent which is a salt.

For example, the oxidizing agent which is a salt is more preferably at least one selected from the group consisting of a persulfate, a permanganate, a cerium (IV) salt and a bromate, still more preferably the permanganate, and particularly preferably potassium permanganate.

Further, the reducing agent which is a salt is more preferably at least one selected from the group consisting of oxalate, malonic acid, succinate, glutarate, and bromate, and still more preferably oxalate, and particularly preferably ammonium oxalate.

Specifically, the redox initiator is preferably at least one selected from the group consisting of potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/ammonium oxalate, potassium bromate/ammonium sulfite, and ammonium cerium nitrate/ammonium oxalate.

By using the redox initiator in the polymerization step, the SSG of the obtained PTFE can be reduced and the PTFE is made stretchable.

Further, by using the redox initiator in the polymerization step, the number of PTFE particles generated in the aqueous dispersion can be increased. The yield of PTFE can also be increased.

When a redox initiator is used, the oxidizing agent and the reducing agent may be added all at once at the initial stage of polymerization, or the reducing agent may be added all at once at the initial stage of polymerization and the oxidizing agent may be added continuously, or the oxidizing agent may be added all at once at the initial stage of polymerization and the reducing agent may be added continuously, or both the oxidizing agent and the reducing agent may be added continuously.

When a redox initiator is used as the polymerization initiator, the amount of the oxidizing agent added to the aqueous medium is preferably 5 to 10,000 mass ppm, more preferably 10 to 1,000 mass ppm, and the amount of the reducing agent added is preferably 5 to 10,000 mass ppm, more preferably from 10 to 1,000 mass ppm.

When a redox initiator is used in the polymerization step, the polymerization temperature is preferably 100°C or lower, more preferably 95°C or lower, and still more preferably 90°C or lower. The polymerization temperature is preferably 10°C or higher, more preferably 20°C or higher, and still more preferably 30°C or higher.

The polymerization initiator may be added in any amount, and the initiator in an amount that does not significantly decrease the polymerization rate (e.g., several parts per million in water) or more may be added at once in the initial stage of polymerization, or may be added successively or continuously. The upper limit thereof falls within a range where the reaction temperature is allowed to increase while the polymerization reaction heat is removed through the device surfaces. The upper limit thereof is more preferably within a range where the polymerization reaction heat can be removed through the device surfaces.

A radical polymerization initiator can also be used as the polymerization initiator. The radical polymerization initiator is preferably a peroxide. Examples of the radical polymerization initiator include the oil-soluble radical polymerization initiator and the water-soluble radical polymerization initiator described above, and the water-soluble radical polymerization initiator is preferred. The water-soluble radical polymerization initiator is more preferably a peroxide, and still more preferably a persulfate, an organic peroxide, or a mixture thereof. Examples of the persulfates include ammonium persulfate and potassium persulfate. Examples of the organic peroxide include disuccinic acid peroxide and diglutaric acid peroxide. Still more preferred are ammonium persulfate and disuccinic acid peroxide. In the polymerization step, for example, 5 mass ppm or more of ammonium persulfate is preferably added to the aqueous medium, more preferably 10 mass ppm or more, still more preferably 20 mass ppm or more, further preferably 30 mass ppm or more, still further preferably 40 mass ppm or more, yet still further preferably 50 mass ppm or more, particularly preferably 80 mass ppm or more, and very particularly preferably 100 mass ppm or more. In the polymerization step, the radical polymerization initiator may be added continuously or intermittently after the polymerization is initiated.

In the production method of the present disclosure, in particular, it is preferable that the modifying monomer contains at least one selected from the group consisting of hexafluoropropylene, perfluoro(alkyl vinyl ether) and (perfluoroalkyl)ethylene and the polymerization temperature is 10 to 150°C; and
the production method preferably further includes a step of adding the modifying monomer to the aqueous medium before the initiation of polymerization or when the concentration of PTFE formed in the aqueous medium is 5.0% by mass or less, preferably 3.0% by mass or less, more preferably 1.0% by mass or less, still more preferably 0.5% by mass or less, and particularly preferably at the same time as the initiation of the polymerization.

In the production method of the present disclosure, it is also preferable that the modifying monomer includes the modifying monomer (A) and
the polymerization temperature is 10 to 150°C; and
the production method preferably further includes a step of adding the modifying monomer to the aqueous medium before the initiation of polymerization or when the concentration of PTFE formed in the aqueous medium is 5.0% by mass or less, preferably 3.0% by mass or less, more preferably 1.0% by mass or less, still more preferably 0.5% by mass or less, and particularly preferably at the same time as the initiation of the polymerization.

A PTFE aqueous dispersion can be obtained by the production method of the present disclosure. The solid concentration of the PTFE aqueous dispersion is not limited, but may be, for example, 1.0 to 70% by mass. The solid concentration is preferably 8.0% by mass or more, more preferably 10.0% by mass or more, and more preferably 60.0% by mass or less, more preferably 50.0% by mass or less.

In the method for producing PTFE of the present disclosure, the adhesion amount to the finally obtained PTFE is preferably 3.0% by mass or less, more preferably 2.0% by mass or less, more preferably 1.0% by mass or less, still more preferably 0.8% by mass or less, further preferably 0.7% by mass or less, and particularly preferably 0.6% by mass or less.

Next, applications of the PTFE of the present disclosure and the PTFE obtained by the production method of the present disclosure will be described in more detail.

The PTFE may be a PTFE aqueous dispersion in which primary particles of PTFE are dispersed in an aqueous medium.

Examples of the applications of the PTFE aqueous dispersion include, but are not limited to, those in which the aqueous dispersion is directly used, such as coating achieved by applying the aqueous dispersion to a substrate, drying the dispersion, and optionally sintering the workpiece; impregnation achieved by impregnating a porous support such as nonwoven fabric or a resin molded article into the aqueous dispersion, drying the dispersion, and preferably sintering the workpiece; and casting achieved by applying the aqueous dispersion to a substrate such as glass, drying the dispersion, optionally immersing the workpiece into water to remove the substrate and to thereby provide a thin film. Examples of such applications include aqueous dispersion-type coating materials, tent membranes, conveyor belts, printed circuit boards (CCL), binders for electrodes, and water repellents for electrodes.

The PTFE aqueous dispersion may be used in the form of an aqueous coating material for coating by mixing with a known compounding agent such as a pigment, a thickener, a dispersant, a defoaming agent, an antifreezing agent, a film-forming aid, or by compounding another polymer compound.

Further, the PTFE aqueous dispersion may be used for additive applications, for example, for a binder application for preventing the active material of an electrode from falling off, for a compound application such as a drip inhibitor, or for a dust suppressing treatment application for preventing floating of sand, dust, and the like.

The PTFE aqueous dispersion is also preferably used as a dust suppression treatment agent. The dust suppression treatment agent can be used in a method for suppressing dust of a dust-generating substance by fibrillating PTFE by mixing with a dust-generating substance and applying a compression-shearing action to the mixture at a temperature of 20 to 200°C, for example, methods disclosed in Japanese Patent No. 2827152 and Japanese Patent No. 2538783.

The PTFE aqueous dispersion can be suitably used for, for example, the dust suppression treatment agent composition described in International Publication No. WO2007/004250, and can be suitably used for the dust control treatment method described in International Publication No. WO 2007/000812.

The dust suppression treatment agent is suitably used in the fields of building-products, soil stabilizers, solidifying materials, fertilizers, landfill of incineration ash and harmful substance, explosion proof equipment, cosmetics, sands for pet excretion represented by cat sand, and the like.

The production method of PTFE of the present disclosure suitably further includes at least one step among a step of recovering the PTFE aqueous dispersion obtained by the method described above, a step of coagulating the PTFE in the PTFE aqueous dispersion, a step of recovering the coagulated PTFE, and a step of drying the recovered PTFE at 100 to 300°C, preferably at 100 to 250°C.

A powder can be produced by coagulating PTFE contained in the aqueous dispersion. The PTFE aqueous dispersion can be used as a powder for various purposes after being post-treated such as concentration if necessary, and then coagulated, washed, and dried. Coagulation of the aqueous dispersion of the PTFE is usually performed by diluting the aqueous dispersion obtained by polymerization of polymer latex, for example, with water to a polymer concentration of 10 to 25% by mass, optionally adjusting the pH to a neutral or alkaline, and stirring the polymer more vigorously than during the reaction in a vessel equipped with a stirrer. The coagulation may be performed under stirring while adding a water-soluble organic compound such as methanol or acetone, an inorganic salt such as potassium nitrate or ammonium carbonate, or an inorganic acid such as hydrochloric acid, sulfuric acid, or nitric acid as a coagulating agent. The coagulation may be continuously performed using a device such as an inline mixer.

The PTFE aqueous dispersion has an average primary particle size of PTFE primary particles of preferably 50 to 340 nm, more preferably 100 to 340 nm, still more preferably 130 to 340 nm, further preferably 180 to 340 nm, still further preferably 190 to 340 nm, yet still further preferably 200 to 340 nm, yet still further preferably 210 to 340 nm, yet still further preferably 220 to 340 nm, yet still further preferably 220 to 320 nm, and yet still further preferably 240 to 320 nm.

When the average primary particle size of the PTFE primary particles is small, the stability of the PTFE aqueous dispersion is improved. However, when the PTFE aqueous dispersion is excessively stabilized, time and labor are required to concentrate the PTFE aqueous dispersion or to coagulate the PTFE primary particles by applying stirring shearing force to the PTFE aqueous dispersion to obtain the PTFE fine powder, and thus the production efficiency is often impaired. Further, there are problem in that when the average primary particle size of the PTFE primary particles is large, the stability of the PTFE aqueous dispersion decreases and the amount of the coagulated product during the polymerization of TFE increases, which is disadvantageous in terms of productivity; when the PTFE aqueous dispersion is concentrated after the polymerization of TFE, a large amount of the coagulated product is generated in the concentration tank; the sedimentation stability of the concentrated liquid is impaired and the storage stability is lowered; when the PTFE aqueous dispersion is agitated by applying an stirring shearing force to the PTFE aqueous dispersion to coagulate the PTFE primary particles to obtain the PTFE fine powder, a large amount of the coagulated product is generated before reaching the coagulation tank from the polymerization tank and the piping is clogged; and the yield is greatly reduced. When the average primary particle size of the PTFE primary particles is within the above range, the stability of the PTFE aqueous dispersion is excellent to such an extent that the subsequent processability, moldability and the like are not deteriorated, and molded body excellent in heat resistance and the like are easily obtained.

In the PTFE aqueous dispersion, the coagulation completion time measured by the method described in Examples to be described later is preferably improved by 20% or more (that is, increased by 20% or more) and is within 900 seconds, more preferably within 800 seconds, and still more preferably within 700 seconds, compared with the value of the PTFE aqueous dispersion obtained by polymerization under exactly the same conditions except that no modifying monomer is added.

When the improvement of the coagulation completion time is less than 20%, the effect of stabilizing the aqueous dispersion of PTFE is insufficient. Further, when the coagulation completion time exceeds 1,000 seconds, which means being too stable, the coagulation hydrophobization time until the PTFE fine powder is obtained becomes longer, which is disadvantageous in terms of productivity.

The aqueous dispersion may be any of an aqueous dispersion obtained by the polymerization, a dispersion obtained by concentrating this aqueous dispersion or subjecting the aqueous dispersion to dispersion stabilization treatment, and an aqueous dispersion obtained by dispersing powder of the PTFE into an aqueous medium in the presence of the surfactant.

The aqueous dispersion may also be produced as a purified aqueous dispersion by a method including a step (I) of bringing the aqueous dispersion obtained by the polymerization into contact with an anion exchange resin or a mixed bed containing an anion exchange resin and a cation exchange resin in the presence of a nonionic surfactant (I), and/or a step (II) of concentrating the aqueous dispersion obtained by this step such that the solid concentration is 30 to 70% by mass based on 100% by mass of the aqueous dispersion (II).

The nonionic surfactant may be, but is not limited to, any of those to be described later. The anion exchange resin to be used may be, but is not limited to, a known one. The contact with the anion exchange resin may be performed by a known method.

A method for producing the aqueous dispersion may include subjecting the aqueous dispersion obtained by the polymerization to the step (I), and subjecting the aqueous dispersion obtained in the step (I) to the step (II) to produce a purified aqueous dispersion. The step (II) may also be performed without carrying out the step (I) to produce a purified aqueous dispersion. Further, the step (I) and the step (II) may be repeated or combined.

Examples of the anion exchange resin include known ones such as a strongly basic anion exchange resin containing as a functional group a - N⁺X⁻(CH₃)₃ group (wherein X represents Cl or OH) or a strongly basic anion exchange resin containing a -N⁺X⁻(CH₃)₃(C₂H₄OH) group (wherein X is as described above). Specific examples thereof include those described in International Publication No. WO 99/62858, International Publication No. WO 03/020836, International Publication No. WO 2004/078836, International Publication No. WO 2013/027850, and International Publication No. WO 2014/084399.

Examples of the cation exchange resin include, but are not limited to, known ones such as a strongly acidic cation exchange resin containing as a functional group a -SO₃⁻ group and a weakly acidic cation exchange resin containing as a functional group a -COO⁻ group. Of these, from the viewpoint of achieving good removal efficiency, a strongly acidic cation exchange resin is preferred, a H⁺ form strongly acidic cation exchange resin is more preferred.

The "mixed bed containing a cation exchange resin and an anion exchange resin" encompasses, but is not limited to, those in which the resins are filled into a single column, those in which the resins are filled into different columns, and those in which the resins are dispersed in an aqueous dispersion.

The concentration may be performed by a known method. Specific examples include those described in International Publication No. WO 2007/046482 and International Publication No. WO 2014/084399. Examples thereof include phase separation, centrifugal sedimentation, cloud point concentration, electric concentration, electrophoresis, filtration treatment using ultrafiltration, filtration treatment using a reverse osmosis membrane (RO membrane), and nanofiltration treatment. The concentration can concentrate the PTFE concentration to 30 to 70% by mass depending on the application. The concentration may impair the stability of the dispersion. In such a case, a dispersion stabilizer may be further added.

The dispersion stabilizer added may be the aforementioned nonionic surfactant or various other surfactants.

The nonionic surfactant is the same as the nonionic surfactant exemplified as the nucleating agent described above, and can be appropriately selected from the nonionic surfactants described above. The nonionic surfactant is preferably free from an aromatic moiety.

Also, the cloud point of the nonionic surfactant is a measure of its solubility in water. The surfactant used in the aqueous dispersion of the present disclosure has a cloud point of about 30°C to about 90°C, preferably about 35°C to about 85°C.

The total amount of the dispersion stabilizer is 0.5 to 20% by mass in terms of concentration, based on the solid of the dispersion. When the amount of the dispersion stabilizer is less than 0.5% by mass, the dispersion stability may deteriorate, and when the amount thereof is more than 20% by mass, dispersion effects commensurate with the amount thereof may not be obtained, which is impractical. The lower limit of the amount of the dispersion stabilizer is more preferably 2% by mass, while the upper limit thereof is more preferably 12% by mass.

The surfactant may be removed by the concentration operation.

The aqueous dispersion obtained by the polymerization may also be subjected to a dispersion stabilization treatment without concentration depending on the application, to prepare an aqueous dispersion having a long pot life. Examples of the dispersion stabilizer used include the same as those described above.

For the purpose of adjusting the viscosity of the aqueous dispersion or improving the miscibility with a pigment or filler, the aqueous dispersion may preferably contain an anionic surfactant. The anionic surfactant may be appropriately added to an extent that causes no problems from the economic and environmental viewpoints.

Examples of the anionic surfactant include non-fluorinated anionic surfactants and fluorine-containing anionic surfactants. Preferred are fluorine-free, non-fluorinated anionic surfactants, i.e., hydrocarbon anion surfactants.

For the purpose of adjusting the viscosity, any known anionic surfactants may be used, for example, anionic surfactants disclosed in International Publication No. WO 2013/146950 and International Publication No. WO 2013/146947. Examples thereof include those having a saturated or unsaturated aliphatic chain having 6 to 40 carbon atoms, preferably 8 to 20 carbon atoms, and more preferably 9 to 13 carbon atoms. The saturated or unsaturated aliphatic chain may be either linear or branched, or may have a cyclic structure. The hydrocarbon may have aromaticity, or may have an aromatic group. The hydrocarbon may contain a hetero atom such as oxygen, nitrogen, or sulfur.

Examples of the anionic surfactants include alkyl sulfonates, alkyl sulfates, and alkyl aryl sulfates, and salts thereof; aliphatic (carboxylic) acids and salts thereof; and phosphoric acid alkyl esters and phosphoric acid alkyl aryl esters, and salts thereof. Of these, preferred are alkyl sulfonates, alkyl sulfates, and aliphatic carboxylic acids, or salts thereof.

Preferable examples of the alkyl sulfates or salts thereof include ammonium lauryl sulfate and sodium lauryl sulfate.

Preferable examples of the aliphatic carboxylic acids or salts thereof include succinic acid, decanoic acid, undecanoic acid, undecenoic acid, lauric acid, hydrododecanoic acid, or salts thereof.

The amount of the anionic surfactant added depends on the types of the anionic surfactant and other compounding agents, but is preferably 10 to 5,000 mass ppm based on the mass of the solid content of the PTFE.

The lower limit of the amount of the anionic surfactant added is more preferably 50 mass ppm or more, still more preferably 100 mass ppm or more. Too small amount of the anionic surfactant may result in a poor viscosity adjusting effect.

The upper limit of the amount of the anionic surfactant added is more preferably 3,000 mass ppm or less, still more preferably 2,000 mass ppm or less. Too large an amount of the anionic surfactant may impair mechanical stability and storage stability of the aqueous dispersion.

For the purpose of adjusting the viscosity of the aqueous dispersion, components other than the anionic surfactants, such as methyl cellulose, alumina sol, polyvinyl alcohol, and carboxylated vinyl polymers may also be added.

For the purpose of adjusting the pH of the aqueous dispersion, a pH adjuster such as aqueous ammonia may also be added.

The aqueous dispersion may optionally contain other water soluble polymer compounds to an extent that does not impair the characteristics of the aqueous dispersion.

Examples of the other water soluble polymer compound include, but are not limited to, polyethylene oxide (dispersion stabilizer), polyethylene glycol (dispersion stabilizer), polyvinylpyrrolidone (dispersion stabilizer), phenol resin, urea resin, epoxy resin, melamine resin, polyester resin, polyether resin, silicone acrylic resin, silicone resin, silicone polyester resin, and polyurethane resin. The aqueous dispersion may further contain a preservative, such as isothiazolone-based, azole-based, pronopol, chlorothalonil, methylsulfonyltetrachloropyridine, carbendazim, fluorfolpet, sodium diacetate, and diiodomethylparatolylsulfone.

In the present disclosure, the PTFE aqueous dispersion used for coagulation stirring (hereinafter, also referred to as the PTFE dispersion for coagulation) preferably has a PTFE solid concentration of 10 to 25% by mass. The PTFE solid concentration is preferably 10 to 22% by mass, more preferably 10 to 20% by mass. In order to increase the bulk density of the PTFE fine powder, the concentration of the PTFE solid concentration in the PTFE aqueous dispersion for coagulation is preferably high. When the PTFE solid concentration in the PTFE aqueous dispersion for coagulation is high, the degree of association of the primary particles of PTFE increases, and the primary particles of PTFE are densely associated and coagulated to form granules. When the PTFE solid concentration of the PTFE aqueous dispersion for coagulation is less than 10% by mass, the coagulation density of the primary particles of PTFE tends to become sparse, and it is difficult to obtain the PTFE fine powder having a high bulk density. On the other hand, if the PTFE solid concentration in the PTFE aqueous dispersion for coagulation is too high, the uncoagulated PTFE increases and the uncoagulated PTFE solid concentration in the coagulated discharge water increases. When the uncoagulated PTFE solid concentration in the coagulated discharge water is high, the piping clogging and discharge water treatment are costly and time-consuming. In addition, the yield of PTFE fine powder decreases. The uncoagulated PTFE solid concentration in the coagulated discharge water is preferably low from the viewpoint of productivity of the PTFE fine powder, more preferably less than 0.4% by mass, still more preferably less than 0.3% by mass, and particularly preferably less than 0.2% by mass. When the PTFE solid concentration of the PTFE aqueous dispersion for coagulation exceeds 25% by mass, it is difficult to reduce the uncoagulated PTFE solid concentration of the coagulated discharge water to less than 0.4% by mass. Since the PTFE solid concentration in the PTFE aqueous dispersion obtained in the step I is about 10 to 45% by mass, when the concentration of the solid PTFE is high, a diluent such as water is added to adjust the concentration to 10 to 25% by mass. Further, when the PTFE solid concentration in the PTFE aqueous dispersion after polymerization is 10 to 25% by mass, the PTFE aqueous dispersion can be used as it is as the PTFE aqueous dispersion for coagulation.

A pigment-containing or filler-containing PTFE powder in which pigments and fillers are uniformly mixed can be obtained by adding pigments for coloring and various fillers for improving mechanical properties before or during the coagulation.

The wet powder obtained by coagulating the PTFE is usually dried by means of vacuum, high-frequency waves, hot air, or the like while keeping the wet powder in a state in which the wet powder is less fluidized, preferably in a stationary state. Friction between the powder particles especially at high temperature usually has unfavorable effects on the PTFE in the form of fine powder. This is because the particles made of such PTFE are easily formed into fibrils even with a small shearing force and lose its original, stable particulate structure. The drying is performed at a drying temperature of 10 to 300°C (preferably 10 to 250°C), preferably 100 to 300°C (preferably 100 to 250°C) .

The PTFE powder preferably has an average particle size (average secondary particle size) of 100 to 2,000 µm. The lower limit of the average secondary particle size is more preferably 200 µm or more, and still more preferably 300 µm or more. The upper limit of the average secondary particle size is preferably 1,000 µm or less, more preferably 800 µm or less, and particularly preferably 700 µm or less. The average particle size is a value measured in conformity with JIS K 6891.

The PTFE powder is preferable for molding, and suitable applications include hydraulic systems such as aircraft and automobiles, fuel system tubes and the like, flexible hoses for chemicals, steam and the like, and electric wire coating applications. The powder can also be used as a binder for batteries and as a dustproof material. It is also possible to produce a stretched body from the PTFE powder.

The PTFE of the present disclosure and the PTFE obtained by the production method of the present disclosure may be a PTFE powder.

Although the embodiments have been described above, it will be understood that various changes in form and details are possible without departing from the gist and scope of the claims.

### EXAMPLES

Next, embodiments of the present disclosure will be described with reference to examples, but the present disclosure is not intended to be limited by these examples.

The numerical values of the Examples were measured by the following methods.

### <Polymer solid concentration>

In an air dryer, 1 g of the PTFE aqueous dispersion was dried at 150°C for 60 minutes, and the ratio of the mass of the non-volatile matter to the mass of the aqueous dispersion (1 g) was expressed in percentage and taken as the solid concentration thereof.

### <Average primary particle size>

The average primary particle size was determined by preparing a PTFE aqueous dispersion adjusted to a polymer solid concentration of about 1.0% by mass, and using ELSZ-1000S (manufactured by Otsuka Electronics Co., Ltd.) at 25°C with 70 accumulations. The refractive index of the solvent (water) was 1.3328, and the viscosity of the solvent (water) was 0.8878 mPa·s.

### <Standard specific gravity (SSG) of PTFE powder>

A measurement sample was prepared compliant with ASTM D 4895-89, and the SSG was determined by the water replacement method compliant with ASTM D 792 using the measurement sample.

### <Heat instability index (TII) of PTFE powder>

The TII was determined in conformity with ASTM D 4895-89.

### <Color tone L* of PTFE>

Under the conditions of a pressure of 5307 N (8.27 MPa) and a holding time of 60 seconds, 4.0 g of PTFE powder was molded and the obtained compression-molded body was subjected to a heat-treatment in an electric furnace heated to 385°C for 10 minutes to obtain a disk-shaped PTFE molded body having an inner diameter of 28.6 mm and a thickness of about 4 mm.

The color tone L* of the obtained disk-shaped PTFE molded body was determined using a color difference meter ZE 6000 (manufactured by Nippon Denshoku Industries Co., Ltd.) in conformity with JIS Z 8781-4.

### <Aspect ratio>

The aspect ratio was determined by preparing a PTFE aqueous dispersion in which the polymer solid concentration was adjusted to about 1.0% by mass, observing the PTFE aqueous dispersion with a scanning electron microscope (SEM), performing image processing on 400 or more particles selected at random, and averaging the ratios of the major axis to the minor axis.

### <Cylindrical extrusion pressure>

Cylindrical extrusion pressure at a reduction ratio of 1600 was determined using an extruder compliant with ASTM D 4895. To 60 g of PTFE powder, 12.3 g (as an amount equivalent to 20.5 parts by weight with respect to 100 parts by weight of PTFE powder) of a lubricant (trade name: Isopar G (R), manufactured by ExxonMobil Corporation) was added and mixed for 3 minutes in a container at room temperature. Then, the container was left to stand at room temperature (25 ± 2°C) for at least 1 hour before extrusion. A mixture of PTFE powder and lubricant was paste extruded at room temperature (25 ± 2°C) through an orifice with a reduction ratio of 1600 (1600:1 reduction ratio (RR)) at a reduction ratio of 1600:1 (RR) to obtain a beading (extruded body). The extrusion speed, i.e. ram speed, was 20 mm/min. The value obtained by measuring the load when the extrusion load became balanced in the paste extrusion and dividing the measured load by the cross-sectional area of the cylinder used in the paste extrusion was taken as the cylindrical extrusion pressure.

### <Content of modifying monomer (modification amount)>

The modification amount was determined by FT-IR measurement.

The content of HFP was determined based on the infrared absorbance obtained by preparing a thin film disk by press molding the PTFE powder and carrying out FT-IR measurement of the thin film disk, in which the ratio of the absorbance at 982 cm⁻¹/the absorbance at 935 cm⁻¹ was multiplied by 0.3.

The content of PPVE was determined based on the infrared absorbance obtained by preparing a thin film disk by press molding the PTFE powder and carrying out FT-IR measurement of the thin film disk, in which the ratio of the absorbance at 995 cm⁻¹/the absorbance at 935 cm⁻¹ was multiplied by 0.14.

The content of n-butyl methacrylate was determined by calculation from the addition amount of n-butyl methacrylate used for polymerization.

### <0.1% weight loss temperature and 1.0% weight loss temperature of PTFE powder>

The 0.1% weight loss temperature and the 1.0% weight loss temperature were measured using TG/DTA (thermogravimetric - differential thermal analyzer) by precisely weighing about 10 mg of PTFE powder, which has no history of being heated to a temperature of 300°C or higher, and storing it in a dedicated aluminum pan.

The temperature corresponding to the point at which the weight of the sample was reduced by 0.1% by weight by heating the aluminum pan under the condition of 10°C/min in the temperature range from 25°C to 600°C in the air atmosphere was taken as the 0.1% weight loss temperature, and temperature corresponding to the point at which the weight of the sample was reduced by 1.0% by weight was taken as the 1.0% weight loss temperature.

### Example 1

To a reactor made of SUS with an internal volume of 6 L and equipped with a stirrer, 3,600 g of deionized water, and 180 g of paraffin wax were added. The reactor was sealed, and the reactor was purged with nitrogen, so that oxygen was removed. The reactor was heated up to 75°C, stirring was started, the pressure inside the reactor was reduced, and 0.054 g of n-butyl methacrylate was charged. 60 g of 0.01% by mass ammonium persulfate aqueous solution was charged. Fifteen minutes after charging the ammonium persulfate aqueous solution, 1.0 g of HFP was charged.

Next, the supply of TFE was started, the reactor internal pressure was increased to 1.96 MPaG, and 20 g of 0.32% by mass ammonium persulfate aqueous solution and 40 g of 9.73% by mass disuccinic acid peroxide aqueous solution were charged. TFE was continuously charged to the reactor so as to keep the reactor internal pressure constant at 1.96 MPaG, and polymerization was continued.

The charging of 1.45% by mass of sodium dodecylsulfate aqueous solution was started at the time point when 50 g of TFE was supplied, the charging was continued, and the charging was stopped at the time point when 120 g of TFE was supplied.

At the time point when 120 g of TFE was supplied, stirring was stopped and the reactor internal pressure was depressurized to atmospheric pressure.

After the pressure was released, charging of TFE was immediately resumed, the reactor internal pressure was increased to 1.96 MPaG, stirring was resumed, and the polymerization was continued.

Further, at the same time when the charging of TFE was resumed, the charging of 1.45% by mass of sodium dodecylsulfate aqueous solution was resumed, and the TFE was continuously fed until the time point when 1,080 g of TFE was supplied. The total charge of sodium dodecylsulfate aqueous solution was about 140 g.

At the time point when 1080 g of TFE was supplied, 0.25 g of methanol was charged.

At the time point when 1,310 g of TFE was supplied, stirring was stopped and the reactor internal pressure was depressurized to atmospheric pressure, and the reaction was terminated.

The reaction product was taken out from the reactor and cooled, and then the paraffin wax was separated from the reaction product to obtain a PTFE aqueous dispersion.

The resulting PTFE aqueous dispersion was diluted with deionized water to have a polymer solid concentration of 10% by mass and coagulated under a high-speed stirring condition, and separated from water to obtain a wet PTFE powder. The obtained wet PTFE powder was dried at 150°C for 18 hours to obtain a PTFE powder.

The physical properties of the obtained PTFE aqueous dispersion and PTFE powder are shown in Table 1.

An PTFE aqueous dispersion was weighed at about 5 g, 10 ml of methanol was added, the sample was flowed into a cylindrical filter paper, and Soxhlet extraction was carried out so that the total amount of methanol as an extraction solvent was 100 ml. The obtained extract was appropriately concentrated under nitrogen purge to obtain an extract. The resulting extract was subjected to LC/MS/MS measurements. The detection limit in the measurement was 0.5 mass ppb. All compounds represented by the following formulas were not detected.

F(CF₂)₇COOM,

F(CF₂)₅COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM, and

CF₂ClCF(CF₃)OCF₂CF(CF₃)OCF₂COOM,

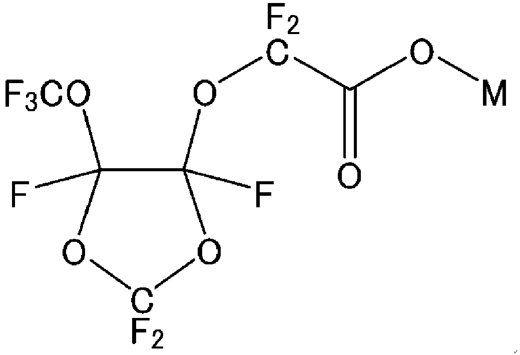

wherein M is H, a metal atom, NR⁷₄, imidazolium optionally having a substituent, pyridinium optionally having a substituent, or phosphonium optionally having a substituent.

### Example 2

The reaction was carried out to obtain a PTFE aqueous dispersion in the same manner as in Example 1 except that at the time point of 15 minutes after charging the ammonium persulfate aqueous solution, 0.91 g of PPVE was charged at the same time as charging 1.0 g of HFP, and instead of charging 0.25 g of methanol at the time point when 1,080 g of TFE was supplied, 0.5 g of HFP was charged at the time point when 1,100 g of TFE was supplied and 0.25 g of methanol was charged at the time point when 1,250 g of TFE was supplied. The resulting PTFE aqueous dispersion was coagulated and dried in the same manner as in Example 1 to obtain a PTFE powder.

The physical properties of the obtained PTFE aqueous dispersion and PTFE powder are shown in Table 1.

### Example 3

To a reactor made of SUS with an internal volume of 6 L and equipped with a stirrer, 3,520 g of deionized water, 180 g of paraffin wax, and 1.78 g of 1.0% by mass aqueous Pluronic 31R1 solution were added. The reactor was sealed, and the system was purged with nitrogen, so that oxygen was removed. The reactor was heated to 100°C and held for about 40 minutes. Thereafter, the temperature of the reactor was lowered to 85°C, 35.78 g of 0.05% by mass ammonium persulfate aqueous solution was added, the mixture was held for about 50 minutes, 0.94g of HFP was charged, and the pressure was increased to 2.65 MPa with TFE. 12.0 g of sodium dodecylsulfate, 0.05 g of iron (II) sulfate heptahydrate, and 0.01 g of 95% sulfuric acid were added to 287.94 g of deionized water and stirred to prepare a uniform aqueous surfactant solution A.

Into the reactor, 29.2 g of 2.0% by mass of disuccinic acid peroxide aqueous solution was charged. At the same time, 4.0% by mass of the surfactant aqueous solution A was started to be charged at a rate of 5 g/min. TFE was continuously charged to the reactor so as to keep the reactor pressure constant at 2.65 MPa. At the time point when 90 g of TFE was charged, stirring was stopped and the reaction pressure was reduced to atmospheric pressure, and immediately TFE was charged to 2.7 MPa and stirring was started again. At the time point when 910 g of TFE was charged, 2.0 g of HFP and 40.0 g of 1.0% by mass of methanol aqueous solution were charged.

At the time point when 1,018g of TFE was charged, stirring was stopped and the reactor was brought to atmospheric pressure. By the end of the reaction, 118.0 g of surfactant aqueous solution A was charged.

The aqueous dispersion was taken out from the reactor, and after cooling, the paraffin wax was separated to obtain a PTFE aqueous dispersion.

The resulting PTFE aqueous dispersion was coagulated and dried in the same manner as in Example 1 to obtain a PTFE powder.

The physical properties of the obtained PTFE aqueous dispersion and PTFE powder are shown in Table 1.

The physical properties of the obtained PTFE aqueous dispersion and PTFE powder are shown in Table 1.

### [Table 1]

**Table 1**

| | | Example 1 | Example 2 | Example 3 |
|---|---|---|---|---|
| Polymer solid concentration | % by mass | 25.2 | 25.1 | 216 |
| Average primary particle size | nm | 233 | 261 | 240 |
| Aspect ratio | | 1.43 | 1.31 | 1.55 |
| Core portion : shell portion | mass ratio | 82:18 | 84:16 | 89:11 |
| SSG | | 2.169 | 2.172 | 2.185 |
| TII | | 42 | 43 | 42 |
| Color tone L* | | 60.4 | 66.7 | 73.4 |
| RR 1600 extrusion pressure | MPa | 93 | 43 | 58 |
| Modifying monomer | | HFP | HFP | HFP |
| Modification amount | % by mass | 0.010 | 0.020 | 0.040 |
| Modifying monomer | | | PPVE | |
| Modification amount | % by mass | | 0.039 | |
| Modifying monomer | | n-butyl methacrylate | n-butyl methacrylate | |
| Modification amount | % by mass | 0.004 | 0.004 | |
| 0.1 % weight loss temperature | °C | 346 | 361 | 380 |
| 1.0% weight loss temperature | °C | 486 | 486 | 490 |

## Claims

1. A polytetrafluoroethylene having a color tone L* of 20 to 80, wherein a cylindrical extrusion pressure at a reduction ratio of 1,600 is 120 MPa or less.

2. A polytetrafluoroethylene comprising a hydrocarbon surfactant, wherein a cylindrical extrusion pressure at a reduction ratio of 1,600 is 120 MPa or less.

3. The polytetrafluoroethylene according to claim 1 or 2, which is substantially free from a fluorine-containing surfactant.

4. The polytetrafluoroethylene according to any one of claims 1 to 3, which is a powder.

5. The polytetrafluoroethylene according to any one of claims 1 to 4, having a thermal instability index (TII) of 10 or more.

6. The polytetrafluoroethylene according to any one of claims 1 to 5, comprising a tetrafluoroethylene unit and a modifying monomer unit, wherein a content of the modifying monomer unit is 0.00001 to 1.0% by mass based on total polymerization units constituting the polytetrafluoroethylene.

7. The polytetrafluoroethylene according to claim 6, wherein the modifying monomer unit is at least one polymerization unit selected from the group consisting of hexafluoropropylene, perfluoro(alkyl vinyl ether), and (perfluoroalkyl)ethylene.

8. The polytetrafluoroethylene according to any one of claims 1 to 7, comprising primary particles each having a core portion and a shell portion.

9. The polytetrafluoroethylene according to claim 8, wherein the core portion is formed from a polymer containing a tetrafluoroethylene unit and a modifying monomer unit.

10. The polytetrafluoroethylene according to claim 9, wherein a content of the modifying monomer unit in the polymer forming the core portion is 0.00001 to 1.0% by mass based on total polymerization units constituting the polymer forming the primary particles.

11. The polytetrafluoroethylene according to any one of claims 8 to 10, wherein the shell portion is formed from a polymer containing a tetrafluoroethylene unit and a modifying monomer unit.

12. The polytetrafluoroethylene according to any one of claims 8 to 10, wherein the shell portion is formed from a polymer containing only a tetrafluoroethylene unit.

13. The polytetrafluoroethylene according to any one of claims 8 to 12, wherein the shell portion is formed from a polymer obtained by polymerizing tetrafluoroethylene in the presence of a chain transfer agent.

14. The polytetrafluoroethylene according to any one of claims 8 to 13, wherein a mass ratio of the core portion to the shell portion (core portion : shell portion) is 60:40 to 95:5.

15. The polytetrafluoroethylene according to any one of claims 8 to 14, wherein the core portion comprises a core central portion and a core outer portion.

16. The polytetrafluoroethylene according to claim 15, wherein the core central portion is formed from a polymer containing a tetrafluoroethylene unit and a modifying monomer unit.

17. The polytetrafluoroethylene according to claim 15 or 16, wherein the core outer portion is formed from a polymer containing only a tetrafluoroethylene unit.

18. A method for producing a polytetrafluoroethylene, comprising:
polymerizing tetrafluoroethylene in an aqueous medium in the presence of a hydrocarbon surfactant to obtain a polytetrafluoroethylene,
wherein in the polymerization, the tetrafluoroethylene is continuously or intermittently supplied to a reactor, and at least one selected from the group consisting of a modifying monomer and a chain transfer agent is added to the reactor at a time point when more than 60% by mass of the tetrafluoroethylene based on a total amount of the tetrafluoroethylene used for polymerization is supplied.

19. The production method according to claim 18, wherein the polymerization is performed substantially in the absence of a fluorine-containing surfactant, excluding compounds having a functional group capable of reacting by radical polymerization and a hydrophilic group.

20. The production method according to claim 18 or 19, wherein in the polymerization, a modifying monomer is added to the reactor before the start of supply of the tetrafluoroethylene or at a time point when 5% by mass or less of the tetrafluoroethylene based on the total amount of the tetrafluoroethylene used for polymerization is supplied.

21. The production method according to any one of claims 18 to 20, wherein in the polymerization, the modifying monomer is added to the reactor before the start of supply of the tetrafluoroethylene or at a time point when 5% by mass or less of the tetrafluoroethylene based on the total amount of the tetrafluoroethylene used for polymerization is supplied, and the modifying monomer is removed from the reactor at a time point when more than 5% by mass and 70% by mass or less of the tetrafluoroethylene based on the total amount of the tetrafluoroethylene used for polymerization is supplied.

22. The production method according to claim 20 or 21, wherein an amount of the modifying monomer added is 0.00001 to 1.0% by mass based on a total amount of the polytetrafluoroethylene finally obtained.

23. The production method according to any one of claims 18 to 22, wherein in the polymerization, 0.6 × 10¹³ particles/mL or more primary particles of polytetrafluoroethylene are generated.

24. The production method according to any one of claims 18 to 23, wherein in the polymerization, the hydrocarbon surfactant is continuously added to the reactor.

25. The production method according to any one of claims 18 to 24, wherein the modifying monomer comprises at least one selected from the group consisting of hexafluoropropylene, perfluoro(alkyl vinyl ether), and (perfluoroalkyl)ethylene.
